(19) Europäisches Patentamt
European Patent Office
Office européen des brevets

(11) EP 3 320 011 B1

(12) # EUROPÄISCHE PATENTSCHRIFT

(45) Veröffentlichungstag und Bekanntmachung des Hinweises auf die Patenterteilung:
**25.09.2019 Patentblatt 2019/39**

(21) Anmeldenummer: **16745635.9**

(22) Anmeldetag: **08.07.2016**

(51) Int Cl.:
***C08G 18/48*** (2006.01) ***C08G 18/61*** (2006.01)
***C08G 18/76*** (2006.01) ***C08G 18/80*** (2006.01)
***C08G 18/10*** (2006.01) ***C08G 18/28*** (2006.01)
***C08G 18/32*** (2006.01) ***C08G 18/38*** (2006.01)
***C08G 18/42*** (2006.01)

(86) Internationale Anmeldenummer:
**PCT/EP2016/066360**

(87) Internationale Veröffentlichungsnummer:
**WO 2017/005924 (12.01.2017 Gazette 2017/02)**

(54) **URETHAN- UND HARNSTOFFGRUPPENHALTIGE REAKTIONSPRODUKTE**

POLYURETHANE-POLYUREA

POLYURÉTHANE-POLYURÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2015 EP 15175928**

(43) Veröffentlichungstag der Anmeldung:
**16.05.2018 Patentblatt 2018/20**

(73) Patentinhaber: **BYK-Chemie GmbH**
**46483 Wesel (DE)**

(72) Erfinder:
- **OKKEL, Andreas**
  **46483 Wesel (DE)**
- **PRITSCHINS, Wolfgang**
  **46487 Wesel (DE)**
- **BESSEL, Michael**
  **46483 Wesel (DE)**
- **GIEBELHAUS, Irina**
  **50765 Köln (DE)**
- **MEICHSNER, Marcus**
  **47475 Kamp-Lintfort (DE)**
- **ROCH, Monika**
  **46539 Dinslaken (DE)**

(74) Vertreter: **Altana IP Department**
**Altana Management Services GmbH**
**Abelstraße 45**
**46483 Wesel (DE)**

(56) Entgegenhaltungen:
**WO-A1-2012/175159 US-A- 4 093 759**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 320 011 B1

## Beschreibung

Die vorliegende Erfindung betrifft urethan- und harnstoffgruppenhaltige Reaktionsprodukte, ein Verfahren zu deren Herstellung, deren Verwendung als Netzmittel, Dispergiermittel, Dispersionsstabilisator und/oder Haftvermittler sowie Zusammensetzungen, welche diese enthalten.

Netzmittel, welche gelöst oder dispergiert in einer Flüssigkeit vorliegen, setzen die Oberflächenspannung bzw. die Grenzflächenspannung herab und vergrößern so das Netzvermögen der Flüssigkeit. Auf diese Weise ermöglichen Netzmittel in vielen Fällen erst überhaupt eine Oberflächenbenetzung.

Dispergiermittel eignen sich im Allgemeinen zur Stabilisierung von Feststoffteilchen in Bindemitteln, Lacken, Pigmentpasten, Kunststoffen und Kunststoffmischungen, Kleb- und Dichtstoffen, zur Reduktion der Viskosität entsprechender Systeme sowie zur Verbesserung der Fließeigenschaften. Dispersionsstabilisatoren werden zur Stabilisierung bereits erzeugter Dispersionen eingesetzt.

Um Feststoffe in flüssige Medien einbringen zu können, sind hohe mechanische Kräfte erforderlich. Es ist üblich, Dispergiermittel einzusetzen, um die Dispergierkräfte zu erniedrigen und um den zur Deflokkulierung der Feststoffteilchen notwendigen Gesamtenergieeintrag in das System und damit auch die Dispergierzeit so gering wie möglich zu halten. Im Falle derartiger Dispergiermittel handelt es sich um oberflächenaktive Stoffe, anionischer, kationischer und/oder neutraler Struktur. Diese Stoffe werden in kleiner Menge entweder direkt auf den Feststoff aufgebracht oder dem Dispergiermedium zugesetzt. Wesentlich ist weiterhin, dass auch nach vollständiger Deflokkulierung der Feststoffagglomerate in Primärteilchen (nach dem Dispergierprozess) Reagglomerationen auftreten kann, wodurch der Dispergieraufwand teilweise oder vollständig zunichte gemacht wird. Als Folge von unzulänglicher Dispergierung bzw. von Reagglomeration kommt es typischerweise zu unerwünschten Effekten, wie einem Viskositätsanstieg in flüssigen Systemen, einer Farbtondrift und einem Glanzverlust in Lacken und Beschichtungen sowie einer Verringerung der mechanischen Festigkeit und der Materialhomogenität in Kunststoffen.

Als Netz- und Dispergiermittel kommen in der Praxis verschiedenartige Verbindungstypen in Frage. Dies ist insbesondere darin begründet, dass eine hohe Zahl verschiedener Systeme existiert, welche insbesondere auf verschiedenartigen Bindemitteln kombiniert mit unterschiedlichen zu dispergierenden Partikeln, wie Pigmenten, Füllstoffen sowie Fasern, basiert.

Die WO-A-2012/175159 beschreibt beispielswiese die Herstellung von speziellen Additivkompositionen, welche als qualitativ hochwertige Netz- und Dispergiermittel anzusehen sind. Allerdings ist in diesen Additivkompositionen für viele Dispergieraufgaben, insbesondere aufgrund begrenzter Universalität gegenüber den zu dispergierenden Feststoffen, nicht die optimale und vollständige Lösung zu sehen.

Haftvermittler sind alle Komponenten, die zur Haftfestigkeit miteinander zu kombinierender Werkstoffe führen, wie beispielsweise Beschichtungen auf verschiedenen Untergründen wie Metall, Kunststoff, Holz und Glas. Ganz allgemein ist bekannt, dass es eine strukturelle Verwandtschaft zwischen Haftvermittlern und Netz- und Dispergiermitteln gibt, und zwar in der Form, dass Haftvermittler strukturell einem Netz- und Dispergiermitteln entsprechen können, welche nicht über sterisch stabilisierende Seitenketten verfügen.

Der vorliegenden Erfindung lag somit die Aufgabe zugrunde, qualitativ hochwertige sowie möglichst universell einsetzbare Produkte bereitzustellen, die als Netz- und/oder Dispergiermittel und/oder Dispersionsstabilisatoren und/oder als Haftvermittler geeignet sind. Insbesondere sollten hochwirksame Netzmittel für Ruße und organische Pigmente gefunden werden, welche eine Viskositätserniedrigung im Prozess der Anreibung, eine gleichbleibend niedrige Viskosität der Pigmentanreibung bei Lagerung und hervorragende coloristische Eigenschaften (Glanz, Transparenz, Farbtiefe) für pigmentierte Beschichtungen ermöglichen.

Die Aufgabe konnte gelöst werden durch die Bereitstellung von urethan- und harnstoffgruppenhaltigen Reaktionsprodukten, die mindestens eine Spezies der allgemeinen Formel (I)

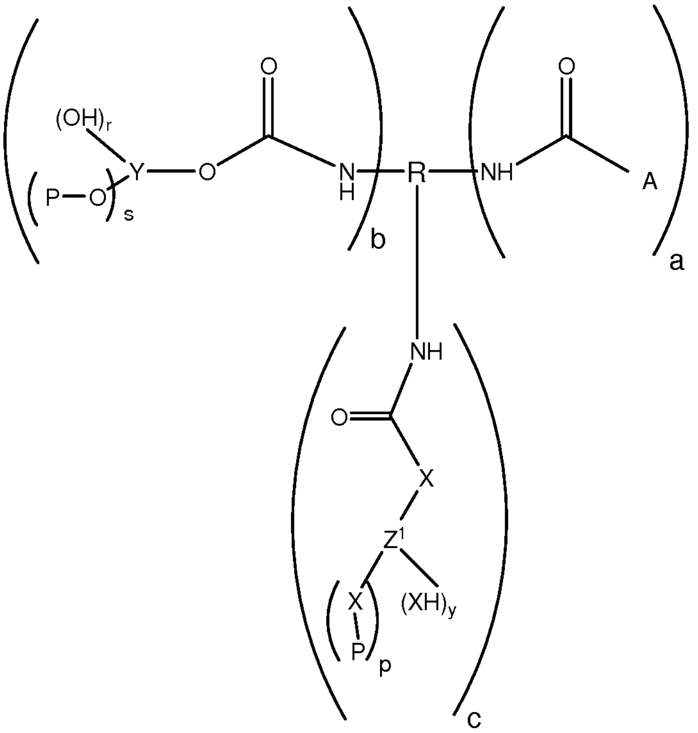

(I)

enthalten, wobei gilt a + b + c = x,

$$r + s = q - 1$$

$$p + y = w - 1$$

x für eine ganze Zahl von 2 bis 10 steht,
a für eine ganze Zahl von 1 bis 9 steht,
b für eine ganze Zahl von 1 bis 9 steht,
c für eine ganze Zahl von 0 bis 8 steht,
q für eine ganze Zahl von 1 bis 5 steht,
r für eine ganze Zahl von 0 bis 4 steht,
s für eine ganze Zahl von 0 bis 4 steht,
w für eine ganze Zahl von 1 bis 10 steht,
p für eine ganze Zahl von 0 bis 9 steht,
y für eine ganze Zahl von 0 bis 9 steht, und

R der organische Rest eines korrespondierenden Polyisocyanats $R(NCO)_x$ ist, R für einen verzweigten oder unverzweigten, gesättigten oder ungesättigten organischen Rest mit 1 bis 150 Kohlenstoffatomen steht und keine freien Isocyanatgruppen enthält,
der Rest oder die Reste Y unabhängig voneinander der/die organische/n Rest/e eines korrespondierenden Alkohols $Y(OH)_q$ ist/sind, wobei q für eine ganze Zahl von 1 bis 5 steht und Y für einen verzweigten oder unverzweigten, gesättigten oder ungesättigten organischen Rest mit 1 bis 1000 Kohlenstoffatomen steht,
die Gruppe oder die Gruppen X unabhängig voneinander für O, NH und/oder $NZ^2$ steht/stehen und die Gruppe oder die Gruppen XH unabhängig voneinander für eine Hydroxylgruppe OH, eine primäre Aminogruppe $NH_2$ und/oder eine sekundäre Aminogruppe $NHZ^2$ steht/stehen, wobei
der Rest oder die Reste $Z^2$ unabhängig voneinander für einen verzweigten oder unverzweigten, gesättigten oder ungesättigten organischen Rest $G(XH)_j(XP)_i$ steht/stehen, wobei gilt i + j = k,
k für eine ganze Zahl von 0 bis 9 steht,
j für eine ganze Zahl von 0 bis 9 steht,
i für eine ganze Zahl von 0 bis 9 steht, und

der Rest G für einen verzweigten oder unverzweigten, gesättigten oder ungesättigten organischen Rest steht, und der Rest oder die Reste A unabhängig voneinander für einen Rest der allgemeinen Formel (II)

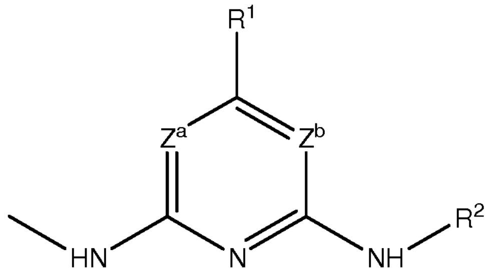

(II)

steht/stehen, wobei
der Rest $R^1$ für H oder $NH_2$ oder einen verzweigten oder unverzweigten, gesättigten oder ungesättigten organischen Rest mit 1 bis 25 Kohlenstoffatomen steht oder für den Fall, dass $Z^b$ gleich C und $R^2$ gleich -CH=N- ist, wobei das Stickstoffatom des Rests $R^2$ direkt an $Z^b$ unter Ausbildung eines 5-Ringes gebunden ist, steht $R^1$ für OH,
die Gruppe $Z^a$ für CH oder N oder $CR^3$ steht, wobei der Rest $R^3$ für einen verzweigten oder unverzweigten, gesättigten oder ungesättigten organischen Rest mit 1 bis 18 Kohlenstoffatomen steht,
die Gruppe $Z^b$ für CH oder N steht oder für den Fall, dass $R^1$ gleich OH ist, steht $Z^b$ für C,
der Rest $R^2$ für H steht oder für den Fall, dass $R^1$ gleich OH ist, steht $R^2$ für -CH=N-steht,
der Rest oder die Reste $Z^1$ unabhängig voneinander der organische Rest einer korrespondierenden Spezies der allgemein Formel (III)

$$(HX)_y\text{-}Z^1\text{-}(XH)_{p+1} \qquad \text{(III)}$$

ist/sind, wobei gilt y + (p+1) = w, und
w für eine ganze Zahl von 1 bis 10 steht,
p für eine ganze Zahl von 0 bis 9 steht,
y für eine ganze Zahl von 0 bis 9 steht, und

$Z^1$ für einen 1 bis 150 Kohlenstoffatome enthaltenden verzweigten oder unverzweigten, gesättigten oder ungesättigten organischen Rest steht,
der Rest oder die Reste P unabhängig voneinander für einen Rest der allgemeinen Formel (IVa)

$$\text{-(CO)-NH-R-}(Q)_{x-1} \qquad \text{(IVa)}$$

steht/stehen, wobei
der Rest oder die Reste Q unabhängig voneinander für einen Rest

-NH-(CO)-A

oder

$\text{-NH-(CO)-X-}Z^1(XH)_y(X\text{-}U)_p$

oder

$\text{-NH-(CO)-O-Y}(OH)_r(O\text{-}U)_s$

steht/stehen, wobei
der Rest oder die Reste U unabhängig voneinander für einen Rest der allgemeinen Formel (IVb)

$$\text{-(CO)-NH-R-}(V)_{x-1} \qquad \text{(IVb)}$$

steht/stehen, wobei

der Rest oder die Reste V unabhängig voneinander für einen Rest

-NH-(CO)-A

oder

$-NH-(CO)-X-Z^1(XH)_y$

oder

$-NH-(CO)-O-Y(OH)_r$

steht/stehen.

Vorzugsweise enthält das "urethan- und harnstoffgruppenhaltige Reaktionsprodukt" eine oder mehrere Spezies der allgemeinen Formel (I) als Hauptreaktionsprodukt(e), das heißt die Menge der Spezies der allgemeinen Formel (I) des urethan- und harnstoffgruppenhaltigen Reaktionsprodukts beträgt mindestens 40 Gew.-%, bevorzugter mindestens 60 Gew.-% und besonders bevorzugt mindestens 90 Gew.-%, bezogen auf das Gesamtgewicht des urethan- und harnstoffgruppenhaltigen Reaktionsprodukts. Ganz besonders bevorzugt besteht das urethan- und harnstoffgruppenhaltige Reaktionsprodukt im Wesentlichen aus einer oder mehrerer Spezies der allgemeinen Formel (I). Aufgrund der nur kommerziellen Reinheitsgrade der Reaktanten und/oder möglicherweise auftretender Nebenreaktionen bei der Herstellung der urethan- und harnstoffgruppenhaltigen Reaktionsprodukte, ist hierin unter "im Wesentlichen bestehend aus" ein Gehalt an Spezies der Formel (I) am Gesamtgewicht des urethan- und harnstoffgruppenhaltigen Reaktionsprodukts von mindestens 95 Gew.-% zu verstehen.

Der Begriff "Spezies" umfasst dabei sowohl Verbindungen mit konkretem Molekulargewicht als auch solche Spezies, die polymere Reste enthalten und somit ein gewichtsmittleres und ein zahlenmittleres Molekulargewicht aufweisen.

Bei den "urethan- und harnstoffgruppenhaltigen Reaktionsprodukten" kann es sich im einfachsten Fall um molekular einheitliche Produkte handeln, wenn ausschließlich molekular einheitliche, chemisch im Wesentlichen reine Verbindungen $Y-(OH)_q$, $R(NCO)_x$, $Z^1-(HX)_w$ sowie einer Spezies zur Einführung des Rests A zu deren Herstellung eingesetzt werden, in welchen folglich Y nicht polymer ist, alle Y identisch sind, alle R identisch sind, alle X identisch sind, alle A identisch sind und alle $Z^1$ identisch sind. Die einfachsten erfindungsgemäßen molekular einheitlichen Produkte enthaltend mindestens eine Spezies der allgemeinen Formel (I) ergeben sich für diesen Fall, wenn x den Wert 2 annimmt und folglich a und b jeweils den Wert 1 annehmen.

Bei den "urethan- und harnstoffhaltigen Reaktionsprodukten" kann es sich jedoch auch um molekular uneinheitliche Produkte handeln. Dies ist beispielsweise dann der Fall wenn der Rest Y polymerer Natur ist und somit *per se* eine molekulare Uneinheitlichkeit in die Produkte einführt.

Bei den "urethan- und harnstoffgruppenhaltigen Reaktionsprodukten" kann es sich schließlich auch um Mischungen handeln, wenn die "urethan- und harnstoffgruppenhaltigen Reaktionsprodukte" unterschiedliche Spezies der allgemeinen Formel (I) enthalten. Dies ist beispielsweise der Fall, wenn sich die Spezies in den Variablen a und/oder b und/oder c unterscheiden. Des Weiteren ist es beispielsweise auch möglich, dass die Reaktanden zur Herstellung der urethan- und harnstoffgruppenhaltigen Reaktionsprodukte unterschiedliche Reste Y und/oder R und/oder A und/oder $Z^1$ enthalten. Die Mischungen können Mischungen von chemisch einheitlicher urethan- und harnstoffgruppenhaltiger Reaktionsprodukte sein, die polymere Reste enthalten oder Mischungen eines oder mehrerer chemisch einheitlicher urethan- und harnstoffgruppenhaltiger Reaktionsprodukte mit einer oder mehreren urethan- und harnstoffgruppenhaltigen Reaktionsprodukten, die polymere Reste enthalten.

Im Sinne dieser Erfindung sind die Begriffe Hydroxylgruppe sowie primäre und sekundäre Aminogruppe im Sinne ihrer allgemeinen Bedeutung zu verstehen. Dies bedeutet insbesondere, dass sie als eigenständige funktionelle Gruppe vorliegen und nicht Teil einer übergeordneten weiteren funktionellen Gruppe sind. So ist im Sinne dieser Erfindung die OH-Funktionalität einer Carbonsäuregruppe keine Hydroxylfunktionalität.

**Spezies der allgemeinen Formel (I)**

Die erfindungsgemäßen urethan- und harnstoffgruppenhaltigen Reaktionsprodukte enthalten mindestens eine Spezies der allgemeinen Formel (I).

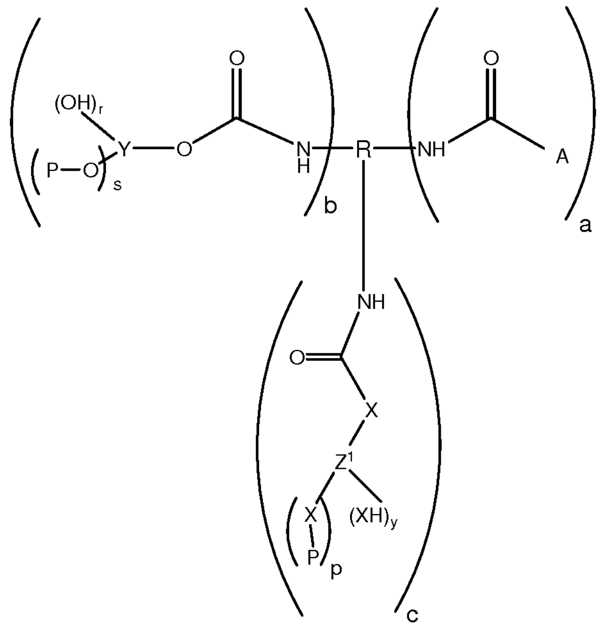

(I),

wobei alle Variablen der vorstehenden allgemeinen Formel (I) wie vorstehend definiert sind.

Dabei ist es erfindungswesentlich, dass die Spezies der allgemeinen Formel (I) mindestens einen Rest -NH-(CO)-A enthalten, wodurch die Spezies der allgemeinen Formel (I) mindestens eine Harnstoffgruppe aufweist, sowie mindestens einen Rest NH-(CO)-O-Y-$(OH)_r(PO)_s$ enthalten, durch den die Spezies der allgemeinen Formel (I) mindestens eine Urethangruppe aufweist. Zusätzlich kann die Spezies der allgemeinen Formel (I) einen oder mehrere Reste -NH-(CO)-X-$Z^1$-$(XP)_p(XH)_y$ aufweisen, wodurch in Abhängigkeit von der oder den Gruppen X weitere Urethan- und/oder Harnstoffgruppen in die Spezies der allgemeinen Formel (I) eingeführt werden.

Insgesamt ist die Summe a + b + c aller an R gebundenen Reste der Spezies der allgemeinen Formel (I) auf den Wert x beschränkt, wobei x für eine ganze Zahl von 2 bis 10 steht. Der Rest R ist der organische Rest eines korrespondierenden Polyisocyanats $R(NCO)_x$. Dies bedeutet, dass sich die Anzahl der an R gebundenen Reste aus der Anzahl der Isocyanatgruppen im korrespondierenden Polyisocyanat $R(NCO)_x$ ergibt. Es ist erfindungswesentlich, dass der Rest R keine freien Isocyanatgruppen enthält und es ist weiterhin erfindungswesentlich, dass alle x freien Isocyanatgruppen des Polyisocyanats $R(NCO)_x$ zu Urethan- und Harnstoffgruppen umgesetzt worden, so dass das urethan- und harnstoffgruppenhaltige Reaktionsprodukt bzw. die darin enthaltene Spezies der allgemeinen Formel (I) keine freien Isocyanatgruppen aufweist.

Der Begriff freie Isocyanatgruppe ist im Sinne seiner allgemeinen Bedeutung zu verstehen und beschreibt Isocyanatgruppen, die in freier Form vorliegen und zur direkten Reaktion mit Alkoholen und/oder primären und/oder sekundären Aminogruppen verwendet werden können. Dies bedeutet insbesondere, dass Uretdiongruppen und Isocyanuratgruppen oder sogenannte blockierte Isocyanatgruppen, keine freien Isocyanatgruppen darstellen.

Es ist bevorzugt, dass x in der allgemeinen Formel (I) für eine ganze Zahl von 2 bis 7, bevorzugter von 2 bis 5, besonders bevorzugt für 2 oder 3 steht. Ganz besonders bevorzugt steht x für den Wert 2.

Es ist weiterhin bevorzugt, dass a für eine ganze Zahl von 1 bis 6 steht, bevorzugter für eine ganze Zahl von 1 bis 4, besonders bevorzugt für 1 oder 2 steht.

Es ist weiterhin bevorzugt, dass b für eine ganze Zahl von 1 bis 6 steht, bevorzugter für eine ganze Zahl von 1 bis 4, besonders bevorzugt für 1 oder 2 steht.

Es ist besonders bevorzugt, dass x für eine ganze Zahl von 2 bis 7 steht, a für eine ganze Zahl von 1 bis 6 und b für eine ganze Zahl von 1 bis 6. Ganz besonders bevorzugt ist die Kombination, in der x den Wert 2 annimmt, a gleich 1 ist und b gleich 1 ist. Dies bedeutet, dass die Spezies der allgemeinen Formel (I) einen Rest -NH-(CO)-A und einen Rest -NH-(CO)-O-Y-$(OH)_r(PO)_s$ aufweist. In dieser besonders bevorzugten Ausführungsform, enthält die Spezies der allgemeinen Formel (I) keine Reste -NH-(CO)-X-$Z^1$-$(XP)_p(XH)_y$.

In allen anderen Fällen, bei denen x einen Wert größer 2 annimmt, kann die Spezies zusätzlich zu den erfindungswesentlichen Resten -NH-(CO)-A und -NH-(CO)-O-Y-$(OH)_r(PO)_s$ einen oder mehrere Reste -NH-(CO)-X-$Z^1$-$(XP)_p(XH)_y$ enthalten.

Prinzipiell können an Y und $Z^1$ gebundenen reaktiven Gruppen OH bzw. XH als Anknüpfungspunkte verwendet werden, um größere Strukturen durch Reaktionen mit weiteren Polyisocyanaten $R(NCO)_x$ aufzubauen. Die Variable p und s geben dabei die Anzahl der Gruppen OH bzw. XH an, die mit einer freien Isocyanatgruppen eines Polyisocyanats

$R(NCO)_x$ reagiert haben. Die strukturell einfachsten Strukturen der Spezies der allgemeinen Formel (I) entstehen für die Fälle, in denen die Variablen s und p den Wert 0 annehmen. Dieser Fall wird im Folgenden auch als eine Spezies der allgemeinen Formel (I) mit einer Struktur der 0. Generation bezeichnet.
Es ist bevorzugt, dass die Variable p für eine ganze Zahl von 0 bis 3 steht, bevorzugt für 0 oder 1 steht. Es ist weiterhin bevorzugt, dass s für eine ganze Zahl von 0 bis 3 steht, bevorzugt für 0 oder 1 steht.

Prinzipiell sind die an Y gebundenen OH-Gruppen und die an $Z^1$ gebundenen XH-Gruppen in der Lage Reaktionen mit einer freien Isocyanatgruppe eines weiteren Polyisocyanaten $R(NCO)_x$ unter Ausbildung von Urethan- und Harnstoffgruppen zu reagieren. Die verbleibenden freien Isocyanatgruppen des Polyisocyanats $R(NCO)_x$ können wiederum mit den weiteren Reaktanden der Reaktionsmischung reagieren. Somit dienen die an Y und/oder $Z^1$ gebundenen reaktiven Gruppen als Anknüpfungspunkte zum Aufbau größerer Strukturen. Dieser Fall wird als eine Struktur der 1. Generation bezeichnet. Spezies der allgemeinen Formel (I), die eine Struktur der 1. Generation aufweisen, können wiederum die zuvor beschriebenen Reaktionen eingehen, so dass es dann zur Ausbildung von Strukturen der 2. Generation kommt. Es ist erfindungswesentlich, dass die mindestens eine Spezies der allgemeinen Formel (I) im urethan- und harnstoffgruppenhaltigen Reaktionsprodukt maximal eine Struktur der 2. Generation aufweist.

Vorzugsweise besitzen die Spezies der allgemeinen Formel (I) ein zahlenmittleres Molekulargewicht im Bereich von 253 bis 250.000 g/mol, bevorzugter von 500 bis 200.000 g/mol, besonders bevorzugt von 800 bis 150.000 g/mol, ganz besonders bevorzugt von 1000 bis 100.000 g/mol.

**Polyisocyanat $R(NCO)_x$**

Der zum Polyisocyanat $R(NCO)_x$ korrespondierende Rest R steht für einen verzweigten oder unverzweigten, gesättigten oder ungesättigten organischen Rest mit 1 bis 150 Kohlenstoffatomen. Der organische Rest R kann zusätzlich Uretdion- und/oder Urethangruppen enthalten, die allerdings unter den gegebenen Bedingungen nicht zur Reaktion kommen. Bevorzugt liegt der organische Rest R in Form eines Kohlenwasserstoffrests vor, besonders bevorzugt als Arylengruppe, als Alkylarylengruppe und/oder als azyklische, zyklische, verzweigte oder unverzweigte Alkylengruppe.

Es ist erfindungswesentlich, dass der Rest R keine freien Isocyanatgruppen enthält. Bevorzugte Polyisocyanate $R(NCO)_x$ sind solche, bei denen x für eine ganze Zahl von 2 bis 7 steht. Weiterhin bevorzugt sind Polyisocyanate, bei denen x für eine ganze Zahl von 2 bis 5, besonders bevorzugt für 2 oder 3, steht. Ganz besonders bevorzugt sind Diisocyanat $R(NCO)_2$. Unter den Diisocyanaten ist es weiterhin bevorzugt, dass das Diisocyanat $R(NCO)_2$ zwei unterschiedlich reaktive Isocyanatgruppen aufweist. Bevorzugte Diisocyanate mit unterschiedlich reaktiven Gruppen sind Toluol-2,4-diisocyanat und Isophorondiisocyanat.

Polyisocyanate $R(NCO)_x$, bei denen x für eine ganze Zahl von 2 bis 10 steht, sind prinzipiell aus dem Stand der Technik bekannt. So werden in der EP 0154678 A1 entsprechende Polyisocyanate beschrieben, bei denen x einen Wert von größer als 2 annimmt.

Beispiele für solche Polyisocyanate sind solche, die durch Addition von Diisocyanaten an Polyole erhalten werden können. Diese sind beispielsweise unter dem Handelsnamen Desmodur L erhältlich. Weitere Polyisocyanate sind durch Biuretreaktion aus Diisocyanaten erhältlich. Diese sind beispielsweise unter dem Handelsnamen Desmodur N erhältlich. Des Weiteren kommen Polyisocyanate mit Isocyanurat Grundstruktur in Betracht, die durch Cyclisierung von Diisocyanaten erhalten werden. Entsprechende Produkte sind unter den Handelsnamen Desmodur HL, Desmodur IL, Polurene KC oder Polurene HR erhältlich. Des Weiteren können Toluylendiisocyanate-Isophorondiisocyanat-Isocyanurat oder trimeres Isophorondiisocyanat verwendet werden.

Wie bereits zuvor dargelegt, handelt es sich bei den oben genannten Polyisocyanaten um Handelsprodukte, die häufig nicht in reiner Form die Ihnen chemisch zugrundeliegende Formel aufweisen, sondern Mischungen von Polyisocyanaten mit ähnlicher Struktur darstellen.

Polyisocyanate $R(NCO)_x$, bei den x den Wert 2 annimmt, fallen im Sinne dieser Erfindung unter den Oberbegriff der Polyisocyanate, werden allerdings spezifischer auch als Diisocyanate bezeichnet.
Derartige Diisocyanate sind zum Beispiel 1,4-Diisocyanatobutan, Hexamethylendiisocyanat (HDI), 2-Methyl-1,5-diisocyanatopentan, 1,5-Diisocyanato-2,2-dimethylpentan, 2,2,4- oder 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (H12MDI), Toluylendiisocyanat (TDI), 1-Isocyanato-1-methyl-4(3)isocyanatomethylcyclohexan, Diphenylmethandiisocyanat (MDI), Bis-(isocyanatomethyl)-norbornan und 1,3- und 1,4-Bis-(2-isocyanato-prop-2-yl)-benzol (TMXDI) oder Mischungen solcher Diisocyanate. Die genannten monomeren Diisocyanate können als solche oder in Form ihrer Uretdion- und/oder Urethan-Gruppen aufweisenden oligomeren oder polymeren diisocyanatfunktionellen Derivate eingesetzt werden.

Beispiele für als Handelsprodukte erhältliche Diisocyanate sind Desmodur T100 (100%iges 2,4-TDI, Bayer AG), Desmodur T80 (80% 2,4-TDI, 20% 2,6-TDI, Bayer AG), Desmodur T65 (65% 2,4-TDI, 35% 2,6-TDI, Bayer AG), Desmodur N3400 ( Aliphatisches HDI-Uretdion, Bayer AG), Thanecure T9 (Aromatisches TDI-Uretdion, TSE Industries),

Crelan VP LS 2147 und Crelan VP LS 2347 (Aliphatische IDPI-Uretdione, Bayer AG). Zur Herstellung der erfindungsgemäßen urethan- und harnstoffgruppenhaltigen Reaktionsprodukte können ein oder mehrere monomere, oligomere oder polymere Diisocyanate verwendet werden.

**Alkohol Y-(OH)$_q$**

Der Rest oder die Reste Y der allgemeinen Formel (I) ist/sind unabhängig voneinander der oder die organische/n Rest/e eines korrespondierenden Alkohols Y-(OH)$_q$, wobei q für eine ganze Zahl von 1 bis 5 steht und Y für einen verzweigten oder unverzweigten, gesättigten oder ungesättigten organischen Rest mit 1 bis 1000 Kohlenstoffatomen steht.

Der organische Rest Y kann zusätzliche Heteroatome, wie O, S, Si und/oder N, aufweisen, bzw. Ether-, Urethan-, Carbonat-, Amid-, Harnstoff- und/oder Estergruppen enthalten. Die gegenüber Isocyanatgruppen äußerst reaktiven Hydroxylgruppen, primären Aminogruppen und sekundären Aminogruppen dürfen allerdings nicht in Y enthalten sein. Gegebenenfalls ist in den Gruppen Y Wasserstoff gegen Halogen (beispielsweise Fluor und/oder Chlor) substituiert. Der Rest Y kann weitere Gruppen, wie C=C-Doppelbindungen, tragen, die sich bei der Bildung des Additionsproduktes inert verhalten. Die gegebenenfalls vorhandenen Ester, Ether, Urethan, Carbonat und/oder Siloxan-Gruppen können in Blockstruktur vorliegen (beispielsweise Poly(ethylenoxidblock-propylenoxidblock-epsilon-caprolacton), einen Gradienten bilden oder auch statistisch angeordnet sein.

Vorzugsweise enthält Y mindestens einen Polyetherrest, Polyesterrest, Kohlenwasserstoffrest und/oder Polysiloxanrest.

Bevorzugt ist der Rest Y, der organische Rest eines Alkohols Y-(OH)$_q$ mit q von 1 bis 4, bevorzugter von 1 bis 3. Besonders bevorzugt ist der Rest Y der organische Rest eines Alkohols Y-(OH)$_q$, wobei q für 1 oder 2 steht. Ganz besonders bevorzugt ist Y der organische Rest eines Monoalkohols Y-OH mit q gleich 1.

Durch den Parameter q des Alkohols Y-(OH)$_q$ kann die Struktur der allgemeinen Formel (I) enthalten im erfindungsgemäßen urethan- und harnstoffgruppenhaltigen Reaktionsprodukt beeinflusst werden. Generell verbessern Alkohole Y-(OH)$_q$ mit q > 1 insbesondere das Antiabsetzverhalten, während Alkohole mit geringen q-Werten, insbesondere mit q gleiche 1, verstärkt zum Deflokkulationsverhalten beitragen.

Bei der Herstellung der urethan- und harnstoffgruppenhaltigen Reaktionsprodukte enthaltend mindestens eine Spezies der Spezies der allgemeinen Formel (I) können Mischungen verschiedener Alkohole Y-(OH)$_q$ eingesetzt werden, welche sich durch ihren q-Wert unterschieden. Werden entsprechende Mischungen verschiedener Alkohole Y-(OH)$_q$ mit unterschiedlichen q-Werten eingesetzt, so ist es bevorzugt, dass mindestens 40 %, weiter bevorzugt 50 % und besonders bevorzugt 60 % der Alkohole Y-(OH)$_q$ einen Wert für q gleich 1 aufweisen.

Y als **Etherrest bzw. Polyetherrest:**

Als Y-(OH)$_q$ können auch Mono-, Di-, oder Polyhydroxypolyether eingesetzt werden. Diese können zum Beispiel durch Alkoxylierung von hydroxyfunktionellen Startkomponenten T-(OH)$_q$, mit q = 1 bis 5, erhalten werden. Prinzipiell kommen alle beschriebenen Komponente Y-(OH)$_q$ als Startkomponente T-(OH)$_q$ in Frage. Zur Darstellung können beispielsweise Alkanole, Cycloalkanole oder Phenole mit Alkylenoxiden wie Ethylenoxid, Propylenoxid, Butylenoxid, Styroloxid, aliphatischen oder aromatischen Glycidethern wie Isopropylglycidether, Butylglycidether, Allyglycidether, 2-Ethylhexylglycidether, Kresylglycidether und Phenylglycidether umgesetzt werden. Es können auch Mischungen dieser Rohstoffe eingesetzt werden. Im Falle von gemischten Polyethern können diese statistisch, in Gradientenform oder in Blöcken angeordnet sein.

Diese Polyether haben vorzugsweise ein zahlenmittleres Molekulargewicht ($M_n$) im Bereich von etwa 100 bis 25000, bevorzugter von 150 bis 15000 und besonders typisch von 200 bis 10000 g/mol.

Bevorzugt sind Polyether auf Basis von Ethylenoxid, Propylenoxid und deren Mischungen.

Beispiele sind hydroxyfunktionelle Vinylverbindungen, wie Hydroxybutylvinylether, monohydroxyfunktionelle Polyoxyalkylenmonoalkohole, wie Allylpolyether (z.B. Polyglykol A 350, Polyglykol A 500, Polyglykol A 1100, Polyglykol A 11-4, Polyglykol A 20-10 oder Polyglykol A 20-20 der Clariant AG oder Pluriol® A 010 R, Pluriol® A 11 RE, Pluriol® A 13 R, Pluriol® A 22 R oder Pluriol® A 23 R der BASF AG), Vinylpolyether (wie Polyglykol V 500, Polyglykol V 1100 oder Polyglykol V 5500 der Clariant AG), Methanol gestartete Polyoxyethylenmonoalkohole (wie Pluriol® A 350 E, Pluriol® A 500 E, Pluriol® A 750 E, Pluriol® A 1020 E, Pluriol® A 2000 E oder Pluriol® A 5010 E der BASF AG), Alkanol gestartete Polyoxypropylenmonoalkohole (wie z.B. Polyglykol B01 / 20, Polyglykol B01 / 40, Polyglykol B01 / 80, Polyglykol B01 / 120 oder Polyglykol B01 / 240 der Clariant AG oder Pluriol® A 1350 P oder Pluriol® A 2000 P der BASF AG) und mit verschiedenen Fettalkoholen gestarteten Polyalkoxylate mit variablem Alkoxylierungsgrad (unter den Handelsnamen Lutensol® A, Lutensol® AT, Lutensol® AO, Lutensol® TO, Lutensol® XP, Lutensol® XL, Lutensol® AP und Lutensol® ON der BASF SE bekannt). Bevorzugt werden Polyoxyalkylenmonoalkohole verwendet, die Ethylenoxid- und/oder Propylenoxid- und/oder Butylenoxidgruppen enthalten und gegebenenfalls mit Styroloxid, Phenylgylcidylether

oder Kresylglycidylether modifiziert sind. Besonders bevorzugt ist die Verwendung von Polyoxyalkylenmonoalkoholen (wie Polyglykol B 11/50, Polyglykol B 11/70, Polyglykol B 11/100, Polyglykol B 11/150, Polyglykol B 11/300 oder Polyglykol B 11/700 von der Clariant AG, Pluriol® A 1000 PE, Pluriol® A 1320 PE, oder Pluriol® A 2000 PE der BASF AG oder Terralox WA 110 von DOW Chemicals), bei denen es sich um Butanol gestartete Polyoxyalkylene aus Ethylen- und Propylenoxid mit einer terminalen OH-Gruppe handelt.

In der Regel enthält Y 1 bis 450 Ethersauerstoffatome, welche bevorzugt in Ethersauerstoffatome aufweisenden Gruppen enthalten sind, die sich ableiten von Polytetrahydrofuran, Polyoxetanen und/oder Polyoxiranen.

Bevorzugt enthält Y 3 bis 400 Ethersauerstoffatome, wobei mindestens 50, bevorzugt mindestens 80 Mol-% der Ethersauerstoffatome in Ethylenoxid- und/oder Polypropylenoxid-Struktureinheiten vorliegen.

Y als **Kohlenwasserstoffrest:**

Die Kohlenwasserstoffreste liegen bevorzugt als Arylrest, als verzweigter oder unverzweigter Aralkylrest und/oder als acyclischer, cyclischer, verzweigter oder unverzweigter Alkylrest vor. Es können auch Gemische solcher Verbindungen, d.h. mindestens zwei verschiedene Verbindungen Y-$(OH)_q$ eingesetzt werden. Die aliphatischen oder araliphatischen Verbindungen Y-$(OH)_q$ können gradkettig oder verzweigt, gesättigt oder ungesättigt vorliegen. Gesättigte Spezies sind bevorzugt.

Beispiele für Y-$(OH)_q$ mit Kohlenwasserstoffresten im Fall, dass q gleich 1 ist, sind Methanol, Ethanol, Butanol, Ethylhexanol, Decanol, Isotridecylalkohol, Laurylalkohol, Stearylalkohol, Isobornylalkohol, Benzylalkohol, Propargylalkohol, Oleylalkohol, Linoleylalkohol, Oxoalkohole, Neopentylalkohol, Cyclohexanol, Fettalkohole, Alkylphenole, Alkylnaphthole, Phenylethanol.

Beispiele für Y(-$OH)_q$ mit Kohlenwasserstoffresten, für den Fall, dass q größer 1 ist, sind Butandiol, Hexandiol, Cyclohexandimethanol, Neopentylglykol, Ethylenglykol, Glycerin und Trimethylolpropan.

Weiterhin können Y-$(OH)_q$ Polyolefinpolyole oder -monoole, wie nichthydrierte, teilhydrierte und/oder vollständig hydrierte Polybutadiene, nichthydrierte, teilhydrierte und/oder vollständig hydrierte Polyisoprene, Polyisobutylene, Polypropylene oder Ethylen/Butylen-Copolymere sein. Diese Verbindungen sind bekannt. So wird beispielsweise der Zugang zu hydroxyfunktionellem Polyisobutylenen in US 6875897 beschrieben.

Y als **Esterrest bzw. Polyesterrest:**

Als Y-$(OH)_q$ können auch Monohydroxymonoester und Mono-, Di-, oder Polyhydroxypolyester eingesetzt werden.

Hydroxyfunktionelle Acrylate oder Methacrylate, wie Hydroxyethylacrylat, Hydroxyethylmethacrylat, Hydroxybutyl(meth)acrylat sind Beispiele für geeignete Monohydroxymonoester.

Polyester können z.B. durch Umsetzung von Dicarbonsäuren sowie deren veresterbaren Derivaten, wie Anhydriden, Säurechloriden oder Dialkylestern (wie Dimethylestern oder Diethylestern) durch Umsetzung mit Diolen und mono-, di- oder trifunktionellen Startkomponenten, hergestellt werden. Die Bildung von Dihydroxypolyestern kann bei Bedarf durch Einsatz entsprechend stöchiometrischer Mengen an Monohydroxyverbindungen zurückgedrängt werden. Die Veresterung kann in Substanz oder auch durch azeotrope Veresterung in Anwesenheit eines Schleppmittels durchgeführt werden. Beispiele für Dicarbonsäuren sind Bernsteinsäure, Maleinsäure, Fumarsäure, Glutarsäure, Adipinsäure, Sebacinsäure, Pimelinsäure, Phthalsäure oder dimerisierte Fettsäuren und deren Isomere sowie Hydrierungsprodukte. Beispiele für entsprechende Diole sind: Ethylenglykol, 1,2-Propandiol, 1,3-Propandiol, 1,4-Butandiol, 1,6-Hexandiol, Neopentylglykol, cis-1,2-Cyclohexandimethanol, trans-1,2-Cyclohexandimethanol, sowie Polyglykole auf Basis von Ethylenglykol und/ oder Propylenglykol.

Bevorzugte Polyester für den Einsatz als Y-$(OH)_q$ sind solche, die durch Polykondensation einer oder mehrerer, gegebenenfalls alkylsubstituierter, Hydroxycarbonsäuren und/oder Ringöffnungspolymerisation der korrespondierenden Lactone, wie Propiolacton, Valerolacton, Butyrolacton, Caprolacton und/ oder substituierten Lactonen mittels einer Mono-, Di- oder Trihydroxy-Startkomponente (wie in US-A-4 647 647 beschrieben) erhalten werden können. Bevorzugt besitzen diese ein zahlenmittleres Molekulargewicht $M_n$ von 150 bis 5000 g/mol. Als Startkomponente T-$(OH)_q$ sind im Prinzip auch alle als Y-$(OH)_q$ aufgeführten Verbindungen einsetzbar. Es können auch jeweils Gemische der vorgenannten Verbindungen eingesetzt werden. Die Lactonpolymerisation wird nach bekannten Verfahren, initiiert durch beispielsweise Titanate, p-Toluolsulfonsäure oder Dibutylzinndilaurat, bei Temperaturen von etwa 70° C bis 180°C durchgeführt. Besonders bevorzugt sind Polyester auf epsilon-Caprolacton-Basis, gegebenenfalls in Kombination mit delta-Valerolacton.

Y als **Urethanrest bzw. Polyurethanrest:**

Als Y-$(OH)_q$ können auch Polyurethane, Polyether- Polyurethane, Polyester-Polyurethane und/oder Polyether-Polyester-Polyurethane eingesetzt werden, die durch Additionsreaktion von Diisocyanaten, mit Dihydroxyverbindungen

in Anwesenheit von mono-, di- oder trifunktionellen Startkomponenten erhalten werden können. Als Hydroxyverbindungen zum Aufbau der urethangruppenhaltigen Verbindungen Y-$(OH)_q$ werden bevorzugt Diole mit 2 bis 12 Kohlenstoffatomen, Polyoxyalkylenglykole und dihydroxyfunktionelle Polyester eingesetzt.

Y als **Polycarbonatrest:**

Der Rest Y kann auch Carbonatgruppen enthalten, wie diese durch bekannte Umsetzungen mit offenkettigen und/oder cyclischen Carbonaten erhalten werden. Geeignet sind zum Beispiel mit Carbonaten modifizierte lineare Polyester oder Polycarbonatdiole, wie diese in der Polyurethanherstellung verwendet werden. Beispiele sind beschrieben in der US-4 101 529. Geeignete Carbonate sind z.B. aliphatische, cycloaliphatische, araliphatische und/oder aromatische Kohlensäurester, wie Dialkylcarbonate, z.B. Dimethylcarbonat, Diethylcarbonat oder Diphenylcarbonat, Catecholcarbonat oder cyclische Alkylencarbonate. Besonders geeignet sind cyclische Alkylencarbonate mit 5 oder 6-gliedrigen Ringen, die gegebenenfalls substituiert sein können. Als Substituenten sind aliphatische, cycloaliphatische und/oder aromatische Gruppen mit bis zu 30 Kohlenstoffatomen bevorzugt. Beispiele für geeignete cyclische Alkylencarbonate sind Ethylencarbonat, Propylencarbonat, Glycerincarbonat, Trimethylencarbonat, 4-Methyltrimethylencarbonat, 5-Methyltrimethylencarbonat, 5,5-Dimethyltrimethylencarbonat, 5,5-Diethyltrimethylencarbonat oder 5-Methyl-5-propyltrimethylencarbonat.

Y als **Polyoxazolinrest:**

Als Y-$(OH)_q$ können auch hydroxyfunktionelle Poly-2-alkyl-2-oxazoline oder Poly-2-alkyl-2-oxazine fungieren. Bevorzugt werden monohydroxyfunktionelle Verbindungen eingesetzt. Poly-2-alkyl-2-oxazoline oder Poly-2-alkyl-2-oxazine werden durch kationische, ringöffnende Polymerisation von 2-Alkyl-2-oxazolinen oder 2-alkyl-2-oxazinen mit Initiatoren, wie Para-Toluolsulfonsäure, Methyltosylat oder Methyltriflat, erhalten. Die durch den lebenden kationischen Polymerisationsmechanismus resultierenden Oxazolinium- oder Oxaziniumendgruppen können durch alkalische Hydrolyse über Aminoesterendgruppen in die stabileren Hydroxyamide überführt werden. Ein alternativer Weg zur Herstellung von monohydroxyfunktionellen Poly-2-alkyl-2-oxazolinen oder Poly-2-alkyl-2-oxazinen ist die Polymerisation mit 2-(4-hydroxyphenyl)-N-methyl-2-oxazolinium trifluormethansulfonat als initiierender Spezies. (A. Groß, G. Maier, O. Nuyken, Macromol. Chem. Phys. 197, 2811-2826 (1996)). Durch Wahl des Alkylsubstituenten lässt sich die Verträglichkeit steuern, so ist beispielsweise Poly-2-ethyl-2-oxazolin durch seine Wasserlöslichkeit für hochpolare Systeme geeignet, während beispielsweise Poly-2-lauryl-2-oxazolin in unpolaren Systemen verträglich ist. Werden Blockcopolymere aus 2-Ethyl-2-oxazolin und 2-Lauryl-2-oxazolin gebildet, so zeichnen sich die Polymere durch eine besonders breite Verträglichkeit aus. Solche Poly-2-alkyl-2-oxazoline oder Poly-2-alkyl-2-oxazine besitzen meist ein zahlenmittleres Molekulargewicht $M_n$ von 300 bis 20000 g/mol, bevorzugt von 500 bis 10000 g/mol. Einsetzbar sind unter anderem verschiedenartige 2-Oxazoline, welche eventuell zusätzliche funktionelle Gruppen aufweisen können. Derartige Spezies sind beispielsweise entsprechende fettsäurebasierte 2-Oxazoline.

Y als **OH-funktionelles Polymer ethylenisch ungesättigter Verbindungen:**

Als Y-$(OH)_q$ können auch OH-funktionelle Polymere von ethylenisch ungesättigten Monomeren eingesetzt werden. Die OH-Funktionen können über hydroxyfunktionelle ethylenisch ungesättigte Monomere, über hydroxyfunktionelle Initiatoren oder hydroxyfunktionelle Kettenregler in bekannter Weise eingeführt werden, zum Beispiel bei der radikalischen Polymerisation. Besonders hohe Selektivitäten in Bezug auf die Hydroxyfunktionalität lassen sich durch kontrollierte, beziehungsweise lebende Polymerisationsverfahren erzielen wie zum Beispiel ATRP, NMP, RAFT oder anionische Polymerisation. Bevorzugt sind monohydroxyfunktionelle Polyacrylsäureester bzw. Polymethacrylsäureester. Solche Verbindungen sind auf diesem Gebiet der Technik bereits zur Herstellung von anderen Dispergiermitteln verwendet worden, wie sie in der US-A-4 032 698 bzw. in der EP 318 999 beschrieben sind. Beispielsweise sind monohydroxyfunktionelle Polyacrylatmakromere wie Actflow UMM 1001 der Firma Soken Chemical & Engineering Co. erhältlich. Diese Polyacrylate haben meist ein zahlenmittleres Molekulargewicht $M_n$ von 300 bis 20000 g/mol, bevorzugt meist von 500 bis 10000 g/mol. Diese können in Blockstruktur oder auch statistisch angeordnet sein oder einen Gradienten bilden.

Beispiele für OH-funktionelle ethylenisch ungesättigte Monomere sind Hydroxyalkyl(meth)acrylate von geradkettigen, verzweigten oder cycloaliphatischen Diolen mit 2 bis 36 C-Atomen, wie 3-Hydroxypropylmethacrylat, 3,4-Dihydroxybutylmonomethacrylat, 2-Hydroxyethyl(meth)acrylat, 4-Hydroxybutyl(meth)acrylat, 2-Hydroxypropylmethacrylat, 2,5-Dimethyl-1,6-hexandiolmonomethacrylat; Caprolacton- und/oder Valerolacton-modifizierte Hydroxyalkyl(meth)acrylate (wobei die Hydroxy(meth)acrylate bevorzugt von geradkettigen, verzweigten oder cycloaliphatischen Diolen mit 2 bis 8 C-Atomen abgeleitet sind); OH-funktionelles Poly(ethylenglycol)(meth)acrylat und OH-funktionelles Poly(propylenglycol)(meth)acrylat.

Beispiele für weitere ethylenisch ungesättigte Monomere sind Alkyl(meth)acrylate von geradkettigen, verzweigten oder cycloaliphatischen Alkoholen mit 1 bis 22 C-Atomen, wie Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Cyclohexyl(meth)acrylat, Isobornyl(meth)acrylat und t-Butyl(meth)acrylat; Aralkyl(meth)acrylate, wie Benzylmethacrylat und Aryl(meth)acrylate wie Phenylacrylat (wobei die Arylreste jeweils unsubstituiert oder bis zu vierfach substituiert sein können), wie 4-Nitrophenylmethacrylat; Mono(meth)acrylate von Ethern, Polyethylenglykolen, Polypropylenglycolen oder gemischten Polyethylen/propylenglycolen mit 5 bis 80 C-Atomen, wie Tetrahydrofurfurylmethacrylat, Methoxyethoxyethylmethacrylat, 1-Butoxypropylmethacrylat, Cyclohexyloxymethylmethacrylat, Methoxymethoxyethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat, Poly(propylenglycol)methylether(meth)acrylat; tertiäre Aminoalkyl(meth)acrylate, wie N,N-Dimethylaminoethyl(meth)acrylat, 2-Trimethylammoniumethylmethacrylatchlorid und N,N-Dimethylaminopropyl(meth)acrylat; (Meth)acrylate von halogenierten Alkoholen, wie Perfluoralkyl(meth)acrylate mit 6 bis 20 C-Atomen; Styrol und substituierte Styrole, wie 4-Methylstyrol, Methacrylnitril und Acrylnitril; ethylenisch ungesättigte Heterocyclen, wie zum Beispiel 4-Vinylpyridin und 1-[2-(Methacryloyloxy)-ethyl]-2-imidazolidinon; Vinylester von Carbonsäuren mit 1 bis 20 C-Atomen, wie Vinylacetat; Maleinimid, N-Phenylmaleinimid und N-substituierte Maleinimide mit gradkettigen, verzweigten oder cycloaliphatischen Alkylgruppen mit 1 bis 22 C-Atomen, wie N-Ethylmaleinimid und N-Octylmaleinimid; (Meth)acrylamid; N-Alkyl- und N,N-Dialkylsubstituierte Acrylamide mit gradkettigen, verzweigten oder cycloaliphatischen Alkylgruppen mit 1 bis 22 C-Atomen, wie N-(t-Butyl)acrylamid und N,N-Dimethylacrylamid;

Bevorzugte nicht OH-funktionelle Monomere sind Alkyl(meth)acrylate, Aryl(meth)acrylate, Aralkyl(meth)acrylate und Styrol.

Y als **Polysiloxanrest:**

Als Y-$(OH)_q$ können auch mono oder polyhydroxyfunktionelle Polysiloxane eingesetzt werden.

Die Polysiloxane lassen vorzugsweise sich mit der nachstehenden allgemeinen Formel beschreiben:

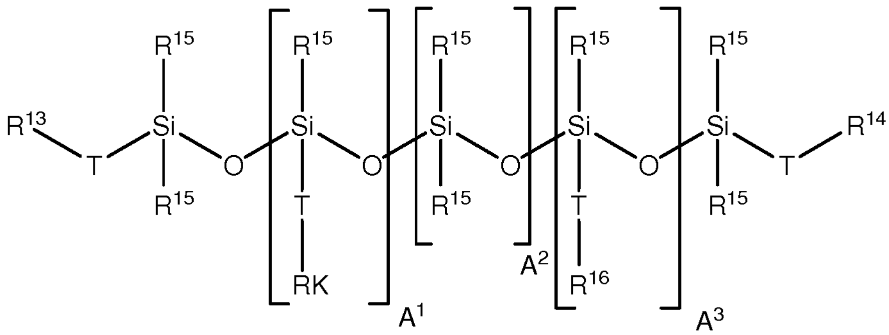

mit

T = $C_1$-$C_{14}$-Alkylen,
RK = unverzweigter Polyetherrest aus Alkylenoxid-Einheiten mit 1-6 Kohlenstoffatomen, und/oder aliphatischer und/oder cycloaliphatischer und/oder aromatischer Polyesterrest mit einem gewichtsmittleren Molekulargewicht zwischen 200 und 4000 g/mol,
$R^{13}$ und $R^{14}$ jeweils unabhängig repräsentiert durch
$C_1$-$C_{14}$-Alkyl, -Aryl oder -Aralkyl, -O($C_1$-$C_{14}$-Alkyl, -Aryl oder -Aralkyl), -OCO($C_1$-$C_{14}$-Alkyl, -Aryl oder -Aralkyl), -O-CO-O($C_1$-$C_{14}$-Alkyl, -Aryl oder -Aralkyl), -$OSO_2$($C_1$-$C_{14}$-Alkyl, -Aryl oder -Aralkyl), -H, -Cl, -F, -OH, -R, -RK,
$R^{15}$ = $C_1$-$C_{14}$-Alkyl, -Aryl oder -Aralkyl,
$R^{16}$ = polyhydroxyfunktioneller verzweigter Polyglycidol-Polyetherrest, der aus einer verzweigten Polyglycidolgruppe besteht oder diese enthält,
$A^1$ = 0 - 20, bevorzugt 1 - 15, besonders bevorzugt 1 - 8,
$A^2$ = 2 - 300, bevorzugt 10 - 200, besonders bevorzugt 15 - 100 und
$A^3$ = 0 - 20, bevorzugt 1 - 15, besonders bevorzugt 1 - 8,

wobei bei $A^3$ = 0 gilt, dass $R^{14}$ = $R^{16}$ und/oder $R^{13}$ = $R^{16}$. Wenn die Einheit -[$SiR^{15}$(Z-$R^{16}$)]-O- vorhanden ist, d. h. $A^3$ mindestens 1 ist, so ist es möglich, dass $R^{13}$ und $R^{14}$ verschieden von $R^{16}$ sind.

Die Polysiloxanreste können auch als organomodifizierte Polysiloxanreste vorliegen.

**Der Rest A der allgemeinen Formel (II)**

Es ist erfindungswesentlich, dass das urethan- und harnstoffgruppenhaltige Reaktionsprodukt enthaltend mindestens eine Spezies der allgemeinen Formel (I) in dieser mindestens einen Rest A enthält. Der Rest oder die Reste A in der allgemeinen Formel (I) steht/stehen unabhängig voneinander für einen Rest der allgemeinen Formel (II)

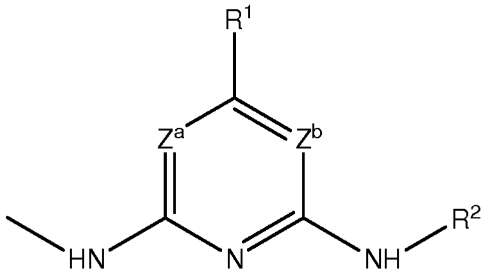

(II).

Der Rest $R^1$ steht für H oder $NH_2$ oder einen verzweigten oder unverzweigten, gesättigten oder ungesättigten organischen Rest mit 1 bis 25 Kohlenstoffatomen oder für den Fall, dass $Z^b$ gleich C und $R^2$ gleich -CH=N- ist, wobei das Stickstoffatom des Rests $R^2$ direkt an $Z^b$ unter Ausbildung eines 5-Ringes gebunden ist, steht der Rest $R^1$ für OH.

Bevorzugt steht $R^1$ für H oder einen verzweigten oder unverzweigten, gesättigten oder ungesättigten organischen Rest mit 1 bis 25, bevorzugter 1 bis 18, besonders bevorzugt 1 bis 10, ganz besonders bevorzugt für 1 bis 6 Kohlenstoffatomen. Besonders bevorzugt steht der Rest $R^1$ für H oder für einen $C_1$- bis $C_6$-Alkylrest oder für einen Phenylrest. Für den Fall, dass $R^1$ für OH steht, bedeutet dies, dass damit auch die entsprechend tautomere Grenzstrukturformel abgedeckt ist.

Die Gruppe $Z^a$ steht für CH oder N oder $CR^3$, wobei der Rest $R^3$ für einen verzweigten oder unverzweigten, gesättigten oder ungesättigten organischen Rest mit 1 bis 18, bevorzugter 1 bis 10, besonders bevorzugt 1 bis 6 Kohlenstoffatomen steht. Bevorzugt steht die Gruppe $Z^a$ für CH oder N, besonders bevorzugt für N.

Die Gruppe $Z^b$ steht für CH oder N oder für den Fall, dass $R^1$ gleich OH ist, steht $Z^b$ für C. Bevorzugt steht die Gruppe $Z^b$ für CH oder N, besonders bevorzugt für N.

Es ist besonders bevorzugt, dass sowohl $Z^a$ als auch $Z^b$ für N stehen, so dass die Komponente A als Grundstruktur ein 1,3,5-Triazin umfasst.

Der Rest $R^2$ steht für H oder für den Fall, dass $R^1$ gleich OH ist, steht $R^2$ für -CH=N-. Bevorzugt steht $R^2$ für H.

Der Rest A der allgemeinen Formel (II) ist der korrespondierende Rest eines entsprechenden primären Amins der allgemeinen Formel (IIa)

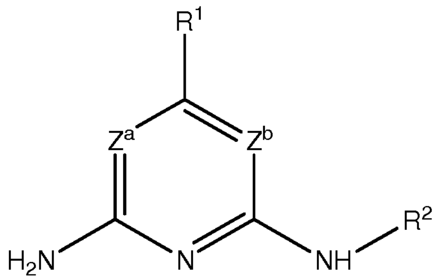

(IIa),

wobei $R^1$, $Z^a$, $Z^b$ und $R^2$ wie für die allgemeine Formel (II) definiert sind. Durch Reaktion einer freien Isocyanatgruppe eines Polyisocyanats $R(NCO)_x$ mit einer primären Aminogruppe des primären Amins der allgemeinen Formel (IIa) können die Reste A der allgemeinen Formel (II) unter Ausbildung einer Harnstoffgruppe in die Spezies der allgemeinen Formel (I) eingeführt werden.

Primäre Amine der allgemeinen Formel (IIa) sind dadurch gekennzeichnet, dass diese in der Formeldarstellung zwei Aminogruppen aufweisen, wobei mindestens eine dieser Aminogruppen eine primäre Aminogruppe ist. Die zweite Aminogruppe kann eine primäre oder sekundäre Aminogruppe sein. Im Falle einer primären Aminogruppe ist es bevorzugt, dass die beiden primären Aminogruppen sich in ihrer Reaktivität gegenüber freien Isocyanatgruppen unterscheiden. Im Falle einer sekundären Aminogruppe ist die unterschiedliche Reaktivität automatisch gegeben, da primäre Aminogruppen wesentlich schneller reagieren als sekundäre Aminogruppen. Die bevorzugte unterschiedliche Reaktivität der beiden Aminogruppen bewirkt, dass lediglich eine der Aminogruppen mit einer freien Isocyanatgruppe eines Polyisocyanats reagiert. Es ist bevorzugt, dass das primäre Amin der allgemeinen Formel (IIa) zwei primäre Aminogruppen aufweist, die unterschiedliche Reaktivitäten gegenüber freien Isocyanatgruppen besitzen.

Beispiele für Komponente der allgemeinen Formel (IIa) sind 2,4-Diamino-1,3,5-Triazine, 2,6-Diaminopyridine, 2,4,6-Triamino-1,3,5-Triazin (Melamin) sowie 2-Amino-1,9-dihydropurin-6-on (Guanin).

Bevorzugt werden als Komponenten der allgemeinen Formel (IIa) 2,4-Diamino-1,3,5-Triazine eingesetzt, wobei insbesondere 2,4-Diamino-6-phenyl-1,3,5-triazine (Benzoguanamin (BGA)) sowie 2,4-Diamino-6-methyl-1,3,5-triazine (Acetoguanamin (AGA)) bevorzugt sind.

**Die Komponente $(HX)_y$-$Z^1$-$(XH)_{p+1}$**

Die mindestens eine im erfindungsgemäßen urethan- und harnstoffgruppenhaltigen Reaktionsprodukt enthaltene Spezies der allgemeinen Formel (I), kann einen Rest oder mehrere Reste $Z^1$ enthalten.

Die Komponente $(HX)_y$ - $Z^1$ - $(XH)_{p+1}$ der allgemeinen Formel (III) wird vorzugsweise dazu verwendet eventuell noch vorhandene freie Isocyanatgruppen zur Reaktion zu bringen, so dass die Spezies der allgemeinen Formel (I) keine freien Isocyanatgruppen mehr enthält. Die Komponente $(HX)_y$-$Z^1$-$(XH)_{p+1}$ der allgemeinen Formel (III) kann allerdings auch gezielt in die Spezies der allgemeinen Formel (I) eingebracht werden. Dies kann beispielsweise dazu dienen eine zusätzliche pigment-affine Gruppe in die Spezies der allgemeinen Formel (I) einzubringen. Zusätzlich kann die Komponente $(HX)_y$ - $Z^1$ - $(XH)_{p+1}$ der allgemeinen Formel (III) die Rolle einer Verzweigungseinheit oder eines Kettenstoppers annehmen, in Abhängigkeit von der Anzahl der reaktiven Gruppen XH, die an $Z^1$ gebunden sind. Somit lässt sich über diese Komponente die Struktur der Spezies der allgemeinen Formel (I) steuern und die Dichte an Haftgruppen einstellen, die je nach Anwendung gewünscht sind, wie beispielsweise die Flokkulation und/oder die Haftung beeinflussende Eigenschaften.

Der Rest oder die Reste $Z^1$ der allgemeinen Formel (I) ist/sind unabhängig voneinander der oder die organische/n Rest/e einer korrespondierenden Spezies der allgemeinen Formel (III)

$$(HX)_y\text{-}Z^1\text{-}(XH)_{p+1} \qquad \text{(III)},$$

wobei gilt y + (p+1) = w, und
w für eine ganze Zahl von 1 bis 10 steht,
p für eine ganze Zahl von 0 bis 9 steht,
y für eine ganze Zahl von 0 bis 9 steht.

Die Gruppe oder die Gruppen X steht/stehen unabhängig voneinander für O, NH und/oder $NZ^2$ und die Gruppe oder die Gruppen XH steht/stehen unabhängig voneinander für eine Hydroxylgruppe OH, eine primäre Aminogruppe $NH_2$ und/oder eine sekundäre Aminogruppe $NHZ^2$.

Der Rest oder die Reste $Z^2$ steht/stehen unabhängig voneinander für einen verzweigten oder unverzweigten, gesättigten oder ungesättigten organischen Rest $G(XH)_j(XP)_i$, wobei gilt i + j = k,
k für eine ganze Zahl von 0 bis 9 steht,
j für eine ganze Zahl von 0 bis 9 steht,
i für eine ganze Zahl von 0 bis 9 steht, und
G für einen verzweigten oder unverzweigten, gesättigten oder ungesättigten organischen Rest steht, welcher bevorzugt 1 bis 100 Kohlenstoffatome, bevorzugter 1 bis 60 Kohlenstoffatome, besonders bevorzugt 1 bis 30 und ganz besonders bevorzugt 1 bis 18 Kohlenstoffatome enthält und P wie für die allgemeine Formel (IVa) definiert ist.

Der organische Rest G weist keine gegenüber Isocyanatgruppen reaktive Gruppen HX auf. Der organische Rest G kann jedoch gegebenenfalls auch Heteroatome, insbesondere Sauerstoff und/oder Stickstoffatome, enthalten. Diese liegen bevorzugt in Form von Ethersauerstoffatomen und/oder tertiären Aminogruppen vor.

$Z^1$ steht für einen 1 bis 150 Kohlenstoffatome enthaltenden verzweigten oder unverzweigten, gesättigten oder ungesättigten organischen Rest, der frei von XH-Gruppen ist. Bevorzugt enthält der organische Rest $Z^1$ zwischen 1 und 80 Kohlenstoffatome, bevorzugter zwischen 1 und 40 Kohlenstoffatome und besonders bevorzugt 1 bis 20 Kohlenstoffatome.

Der organische Rest $Z^1$ weist keine gegenüber Isocyanatgruppen reaktiven Gruppen HX auf. Der organische Rest G kann jedoch gegebenenfalls auch Heteroatome, insbesondere Sauerstoff und/oder Stickstoffatome, enthalten. Diese liegen bevorzugt in Form von Ethersauerstoffatomen und/oder tertiären Aminogruppen und/oder Amidgruppen vor. Bevorzugt enthält der organische Rest $Z^1$ mindestens eine tertiäre Aminogruppe. Ganz besonders bevorzugt, enthält der organische Rest $Z^1$ mindestens eine tertiäre Aminogruppe und mindestens eine Amidgruppe.

Bevorzugte Komponenten $(HX)_y$-$Z^1$-$(XH)_{p+1}$, bei denen $Z^1$ mindestens eine tertiäre Aminogruppe aufweist, sind nachfolgend beispielhaft aufgeführt:

Beispiele für käuflich erhältliche Komponenten $(HX)_y$-$Z^1$-$(XH)_{p+1}$ sind Aminoalkohole mit tertiären Aminogruppen und in Summe 2 bis 10 OH-, $NH_2$- und/oder $NHZ^2$-Gruppen wie beispielsweise Trialkanolamine wie Triethanolamin, Triisopropanolamin, N-Alkyl-Dialkanolamine wie N-Methyldiethanolamin, N-Butyldiethanolamin, N-Methyldiisopropanolamin, Bis(2-hydroxyethyl)dodecylamin, Bis(2-hydroxyethyl)octadecylamin, N-Alkyl-Aminoalkyl-Hydroxyalkylamine wie Aminopropy-Imethylethanolamin, N,N-Dialkyl-Dihydroxyalkylamine wie 3-(Diethylamino)propan-1,2-diol, Tetrakis(hydroxyalkyl)alkylendiamine wie Tetrakis(2-hydroxypropyl)ethylenediamin, Dialkylaminoalkyl-Dialkanolamine wie Dimethylaminopropyldipropanolamine, N-(3-dimethylaminopropyl)-N,N-diisopropanolamin, N-Aryl-Dialkanolamine wie N,N-Di(2-hydroxyethyl)anilin, N,N-Dihydroxyethyl-p-toluidin, N,N-Bis(2-hydroxypropyl)-p-toluidin, N-Alkanolpiperazine wie N-(2'-Hydroxyethyl)piperazin und Hexaalkylol-2,4,6-Triamino-1,3,5-triazole wie Hexamethylol-2,4,6-Triamino-1,3,5-triazin und 1,3,5-Tris(2-hydroxyethyl)-1,3,5-triazin-2,4,6-trion.

Ebenfalls geeignet sind Polyamine mit mindestens einer tertiären Aminogruppe und 2 bis 10 primären und/oder sekundären Aminogruppen wie beispielsweise Trisaminoalkylaminen wie Tris(2-Aminoethyl)amin, Tris(2-Aminopropyl)amin, Tris(3-Aminopropyl)amin, N-Alkyl-Diaminoalkylaminen wie N,N-Bis(3-aminopropyl)methylamin, N,N-Dimethyl-Dialkylentriaminen wie N,N-Dimethyldipropylenetriamin, heterocyclische Amine wie 1,4-Bis(3-aminopropyl)piperazin und Polyethyleniminen mit 2 bis 10 primären und/oder sekundären Aminogruppen.

Eine weitere Gruppe von Verbindungen $(HX)_y$-$Z^1$-$(XH)_{p+1}$ lässt sich durch Modifikation von Aminoalkoholen, Aminen und Polyaminen, die primäre oder sekundäre Aminogruppen enthalten, mit einer **Modifizierungskomponente MZ,** die Epoxid- und/oder Acrylsäureestergruppen trägt, erhalten.

Durch Epoxidaddition oder Michaeladdition von Acrylestern können primäre Amine in sekundäre und sekundäre Amine in tertiäre umgewandelt werden. Bei der Reaktion einer Epoxidgruppe mit einer primären oder sekundären Aminogruppe entsteht auch immer eine OH-Gruppe. Durch Addition von hydroxyfunktionellen Acrylsäureestern lassen sich ebenfalls zusätzliche OH-Gruppen erhalten. Durch Addition von Di- oder polyfunktionellen Epoxiden oder Acrylaten können Verbindungen mit mehreren funktionellen Gruppen erhalten werden.

Beispielsweise durch Addition von hydroxyfunktionellen Acrylaten wie z.B. Hydroxyethylacrylat oder Epoxiden wie z.B. 2-Ethylhexylglycidylether an Aminoalkohole mit sekundären Aminogruppen wie z.B. N-(2-Hydroxyethyl)anilin lassen sich Verbindungen mit einer tertiären Aminogruppe und zwei Hydroxygruppen erhalten, wie in folgendem Schema 1 beispielhaft dargestellt wird:

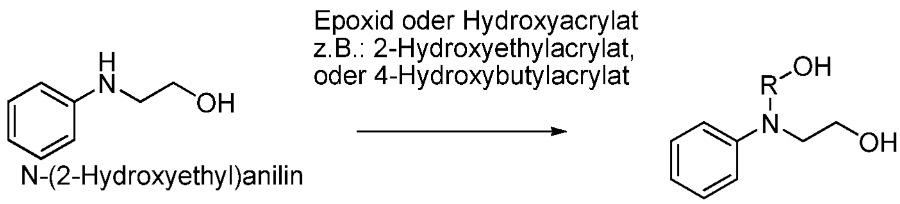

N-(2-Hydroxyethyl)anilin

Schema 1

Bei Aminoalkoholen oder anderen Aminen mit primären Aminogruppen können diese durch Umsetzung mit 2 mol der Modifizierungskomponente MZ in tertiäre Amine umgewandelt werden, wie in folgendem Schema 2 beispielhaft dargestellt wird:

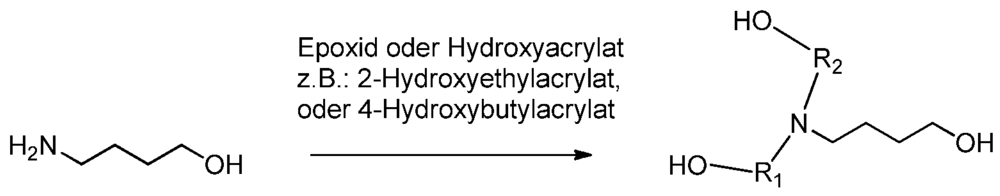


R1 = R2 oder R1 ≠ R2

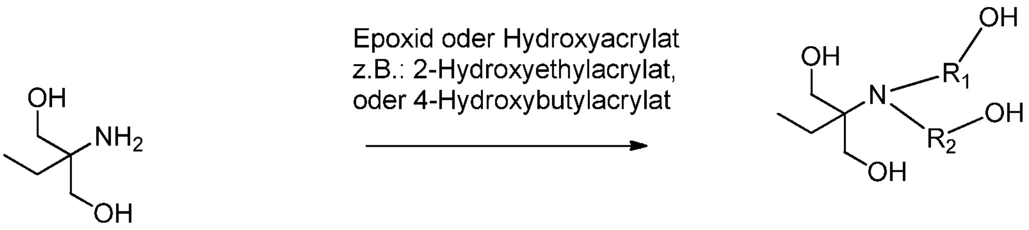


R1 = R2 oder R1 ≠ R2

Schema 2

Ein Formelbeispiel für die Addition von polyfunktionellen Epoxiden ist in Schema 3 wiedergegeben:

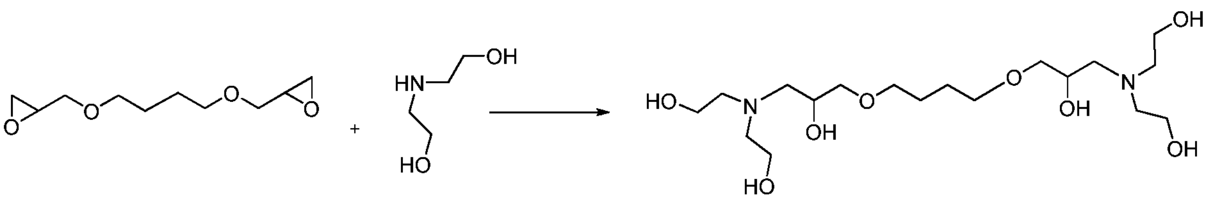

Schema 3

Die vorgenannten Umsetzungen mit Epoxiden oder Hydroxyacrylaten erfolgen zweckmäßig in einem Temperaturbereich von 20 bis 140 °C, bevorzugt bei maximal 120 °C und besonders bevorzugt bei maximal 100 °C.

Bei der Umsetzung mit den Epoxiden entsteht eine sekundäre Hydroxylgruppe und am reaktionsbeteiligten Stickstoffatom eine sekundäre oder tertiäre Aminogruppe.

Beispiele für Amine, die sich zur Umsetzung mit der Komponente MZ eignen sind beispielsweise aliphatische und araliphatische Amine mit mindestens einer primären oder sekundären Aminogruppe wie Butylamin, Ethylhexylamin, Benzylamin, Oleylamin, Dibutylamin, Xylylendiamin, 1,4.Bis(4-aminophenoxy)benzol; aliphatische und araliphatische Aminalkohole mit mindestens einer primären oder sekundären Aminogruppe wie Ethanolamin, Butanolamin, Diethanolamin, 2-Amino-2-methyl-1-propanol, 2-Amino-1-butanol, 2-Amino-2-methyl-1,3-propanediol, 2-Amino-2-ethyl-1,3-propanediol, 1-Amino-2,3-propanediol, 2-Amino-1,3-propanediol, Tris(hydroxymethyl)aminomethan; und aliphatische und araliphatische Diamine mit einer tertiären Aminogruppe und einer primären oder sekundären Aminogruppe wie 2-(Diethylamino)ethylamin, 3-(Dimethylamino)propylamin, 3-(Diethylamino)propylamin, N,N-Diethyl-1,4-butandiamin, 1-Diethylamino-4-aminopentan, N-(3-Aminopropyl)imidazol, N-(3-Aminopropyl)morpholin, N-(2-Aminoethyl)piperidin, 2-Picolylamin, 1-Methylpiperazin, Aminoethylpiperazin.

Beispiele für als Komponente MZ geeignete polyfunktionelle Acrylate sind:
Di-, tri-, tetrafunktionelle Polyester-, Polyether-, Polyether/ester-, Urethan oder Epoxiacrylate, Mono, Di-, Tri- oder Polyalkylenglykoldiacrylate wie z. B. Mono, Di-, Tri- oder Polyethylenglykoldiacrylat, Mono, Di-, Tri- oder Polypropylenglykoldiacrylat, Butandioldiacrylat, 1,6-Hexandioldiacrylat, Trimethylolpropantriacrylat, Neopentylglycolpropylenoxydiacrylat, Tricyclodecandioldiacrylat, Glycerindiacrylat, Glycerintriacrylat, Trimethylolpropantriacrylat, Di(trimethylolpropan)tetraacrylat, Pentaerythrittriacrylat, Dipentaerythritpentaacrylat.

Beispiele für polyfunktionelle Epoxide sind: Mono, Di-, Tri- oder Polyalkylenglykolglykoldiglycidether wie z. B: Mono, Di-, Tri- oder Polyethylenglykoldiglycidether, Propandioldiglycidether, Di-, Tri- oder Polypropylenglykoldiglycidether, 1,4-Butandioldiglycidether, 1,6-Hexandioldiglycidether, Cyclohexandimethanoldiglycidether, Neopentylglykoldiglycidether, Glycerintriglycidether, Di-, Tri- oder Polyglycerintriglycidether, Trimethylolpropantriglycidether, Pentaerythrittetraglycidether, Dipentaerythrittepentaglycidether. Bisphenol-A-basierte Diglycidylether, Epoxyphenol-Novolak, und Epoxycresol-Novolak.

Beispiele für monofunktionelle Acrylate sind Alkylacrylate, wie zum Beispiel Methylacrylat, Ethylacrylat, n-Propylacrylat, i-Propylacrylat, n-Butylacrylat, i-Butylacrylat, t-Butylacrylat, 2-Ethylhexylacrylat, Cyclohexylacrylat und Laurylacrylat; Monoacrylate von kurzkettigen Ethern, wie Tetrahydrofurfurylacrylat, Methoxyethoxyethylacrylat, 1-Butoxypropylacrylat, Cyclohexyloxymethylacrylat, Methoxymethoxyethylacrylat, Benzyloxymethylacrylat, Furfurylacrylat, 2-Butoxyethylacrylat, 2-Ethoxyethylacrylat, Allyloxymethylacrylat, 1-Ethoxybutylacrylat, 1-Ethoxyethylacrylat und Ethoxymethylacrylat.

Geeignete hydroxyfunktionelle Acrylate sind zum Beispiel 2-Hydroxyethylacrylat, 2-Hydroxypropylacrylat, 2-Hydroxybutylacrylat, 2-(2-Hydroxyethoxy)ethylacrylat, 2-Hydroxy-3-[3-(trimethoxysilyl)propoxy]propylacrylat, 2-Hydroxy-3-phenoxypropyl-acrylat, Polyethylenglykol-acrylate wie zum Beispiel die von NOF unter dem Handelsnamen BLEMMER® vertriebenen Typen AE-90, AE-200 und AE-400, Polypropylenglykol-acrylate wie zum Beispiel die von NOF unter dem Handelsnamen BLEMMER® vertriebenen Typen AP-150, AP-400 und AP-550 und Lactonmodifizierte Hydroxyethyl-acrylate wie zum Beispiel die von der DAICEL Corporation unter dem Handelsnamen Placcel vertriebenen FA-Typen.

Geeignete monofunktionelle Epoxide sind zum Beispiel aliphatische, cycloaliphatische und/oder aromatische Glycidylether wie beispielsweise $C_1$-$C_{20}$- Alkylglycidylether, Phenylglycidether, Kresylglycidylether, Naphthylglycidylether, Butylglycidether, p-tert.-Butyl-phenylglycidether, 2-Ethyl-Hexylglycidether, $C_{12}$-$C_{14}$-Glycidether, Allylglycidylether, 2,3-Epoxypropylneodecanoat (Cardura® E 10, Resolution Performance Products).

Bevorzugte Spezies $(HX)_y$-$Z^1$-$(XH)_{p+1}$ der allgemeinen Formel (III), bei denen $Z^1$ mindestens eine tertiäre Aminogruppe und eine Amidgruppe aufweist, sind nachfolgend beispielhaft aufgeführt. Entsprechende Spezies, bei denen $Z^1$ sowohl eine tertiäre Aminogruppe als auch eine Amidgruppe aufweist, sind im Allgemeinen nicht kommerziell erhältlich. Sie werden vorzugsweise durch Umsetzung einer oder mehrerer Komponenten D mit einer oder mehrerer Komponenten B und/oder C erhalten.

Die **Komponente D** wird unabhängig voneinander gewählt aus der Gruppe ethylenisch ungesättigter Carbonsäuren, deren Estern und deren Säurehalogeniden, wobei mindestens eine C=C-Doppelbindung und mindestens eine C=O-Doppelbindung konjugiert vorliegen und die C=O-Doppelbindung gewählt wird aus der Gruppe der Carbonsäuren, der Carbonsäureester und Carbonsäurehalogenide.

Vorzugsweise werden als Komponente D ethylenisch ungesättigte Carbonsäureester eingesetzt.

Beispiele für ethylenisch ungesättigte Esterverbindungen, bei denen die C=C-Doppelbindung und die C=O-Doppelbindung der Estergruppe konjugiert sind, sind Alkylacrylate, wie zum Beispiel Methylacrylat, Ethylacrylat, n-Propylacrylat, i-Propylacrylat, n-Butylacrylat, i-Butylacrylat, t-Butylacrylat, 2-Ethylhexylacrylat, Cyclohexylacrylat und Laurylacrylat; Monoacrylate von kurzkettigen Ethern, wie Tetrahydrofurfurylacrylat, Methoxyethoxyethylacrylat, 1-Butoxypropylacrylat, Cyclohexyloxymethylacrylat, Methoxymethoxyethylacrylat, Benzyloxymethylacrylat, Furfurylacrylat, 2-Butoxyethylacrylat, 2-Ethoxyethylacrylat, Allyloxymethylacrylat, 1-Ethoxybutylacrylat, 1-Ethoxyethylacrylat, Ethoxymethylacrylat; Maleinsäurediester, wie Dimethylmaleinat, Diethylmaleinat und Dibutylmaleinat; Fumarsäurediester, wie Dimethylfumarat, Diethylfumarat und Dibutylfumarat; Itakonsäureester, wie Itakonsäuredimethylester und Itakonsäurediethylester.

Bevorzugt wird die Komponente D ausgewählt aus den Acrylsäurestern, besonders bevorzugt aus den kurzkettigen Alkylacrylaten mit einer $C_1$- bis $C_6$-Alkylkette. Ganz besonders bevorzugt sind Methylacrylat und Ethylacrylat.

Die **Komponente B** liegt gemäß der allgemeinen Formel (VI) vor

$$(R^3)_x\text{-HN-}(R^4)_z \qquad \text{(VI)},$$

wobei gilt x + z = 2 und

x für eine ganze Zahl von 0 bis 2 steht,
z für eine ganze Zahl von 0 bis 2 steht, und

$R^3$ unabhängig voneinander für H oder einen verzweigten oder unverzweigten, gesättigten oder ungesättigten organischen Rest mit 1 bis 12 Kohlenstoffatomen steht, und

$R^4$ unabhängig voneinander für einen verzweigten oder unverzweigten, gesättigten oder ungesättigten organischen Rest mit 2 bis 12 Kohlenstoffatomen und 1 bis 3 tertiären Aminogruppen steht, der gegebenenfalls noch 1 bis 3 primäre und/oder sekundäre Aminogruppen aufweisen kann.

Liegen mehrere Komponenten B vor, so werden diese unabhängig voneinander durch die obige Formel wiedergegeben.

Beispiele für die Komponente B, bei denen x den Wert 2 annimmt, sind Butylamin, Hexylamin, Dibutylamin, Diethylamin, Dipropylamin, Benzylamin, N-Benzylmethylamin und N-Phenylbenzylamin.

Beispiele für die Komponente B, bei denen x den Wert 1 annimmt, sind N,N-Dimethylaminoethylamin, N,N-Dimethylaminopropylamin, N,N-Diethylaminoethylamin, N,N-Diethylaminopropylamin, Tris[2-(methylamino)ethyl]amin, N,N-Dimethyldipropylenetriamin, N,N-Bis(3-aminopropyl)methylamin, Tris(3-aminopropyl)amin, Tris(2-aminoethyl)amin, 2-(2-Methylaminoethyl)pyridin, 2-Aminomethylpyridin, 4-Aminomethylpyridin,1-(3-Aminopropyl)imidazol und N,N,N'-Trimethylendiamin.

Ein Beispiel für die Komponente B, bei dem x den Wert 0 annimmt, ist Bis(3-dimethylaminopropyl)amin.

Die **Komponente C** liegt gemäß der allgemeinen Formel (VII) vor

$$(R^5)_k\text{-HN-}(R^6)_n \qquad \text{(VII)},$$

wobei gilt k + n = 2 und

k für eine ganze Zahl von 0 bis 1 steht,
n für eine ganze Zahl von 1 bis 2 steht, und

$R^5$ für H oder einen verzweigten oder unverzweigten, gesättigten oder ungesättigten organischen Rest mit 1 bis 12 Kohlenstoffatomen steht, und

$R^6$ unabhängig voneinander für einen verzweigten oder unverzweigten, gesättigten oder ungesättigten organischen Rest mit 2 bis 12 Kohlenstoffatomen und 1 bis 4 Hydroxylgruppen steht, der gegebenenfalls eine tertiäre Aminogruppe enthält.

Liegen mehrere Komponenten **C** vor, so werden diese unabhängig voneinander durch die obige Formel wiedergegeben.

Beispiele für die Komponente C, bei denen k den Wert 0 annimmt, sind Diethanolamin, Diisopropanolamin, Dipropanolamin, N-(2'-Hydroxyethyl)piperazin, 3-((2-Hydroxyethyl)amino)-1-propanol.
Beispiele für die Komponente C, bei denen k den Wert 1 annimmt, sind Ethanolamin, Propanolamin, 4-Amino-1-butanol, 3-Amino-1-butanol, 1-Aminopropan-2-ol, 5-Amino-1-pentanol, N-(2-Hydroxyethyl)-N-methyl-1,3-propylenediamin, 2-Amino-2-ethyl-1,3-propandiol, N-Methylethanolamin, N-Ethylethanolamin, N-Butylethanolamin, N-(2-Hydroxyethyl)anilin, 1,1,1-Tris(hydroxymethyl)-methanamin, Aminopropyldiethanolamin, Glucosamin und 2-(2-Aminoethoxy)ethanol.

Vorzugsweise erfolgt die Herstellung der Spezies der allgemeinen Formel (III), bei denen der Rest $Z^1$ mindestens einer tertiäre Aminogruppe und eine Amidgruppe aufweist, in zwei Schritten.

Der erste Schritt ist dabei die Addition einer primären oder sekundären Aminogruppe einer Komponente B und/oder C an die C=C-Doppelbindung einer Komponente D im Rahmen einer Michaeladditionsreaktion. Das entsprechende Produkt ist ein Michaeladditionsprodukt und wird im Folgenden als Intermediat I bezeichnet. Diese Umsetzungen erfolgen vorzugsweise in einem Temperaturbereich von 0 bis 100 °C, bevorzugter von 10 bis 80 °C und besonders bevorzugt von 15 bis 50 °C. Primäre Aminogruppen sind in der Lage zwei Mal im Rahmen einer Michaeladdition reagieren zu können. Dazu addiert zunächst die primäre Aminogruppe einer Komponente B oder C an die C=C-Doppelbindung einer Komponente D unter Ausbildung einer sekundären Aminogruppe. Diese sekundäre Aminogruppe ist in der Lage im Rahmen einer weiteren Michaeladdition mit einer C=C-Doppelbindung einer Komponente D unter Ausbildung einer tertiären Aminogruppe zu reagieren. Auch das zweifache Michaeladditionsprodukt einer Komponente B oder C mit zwei unabhängig voneinander ausgewählten Komponenten D ist ein Intermediat I wie zuvor beschrieben.

Im zweiten Reaktionsschritt wird mindestens eine der im Intermediat I vorhandenen C=O-Doppelbindungen gewählt aus der Gruppe der Carbonsäuren, der Carbonsäureester und der Carbonsäurehalogenide mit einer primären oder sekundären Aminogruppe einer Komponente B oder C im Rahmen einer Amidierungsreaktion unter Ausbildung einer Spezies der allgemeinen Formel (III) umgesetzt. Es ist bevorzugt, dass die im Intermediat vorhandene C=O-Doppelbindung als Carbonsäurestergruppe vorliegt.

Diese Umsetzungen erfolgen vorzugsweise in einem Temperaturbereich von 50 bis 180 °C, bevorzugter von 70 bis 160 °C und besonders bevorzugt von 80 bis 150 °C.

Wenn das Intermediat I mehr als eine C=O-Doppelbindungen gewählt aus der Gruppe der Carbonsäuren, der Carbonsäureester und der Carbonsäurehalogenide aufweist, können auch diese in einer Amidierungsreaktion mit einer primären oder sekundären Aminogruppe zu einer Amidgruppe umgesetzt werden.

Die in der Amidierungsreaktion gebildeten Spaltungsprodukte, wie z.B. im Falle der bevorzugten Carbonsäureesterspaltung gebildete Alkohol, werden während oder nach der Reaktion aus dem Reaktionsgemisch entfernt. Des Weiteren wird das gegebenenfalls bei der Reaktion eingesetzte Lösemittel aus dem Reaktionsgemisch entfernt.

Es ist beispielsweise auch möglich, dass zur Herstellung einer Spezies der allgemeinen Formel (III), bei denen $Z^1$ mindestens eine tertiäre Aminogruppe und eine Amidgruppe aufweist, Edukte eingesetzt werden, die bereits ein Intermediat I darstellen, so dass diese in einer oder mehreren Amidierungsreaktionen mit einer oder mehreren primären oder sekundären Aminogruppen der Komponenten B und/oder C zu Produkten gemäß der allgemeinen Formel (III) umgesetzt werden können.

Es ist beispielsweise auch möglich, dass zur Herstellung einer Spezies der allgemeinen Formel (III), bei denen $Z^1$ mindestens eine tertiäre Aminogruppe und eine Amidgruppe aufweist, Edukte zum Einsatz kommen, die mindestens eine Amidgruppe und mindestens eine C=C-Doppelbindung aufweisen, die in Konjugation mit der C=O-Doppelbindung der Amidgruppe vorliegt. Spezies der allgemeinen Formel (III) werden nun durch Michaeladdition einer primären oder sekundären Aminogruppe der Komponente B oder C an die C=C-Doppelbindung hergestellt.

Die Auswahl der Komponenten B gemäß Formel (VI) und/oder C gemäß der allgemeinen Formel (VII) zur Herstellung einer Spezies der allgemeinen Formel (III), bei denen $Z^1$ mindestens eine tertiäre Aminogruppe und mindestens eine Amidgruppe umfasst, ist nicht weiter eingeschränkt und unterliegt lediglich der Vorgabe, dass das resultierende Produkt eine Spezies der allgemeinen Formel (III) darstellt. Dies bedeutet, dass das Produkt 1 bis 10 gegenüber Isocyanatgruppen reaktive Gruppen enthält sowie mindestens eine tertiäre Aminogruppe und mindestens eine Amidgruppe enthält.

Die Erfindung betrifft auch ein Verfahren zur Herstellung der erfindungsgemäßen urethan- und harnstoffgruppenhaltige Reaktionsprodukte beziehungsweise der darin enthaltenen Spezies der allgemeinen Formel (I).

Beim erfindungsgemäßen Verfahren zur Herstellung der erfindungsgemäßen urethan- und harnstoffgruppenhaltigen Reaktionsprodukte werden

i) b Alkohole $Y\text{-}(OH)_q$ mit mindestens einem Polyisocyanat $R(NCO)_x$ unter Ausbildung mindestens eines Urethans der allgemeinen Formel (V)

$$((HO)_{q-1}\text{-}Y\text{-}O\text{-}CO\text{-}NH)_b\text{-}R\text{-}(NCO)_{x-b} \qquad (V)$$

umgesetzt, wobei
das Urethan der allgemeinen Formel (V) mindestens eine freie Isocyanatgruppe enthält, und
q, b, x, Y und R wie für die allgemeine Formel (I) definiert sind, und

ii) mindestens ein Urethan der allgemeinen Formel (V) mit a Spezies der allgemeinen Formel (IIa)

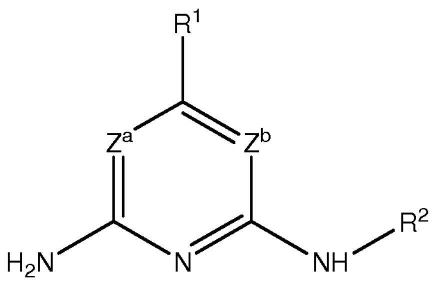

(IIa)

umgesetzt wird,
wobei $R^1$, $Z^a$, $Z^b$ und $R^2$ wie für die allgemeine Formel (II) definiert sind, und

iii) optional mit c Komponenten der allgemeinen Formel (III)

$$(HX)_y\text{-}Z^1\text{-}(XH)_{p+1} \qquad (III),$$

wobei X, $Z^1$, p und y wie für die allgemeine Formel (I) definiert sind,
zu einem urethan- und harnstoffgruppenhaltigen Reaktionsprodukt enthaltend mindestens eine Spezies der allgemeinen Formel (I)

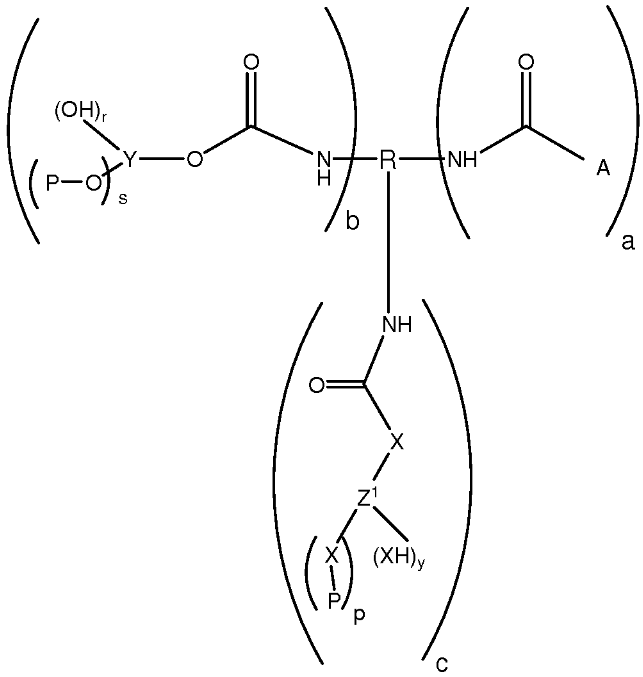

(I)

umgesetzt wird, wobei die Variablen der allgemeinen Formel (I) wie vorstehend definiert sind.

Bei der Herstellung des Urethans der allgemeinen Formel (V) in Schritt i) wird das Polyisocyanat $R(NCO)_x$ vorzugsweise mindestens im äquimolaren Verhältnis zum Alkohol $Y\text{-}(OH)_q$ eingesetzt, wobei die freien NCO-Gruppen des Polyisocyanats $R(NCO)_x$ vorzugsweise mindestens im äquimolaren Verhältnis zu den Hydroxylgruppen des Alkohols $Y\text{-}(OH)_q$ vorliegen. Vorzugsweise erfolgt der Einsatz des Polyisocyanat $R(NCO)_x$ in Schritt i) im molaren Überschuss, wodurch eine höhere Selektivität dahingehend erreicht wird, dass vorzugsweise mindestens eine NCO-Gruppe des Polyisocyanats in Schritt i) nicht umgesetzt wird.

Je größer der molare Überschuss des Polyisocyanats, desto höher ist normalerweise die Selektivität bezüglich der Herstellung des in Schritt i) erzeugten unter die allgemeine Formel (V) fallenden Urethans. Das aufgrund eines Einsatzes im Überschuss verbleibende nicht umgesetzte Polyisocyanat wird vorzugsweise wenigstens teilweise (jedoch möglichst vollständig) aus dem Reaktionsgemisch, bevorzugt durch Destillation, entfernt, um letztendlich den Anteil daraus entstehender Nebenprodukte möglichst gering zu halten. Vorzugsweise werden wenigstens 75 Mol-%, bevorzugt wenigstens 90 Mol-%, ganz besonders bevorzugt der gesamte Anteil der nicht umgesetzten Teilmenge des Polyisocyanats $R(NCO)_x$ aus dem Reaktionsgemisch entfernt. Das Polyisocyanat verschlechtert die Qualität des Verfahrensprodukts und ist als umweltschädlich anzusehen.

Es ist besonders bevorzugt, dass im erfindungsgemäßen Verfahren als Polyisocyanate $R(NCO)_x$ Diisocyanate $R(NCO)_2$ und als Alkohole $Y\text{-}(OH)_q$ Monoalkohole Y-OH eingesetzt werden. In diesem Fall ist es bevorzugt zur Erhöhung der Selektivität bezüglich der Herstellung des in Schritt i) erzeugten unter die allgemeine Formel (V) fallenden Urethans, ein Diisocyanat $R(NCO)_2$ einzusetzen, welches zwei unterschiedlich reaktive Isocyanatgruppen aufweist. Besonders bevorzugt wird das Diisocyanat $R(NCO)_2$ mit zwei unterschiedlich reaktiven Isocyanatgruppen ausgewählt aus der Gruppe bestehend aus Toluol-2,4-diisocyanat und Isophorondiisocyanat. Bevorzugt wird in Schritt i) das Diisocyanat $R(NCO)_2$ zum Monoalkohol Y-OH in einem molaren Verhältnis von mindestens 1,1:1,0, besonders bevorzugt von mindestens 2,0:1,0 und ganz besonders bevorzugt von mindestens 2,5:1,0 eingesetzt. Es ist ganz besonders bevorzugt, dass in Schritt i) sowohl ein oder mehrere Diisocyanate mit unterschiedlich reaktiven Isocyanatgruppen verwendet werden als auch ein molarer Überschuss der Isocyanatkomponente in Bezug auf den Monoalkohol Y-OH eingesetzt wird.

In dem erfindungsgemäßen Verfahren kann die **Isocyanataddition**, je nach Reaktivität der einzelnen Reaktionspartner, in dem für diese Art von Reaktion üblichen Temperaturbereich von Raumtemperatur bis etwa 150 °C, bevorzugt bis 100°C, besonders bevorzugt bis 70°C erfolgen. Zur Beschleunigung und Reduzierung von Nebenreaktionen können die bekannten und üblichen Katalysatoren, wie tertiäre Amine, Triethylamin, Dimethylcyclohexylamin, N-Methylmorpholin, N,N'-Dimethylpiperazin, 2-(Dimethylaminoethoxy)ethanol, Diazabicyclo-(2,2,2)octan und ähnliche sowie insbesondere organische Metallverbindungen, wie Titansäureester, Eisenverbindungen wie Eisen-(III)-acetylacetonat, Zinnverbindungen, beispielsweise Zinndiacetat, Zinndioctoat, Zinndilaurat oder die Dialkylderivate von Zinndialkylsalzen aliphatischer Carbonsäuren wie Dibutylzinndiacetat, Dibutylzinndilaurat oder ähnliche verwendet werden. Diese Katalysatoren werden üblicherweise in Mengen von 0,0001 bis 0,1 Gew.-Teilen pro 100 Gew.-Teile Diisocyanat

eingesetzt.

Es ist hervorzuheben, dass die mit dem erfindungsgemäßen Verfahren herstellbaren erfindungsgemäßen urethan- und harnstoffgruppenhaltigen Reaktionsprodukte beziehungsweise die darin enthaltenen Spezies der allgemeinen Formel (I) eine gute Dispergierwirkung bezüglich eines breiten Spektrums von zu dispergierenden Feststoffen zeigen. Dies äußert sich u. a. darin, dass Feststoffe mit sauren, neutralen und basischen Oberflächen jeweils effektiv dispergiert werden können.

Die mit dem erfindungsgemäßen Verfahren herstellbaren urethan- und harnstoffgruppenhaltigen Reaktionsprodukte beziehungsweise die darin enthaltenen Spezies der allgemeinen Formel (I) sind von besonders hoher Qualität und universell als Netz- und Dispergiermittel einsetzbar. Konkret kann gesagt werden, dass die erfindungsgemäß herstellbaren urethan- und harnstoffgruppenhaltigen Reaktionsprodukte beziehungsweise die darin enthaltenen Spezies der allgemeinen Formel (I) sowohl in polaren als auch in unpolaren Bindemittelsystemen erfolgreich eingesetzt werden können und dabei als Netz- und Dispergiermittel bzw. als Dispersionsstabilisatoren bzw. als Haftvermittler eine ausgezeichnete Verträglichkeit zeigen. Dies gewährleistet den erfolgreichen Einsatz in Kombination mit den unterschiedlichsten Bindemitteln und Überzugsmaterialien. Weiterhin ermöglichen die mit dem erfindungsgemäßen Verfahren herstellbaren urethan- und harnstoffgruppenhaltigen Reaktionsprodukte beziehungsweise die darin enthaltenen Spezies der allgemeinen Formel (I) eine flokkulationsfreie Mischbarkeit von Pasten, insbesondere Pigmentpasten, bzw. der mit diesen Pasten hergestellten Bindemitteln. Darüber hinaus eignen sich die erfindungsgemäßen urethan- und harnstoffgruppenhaltigen Reaktionsprodukte beziehungsweise die darin enthaltenen Spezies der allgemeinen Formel (I) als Dispersionsstabilisatoren, insbesondere auch als Emulsionsstabilisatoren. Durch den Einsatz der mit dem erfindungsgemäßen Verfahren herstellbaren urethan- und harnstoffgruppenhaltigen Reaktionsprodukte beziehungsweise die darin enthaltenen Spezies der allgemeinen Formel (I) wird die Viskosität des eingetragenen Mahlgutes während der Dispergierung deutlich reduziert und ermöglicht auf diese Weise die Herstellung von Formulierungen, welche einen hohen Feststoffanteil aufweisen. Auf diese Weise kann zur besseren Umweltverträglichkeit der Anteil an (flüchtigen) Lösemitteln reduziert werden. Resümierend kann gesagt werden, dass die mit dem erfindungsgemäßen Verfahren herstellbaren urethan- und harnstoffgruppenhaltigen Reaktionsprodukte beziehungsweise die darin enthaltenen Spezies der allgemeinen Formel (I) bei guter Stabilisierung von Pigmenten oder Füllstoffen die Mahlgutviskosität entsprechender Lacke, Pasten oder Kunststoffformulierungen soweit senken, dass eine Verarbeitung bei hohem Füllgrad möglich ist, ohne dass die Beständigkeit der ausgehärteten Lacke negativ beeinflusst werden. Durch eine geeignete Wahl des organischen Rests Y lassen sich auch Trennmittel herstellen, die beispielsweise im Bereich der Kunststoffherstellung, in Kompositwerkstoffen oder Faserverbundwerkstoffen eingesetzt werden können. Schließlich ist zu erwähnen, dass das erfindungsgemäße Verfahren verhältnismäßig einfach und wirtschaftlich durchführbar ist, wobei die eingesetzten Ausgangsstoffe allgemein gut verfügbar sind.

Die nach dem erfindungsgemäßen Verfahren hergestellten - nicht nachbehandelten bzw. aufgereinigten - urethan- und harnstoffgruppenhaltigen Reaktionsprodukte enthalten typischerweise aufgrund von auftretenden Nebenreaktionen geringe Mengen an Produkten, die keine Spezies der allgemeinen Formel (I) darstellen. Möglich Nebenreaktionen unter Verwendung eines Diisocyanats $R(NCO)_x$ und eines Monoalkohols Y-OH sind beispielsweise die zweifache Reaktion eines Diisocyanats $R(NCO)_2$ mit einem Monoalkohol Y-OH unter Ausbildung eines Diurethans der allgemeinen Formel Y-O-CO-NH-R-NH-CO-O-Y sowie die zweifache Reaktion eines Diisocyanats $R(NCO)_2$ mit einer Spezies der allgemeinen Formel (IIa) unter Ausbildung eines Diharnstoffs der allgemeinen Formel A-CO-NH-R-NH-CO-A. Des Weiteren besteht die Möglichkeit einer zweifachen Reaktion der Aminogruppen der allgemeinen Formel (IIa) mit jeweils einer freien Isocyanatgruppe von zwei Polyisocyanaten $R(NCO)_x$. Die vorstehend genannten Nebenreaktionen zeigen exemplarisch einige Nebenreaktionen, die auftreten können. Es sind jedoch weitere Nebenreaktionen, die zu nicht erfindungsgemäßen Spezies der allgemeinen Formel (I) führen, möglich. Entsprechend geringe Mengen dieser Nebenprodukte verursachen keinerlei Verschlechterung bezüglich einer Verwendung als Netz- und Dispergiermittel und sind ein deutlicher Hinweis darauf, dass die urethan- und harnstoffgruppenhaltigen Reaktionsprodukte unter Einsatz des erfindungsgemäßen Verfahrens hergestellt worden sind. Des Weiteren können die erfindungsgemäßen urethan- und harnstoffgruppenhaltigen Reaktionsprodukte auch noch geringe Menge des nicht umgesetzten Urethans der Formel (V) enthalten. Durch den Einsatz entsprechender Mengen einer Spezies der allgemeinen Formel (IIa) in Schritt ii) bzw. optional einer Komponente der allgemeinen Formel (III) in Schritt iii) des erfindungsgemäßen Verfahrens kann der Anteil des Urethans der allgemeinen Formel (V) in der Regel zumindest fast gegen Null reduziert werden, was für die Qualität, insbesondere zur Herstellung möglichst einheitlicher Produkte sowie die Vermeidung von Bodensatz und Trübung, der erfindungsgemäßen urethan- und harnstoffgruppenhaltigen Reaktionsprodukte meist vorteilhaft ist. Entsprechende Reaktionen nach Schritt ii) bzw. nach optionalen Schritt iii) des erfindungsgemäßen Verfahrens gelten vorzugsweise als beendet, wenn ein NCO-Gehalt von $< 0,1\%$ ermittelt wird. Die erfindungsgemäßen urethan- und harnstoffgruppenhaltigen Reaktionsprodukte sind umweltfreundlich, gut lagerfähig und zeigen - entsprechend wie die erfindungsgemäßen Spezies der allgemeinen Formel (I) als solches - ausgezeichnete Eigenschaften als Netz- und Dispergiermittel sowie als Haftvermittler.

**Lösemittel**

Das erfindungsgemäße Verfahren kann, je nach Viskosität, in Substanz oder in Gegenwart von geeigneten Lösemitteln, Lösemittelgemischen oder anderen geeigneten Trägermedien durchgeführt werden. Geeignet sind alle Lösemittel oder Trägermedien, die unter den gewählten Reaktionsbedingungen nicht reaktiv sind oder deren Reaktivität gegenüber den Reaktionspartnern zu vernachlässigen ist und in denen die Reaktanden und die Reaktionsprodukte zumindest teilweise löslich sind. Hierzu zählen beispielsweise Kohlenwasserstoffe wie Toluol, Xylol, aliphatische und/oder cyloaliphatische Benzinfraktionen, chlorierte Kohlenwasserstoffe wie Chloroform, Trichlorethan, cyclische und acyclische Ether wie Dioxan, Tetrahydrofuran, Polyalkylenglykoldialkylether wie Dipropylenglykoldimethylether, Ester von Mono-, Di- oder Polycarbonsäuren wie Ethylacetat, Butylacetat, Butyrolacton, Dimethyl-2-Methylglutarat, Triacetin, Phthalate oder andere Weichmacher, Di- oder Polycarbonsäureester, als "Dibasic Ester" bezeichnete Dialkylester von $C_2$-$C_4$-Dicarbonsäuren, Alkylglykolester wie Ethylglykolacetat, Methoxypropylacetat, Ketone wie Methylisobutylketon, Cyclohexanon, Aceton, Säureamide wie Dimethylformamid, N-Methylpyrrolidon und dergleichen.

Die Lösemittel sollten für die Durchführung der oben beschriebenen Reaktionen zweckmäßiger Weise so ausgewählt werden, dass sich diese unter den Reaktionsbedingungen inert gegenüber dem Reaktanten verhalten.

Zweckmäßig wählt man das oder die Lösemittel bzw. Trägermedien bereits unter Berücksichtigung des geplanten Einsatzgebietes aus. Zum Beispiel werden für den Einsatz in wasserverdünnbaren Lacksystemen oder zur Belegung von Pigmenten in wässriger Suspension nach der Pigmentsynthese bevorzugt Lösemittel eingesetzt, die ganz oder teilweise wasserverdünnbar sind. Soll das Verfahrensprodukt zum Beispiel dort eingesetzt werden, wo die Anwesenheit von flüchtigen organischen Verbindungen (VOC) nicht erwünscht ist, so sollte die Formulierung möglichst lösemittelfrei oder in entsprechend als VOC-frei geltenden Trägermaterialien vorliegen.

Je nach Anwendungsgebiet können die zur Synthese verwendeten Lösemittel im Reaktionsgemisch verbleiben oder werden ganz oder teilweise entfernt und gegebenenfalls durch andere Lösemittel oder Trägermedien ersetzt. Das Lösemittel kann zum Beispiel durch Abdestillieren, gegebenenfalls bei reduziertem Druck und/oder azeotrop unter Zusatz von Wasser, ganz oder teilweise entfernt werden. Die Wirksubstanz (Verbindung der allgemeinen Formel (I)) kann aber auch durch Ausfällen mittels Zusatz von Nichtlösern wie aliphatischen Kohlenwasserstoffen, beispielsweise Hexan, und anschließendem Abtrennen durch Filtration und gegebenenfalls Trocknen isoliert werden. Die nach einer dieser Methoden erhaltene Wirksubstanz kann dann in einem für das jeweilige Anwendungsgebiet geeigneten Lösemittel angelöst werden oder gegebenenfalls in reiner Form beispielsweise bei Pulverlacken, eingesetzt werden oder auf inerte Träger aufgezogen werden. Für Anwendungen, bei denen die Verwendung von Feststoffen bevorzugt ist, wie Pulverlacken oder bestimmten Kunststoffverarbeitungsverfahren, können die Verbindungen auch durch weitere bekannte Verfahren in eine feste Form überführt werden. Beispiele für solche Verfahren sind Mikroverkapselung, Sprühtrocknung, Adsorption auf einen festen Träger wie $SiO_2$ oder das PGSS-Verfahren (Particle from Gas Saturated Solutions).

**Modifikationen**

In einer weiteren Ausführungsform können die im erfindungsgemäßen urethan- und harnstoffgruppenhaltigen Reaktionsprodukt noch vorhandenen XH-Gruppen, das heißt OH-Gruppen und/oder primäre und/oder sekundäre Aminogruppen in einer Folgereaktion weiter umgesetzt werden, zum Beispiel mit Carbonsäureanhydriden. Die erfindungsgemäßen urethan- und harnstoffgruppenhaltigen Reaktionsprodukte dienen dann als Zwischenprodukte bei der Herstellung modifizierter ebenfalls erfindungsgemäßer urethan- und harnstoffgruppenhaltiger Reaktionsprodukte. Die modifizierten Produkte können auf den gleichen Gebieten eingesetzt werden wie die noch nicht modifizierten erfindungsgemäßen urethan- und harnstoffgruppenhaltigen Reaktionsprodukte. Durch die Modifizierung kann beispielsweise die Verträglichkeit der Reaktionsprodukte gegenüber bestimmten Medien erhöht werden oder angepasst werden.

Eventuell vorhandene tertiäre Aminogruppen, die insbesondere in den Resten $Z^1$ und/oder $Z^2$ enthalten sein können, können mit Sauerstoff, Peroxoverbindungen wie Percarbonsäuren und mit Wasserstoffperoxid in **Aminoxide** überführt werden, die zusätzlich mit Säuren wie zum Beispiel Salzsäure versalzt werden können.

**Versalzungsprodukte**

Die erfindungsgemäßen urethan- und harnstoffgruppenhaltigen Reaktionsprodukte beziehungsweise die darin enthaltenen Spezies der allgemeinen Formel (I) können insbesondere durch die Reste $Z^1$ und/oder $Z^2$ tertiäre Aminogruppen enthalten. Diese können ganz oder teilweise versalzt werden. Die tertiären Aminogruppen können beispielsweise mit Säuren, wie Carbonsäuren, Carbonsäurederivaten wie z.B. Carbonsäurehalogeniden oder Phosphorsäuren und deren Estern, zu entsprechenden Ammoniumsalzen umgesetzt werden. Die erfindungsgemäßen urethan- und harnstoffgruppenhaltigen Reaktionsprodukte dienen dann als Zwischenprodukte bei der Herstellung versalzter ebenfalls erfindungsgemäßer urethan- und harnstoffgruppenhaltiger Reaktionsprodukte. Die versalzten Produkte können auf den gleichen Gebieten eingesetzt werden wie die nicht versalzten erfindungsgemäßen urethan- und harnstoffgruppenhaltigen

Reaktionsprodukte. Durch die Versalzung kann beispielsweise die Verträglichkeit der Reaktionsprodukte gegenüber bestimmten Medien erhöht werden oder angepasst werden oder die Wechselwirkung mit Feststoffpartikeln wie Pigmenten und/oder Füllstoffen beeinflusst werden.

**Quaternisierungsprodukte**

Die erfindungsgemäßen urethan- und harnstoffgruppenhaltigen Reaktionsprodukte beziehungsweise die darin enthaltenen Spezies der allgemeinen Formel (I) enthalten in den Resten $Z^1$ und/oder $Z^2$ vorzugsweise tertiären Aminogruppen. Diese können ganz oder teilweise durch Umsetzung mit Quaternisierungsreagenzien in entsprechende **quartäre Ammoniumsalze** überführt werden. Die erfindungsgemäßen urethan- und harnstoffgruppenhaltigen Reaktionsprodukte dienen dann als Zwischenprodukte bei der Herstellung quaternisierter ebenfalls erfindungsgemäßer urethan- und harnstoffgruppenhaltiger Reaktionsprodukte. Die quaternisierten Produkte können auf den gleichen Gebieten eingesetzt werden wie die nicht quaternisierten erfindungsgemäßen urethan- und harnstoffgruppenhaltigen Reaktionsprodukte. Durch die Quaternisierung kann beispielsweise die Verträglichkeit der Reaktionsprodukte gegenüber bestimmten Medien erhöht werden oder angepasst werden oder die Wechselwirkung mit Feststoffpartikeln wie Pigmenten und/oder Füllstoffen beeinflusst werden.

Geeignete Quaternisierungsreagenzien können zum Beispiel gewählt werden aus der Gruppe der Alkylhalogenide und Aralkylhalogenide oder Aralkylverbindungen mit Abgangsgruppen wie Triflat, Methylsulfat oder Tosylat die nukleophile Substitutionsreaktionen mit tertiären Aminen eingehen können oder Oxiranen, wie Alkylenoxiden oder Glycidethern, in Gegenwart von Säuren oder deren Derivaten, wie Carbonsäuren, Sulfonsäuren oder Phosphorsäuren und deren Estern oder Halogeniden.

Beispiele für geeignete Quaternisierungsreagenzien sind Benzylchlorid, 2- oder 4-Vinylbenzylchlorid, Methylchlorid, Methyljodid,.Methyltosylat oder Dimethylsulfat. Bevorzugt sind Benzylchlorid und 4-Vinylbenzylchlorid.

Eine weitere Möglichkeit zur Quaternisierung ist die Verwendung von Glycidylethern in Gegenwart von Säuren. Beispiele für geeignete Gycidylether sind Glycidylmethacrylat, Alkylglycidylether wie 2-Ethylhexylglycidylether und C13/C15-Glycidylether (Handelsname z.B. Grilonit RV 1814) oder Arylglycidylether wie Kresylglycidylether. Für diese Quaternisierungsreaktion geeignete Säuren sind zum Beispiel Carbonsäuren wie Benzoesäure, Essigsäure oder Milchsäure. Weitere Säuren sind saure Phosphorsäureester mit einer oder zwei Estergruppen.

**Erfindungsgemäße Verwendung**

Die vorliegende Erfindung betrifft weiterhin die Verwendung der vorstehend beschriebenen erfindungsgemäßen urethan- und harnstoffgruppenhaltigen Reaktionsprodukte oder der darin enthaltenen Spezies der allgemeinen Formel (I) als Additiv, bevorzugt als Netzmittel und/oder Dispergiermittel und/oder Dispersionsstabilisator und/oder Haftvermittler in Zusammensetzungen, wie Feststoffgemengen oder Beschichtungen, insbesondere Lacken, Kunststoffen, Pigmentpasten, Dichtstoffen, Kosmetika, Keramik, Klebstoffen, Vergussmassen, Spachtelmassen, Druckfarben und Tinten.

Außerdem betrifft die Erfindung auch die oben aufgeführten Zusammensetzungen, wie Feststoffgemengen oder Beschichtungen, insbesondere Lacken, Kunststoffen, Pigmentpasten, Dichtstoffen, Kosmetika, Keramik, Klebstoffen, Vergussmassen, Spachtelmassen, Druckfarben und Tinten. Die Feststoffgemenge enthalten vorzugsweise Partikel und/oder Fasern, die mit den vorstehend beschriebenen erfindungsgemäßen urethan- und harnstoffgruppenhaltigen Reaktionsprodukten oder den darin enthaltenen Spezies der allgemeinen Formel (I) behandelt worden sind.

Schließlich betrifft die Erfindung Lacke und Kunststoffe, welche die erfindungsgemäßen urethan- und harnstoffgruppenhaltigen Reaktionsprodukte oder die darin enthaltenen Spezies der allgemeinen Formel (I) enthalten.

Die erfindungsgemäßen urethan- und harnstoffgruppenhaltigen Reaktionsprodukte oder die darin enthaltenen Spezies der allgemeinen Formel (I) finden beispielsweise Verwendung als Aluminiumpassivatoren, Dispergiermittel, Dispersionsstabilisatoren, Netzmittel oder Haftvermittler und lassen sich beispielsweise in pigmentierten und/oder füllstoffhaltigen Produkten, beispielsweise Pigmentkonzentraten oder - pasten, Beschichtungszusammensetzungen, Dichtstoffen, Kunststoffen, Keramiken, Kosmetika, Klebstoffen, Vergussmassen, Spachtelmassen, Druckfarben und/oder Tinten einsetzen. Bevorzugt sind Pigmentkonzentrate, die mit entsprechenden Auflacksystemen gemischt werden können, wodurch pigmentierte Lacke hergestellt werden.

So können die erfindungsgemäßen urethan- und harnstoffgruppenhaltige Reaktionsprodukte oder die darin enthaltenen Spezies der allgemeinen Formel (I) beispielsweise bei der Herstellung oder Verarbeitung von Lacken, Druckfarben, Tinten, beispielsweise für Tintenstrahldruck, Papierstrich, Leder- und Textilfarben, Pasten, Pigmentkonzentraten, Keramiken, Kleb- und Dichtstoffen, Vergussmassen, Kunststoffen und kosmetischen Zubereitungen eingesetzt werden, insbesondere, wenn diese Feststoffe wie Pigmente und/oder Füllstoffe (auch faserförmige) enthalten.

Auch bei der Herstellung oder Verarbeitung von **Formmassen** auf Basis von synthetischen, halbsynthetischen oder natürlichen makromolekularen Stoffen, wie Polyvinylchlorid, gesättigten oder ungesättigten Polyestern, Polyurethanen, Polystyrolen, Polyacrylaten, Polyamiden, Epoxidharzen, Polyolefinen, wie Polyethylen oder Polypropylen, können diese eingesetzt werden. Beispielsweise lassen sich diese zur Herstellung von Vergussmassen, Gießmassen, PVC-Plastisolen, Gelcoats, Polymerbeton, Leiterplatten, Industrielacken, Holz- und Möbellacken, Fahrzeuglacken, Schiffsfarben, Korrosionsschutzfarben, Can- und Coil-Coatings oder Maler- und Bautenlacken verwenden.

Die erfindungsgemäßen urethan- und harnstoffgruppenhaltigen Reaktionsprodukte oder die darin enthaltenen Spezies der allgemeinen Formel (I) können nicht nur in Auflacksystemen für pigmentierte Lacke eingesetzt werden. Ebenfalls möglich ist der Einsatz in einem weiten Bereich von Formulierungen bzw. Produkten, wie Harzen, Ölen, Fetten, Gleitmitteln, Gummimaterialien, Dichtstoffen, Druckfarben, Tinten, Klebstoffen, Wachsen oder Beschichtungsmittelzusammensetzungen. Die Konzentrate können auch eingesetzt werden in Formulierungen, die in der Körperpflegeindustrie hergestellt werden oder in elektrischen Anwendungen in der Elektronikindustrie, in der Schiffsindustrie, im Rahmen medizinischer Anwendungen, in der Bauindustrie oder in der Automobilindustrie. Beispiele schließen elektronisches Papier, wie das Display bei E-Books, die Verkapselung mikroelektronischer Chips und Leiterplatten, Unterwasserbootshautbeschichtungen, wie Anti-Fouling-Beschichtungen, Silikonröhren oder Gleitadditive für Bremskomponenten ein.

Die erfindungsgemäßen urethan- und harnstoffgruppenhaltige Reaktionsprodukte oder die darin enthaltenen Spezies der allgemeinen Formel (I) können vorteilhaft auch bei der Herstellung von **Farbfiltern** für Flüssigkristallanzeigen, Flüssigkristallbildschirme, Farbauflösungsgeräte, Sensoren, Plasmabildschirmen, Anzeigen auf Basis der SED (Surface conduction Electron emitter Display) und für **MLCC** (Multi Layer Ceramic Compounds) eingesetzt werden. Die MLCC-Technologie wird bei der Herstellung von Mikrochips und Leiterplatten angewendet.

Die Verwendung **in kosmetischen Präparaten** kann beispielsweise zur Herstellung kosmetischer Zubereitungen wie Make-up, Puder, Lippenstifte, Haarfärbemittel, Cremes, Nagellacke und Sonnenschutzpräparaten dienen. Diese können in den üblichen Formen, beispielsweise als W/O- oder O/W-Emulsionen, Lösungen, Gele, Cremes, Lotionen oder Sprays vorliegen. Die erfindungsgemäßen urethan- und harnstoffgruppenhaltige Reaktionsprodukte oder die darin enthaltenen Spezies der allgemeinen Formel (I) können vorteilhaft in zur Herstellung dieser Zubereitungen verwendeten Dispersionen eingesetzt werden. Diese können die für diese Zwecke in der Kosmetik üblichen Trägermedien, wie Wasser, Ricinusöle oder Silikonöle und Feststoffe, wie organische und anorganische Pigmente, wie Titandioxid oder Eisenoxid, enthalten.

Zu nennen sind ebenfalls die Anwendungsbereiche NIP (Non impact printing), InkJet (auf Papier, Folie, Keramik, künstlichem und natürlichem Fasergewebe), Dispergieren von Keramik (wässrig oder wasserfrei), Dispergieren in Vergussmassen. Die erfindungsgemäßen urethan- und harnstoffgruppenhaltige Reaktionsprodukte oder die darin enthaltenen Spezies der allgemeinen Formel (I) können auch als solche, d.h. ohne zuvor in ein entsprechendes Konzentrat eingearbeitet worden zu sein, in den zuvor genannten Formulierungen und Anwendungsbereichen zum Einsatz kommen.

Typischerweise ist das Produkt, welches die erfindungsgemäßen urethan- und harnstoffgruppenhaltigen Reaktionsprodukte oder die darin enthaltenen Spezies der allgemeinen Formel (I) sowie Pigment- und/oder Füllstoffe enthält, ein Lack, oder ein Pigmentkonzentrat für Beschichtungszusammensetzungen. Letztlich aber ist der Einsatz der erfindungsgemäßen urethan- und harnstoffgruppenhaltigen Reaktionsprodukte oder der darin enthaltenen Spezies der allgemeinen Formel (I) in beliebigen pigmenthaltigen und/oder füllstoffhaltigen Produkten möglich.

Insbesondere handelt es sich bei den **Pigmentkonzentraten** um Zusammensetzungen, die neben den erfindungsgemäßen urethan- und harnstoffgruppenhaltigen Reaktionsprodukten oder den darin enthaltenen Spezies der allgemeinen Formel (I), beispielsweise organische Lösemittel und mindestens ein Pigment enthalten. Diese enthalten insbesondere keine oder nur geringe Anteile organischer Polymere als Bindemittel. Solche bekannten Bindemittel sind vorteilhafterweise in den entsprechenden Auflacksystemen vorhanden und werden nachstehend beschrieben.

Als organische **Lösemittel** kommen insbesondere die typischen im Bereich der Lack- und Farbindustrie eingesetzten, dem Fachmann bekannten organischen Lösemittel, wie aliphatische Lösemittel, cycloaliphatische Lösemittel, aromatische Lösemittel, wie Toluol, Xylol, Solventnaphtha, Ether, Ester und/oder Ketone, beispielsweise Butylglykol, Butyldiglykol, Butylacetat, Methylisobutylketon, Methylethylketon und/oder Lösemittel, wie Methoxypropylacetat, Diacetonalkohol, zum Einsatz.

Als **Pigmente** kommen die dem Fachmann bekannten Pigmente zu Einsatz. Häufig werden Kombinationen verschiedener Pigmente eingesetzt um die gewünschten Eigenschaften zu erhalten. Beispiele für Pigmente sind Mono-, Di-, Tri- und Polyazopigmente, Oxazin-, Dioxazin-, Thiazin-Pigmente, Diketo-pyrrolo-pyrrole, Phthalocyanine, Ultramarin und andere Metallkomplex-Pigmente, indigoide Pigmente, Diphenylmethan-Pigmente, Triarylmethan-Pigmente, Xanthen-Pigmente, Acridin-Pigmente, Chinacridon-Pigmente, Methin-Pigmente, Anthrachinon, Pyranthron-, Perylen-Pigmente und andere polycyclische Carbonylpigmente, anorganische Pigmente, wie Carbon Black Pigmente und/oder Pigmente auf Basis von Russ, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischte Metalloxide auf Basis von Nickel, Bismut, Vanadium, Molybdän, Cadmium, Titan, Zink, Mangan, Cobalt, Eisen, Chrom, Antimon, Magnesium, Aluminium (beispielsweise Nickeltitangelb, Bismut-vanadatmolybdatgelb oder Chromtitangelb), magnetische Pigmente auf Basis von Reineisen, Eisenoxiden und Chromoxiden oder Mischoxiden, Metalleffektpigmente aus Aluminium, Zink, Kupfer oder Messing sowie Perlglanzpigmente oder fluoreszierende und phosphoreszierende Leuchtpigmente. Weitere Beispiele sind nanoskalige organische oder anorganische Feststoffe mit Teilchengrößen unterhalb von 100 nm in mindestens einer Dimension, wie bestimmte Russtypen oder andere allotrope Formen des Kohlenstoffs, wie single-wall-CNT's, multi-wall-CNT's und Graphen. Die Bestimmung der Teilchengröße erfolgt beispielsweise mittels Transmissionselektronenmikroskopie, analytischer Ultrazentrifugation oder Methoden der Lichtstreuung. Ebenfalls zu nennen sind Partikel, die aus einem Metall-, oder Halbmetalloxid bzw. -hydroxid bestehen, sowie Partikel, die aus gemischten Metall- und/oder Halbmetalloxiden bzw. -hydroxiden bestehen. Beispielsweise lassen sich die Oxide und/oder Oxidhydroxide des Aluminiums, Siliziums, Zinks, Titans, usw. zur Herstellung solcher extrem feinteiligen Feststoffe heranziehen. Der Herstellprozess dieser oxidischen bzw. hydroxidischen bzw. oxidhydroxidischen Teilchen kann über die unterschiedlichsten Verfahren wie beispielsweise Ionenaustauschprozesse, Plasmaprozesse, Sol-Gel-Verfahren, Ausfällung, Zerkleinerung (beispielsweise durch Vermahlung) oder Flammhydrolyse erfolgen. Alle vorstehend genannten Pigmente können oberflächenmodifiziert vorliegen und basische, saure oder neutrale Gruppen an der Oberfläche besitzen.

Weitere Beispiele sind die folgenden unter ihrer Color Index Nummer (C.I.) aufgeführten Pigmente:
Beispiele für Rotpigmente sind C. I. Pigment Red 1, 2, 3, 4, 5, 6, 7, 8, 9, 12, 14, 15, 16, 17, 21, 22, 23, 31, 32, 37, 38, 41, 47, 48, 48:1, 48:2, 48:3, 48:4, 49, 49:1, 49:2, 50:1, 52:1, 52:2, 53, 53:1, 53:2, 53:3, 57, 57:1, 57:2, 58:4, 60, 63, 63:1, 63:2, 64, 64:1, 68, 69, 81, 81:1, 81:2, 81:3 ,81:4, 83, 88, 90:1, 101, 101:1, 104 ,108, 108:1, 109, 112, 113, 114, 122, 123, 144, 146, 147, 149, 151, 166, 168, 169, 170, 172, 173, 174, 175, 176, 177, 178, 179, 181, 184, 185, 187, 188, 190, 193, 194, 200, 202, 206, 207, 208, 209, 210, 214, 216, 220, 221, 224, 230, 231, 232, 233, 235. 236, 237, 238, 239, 242, 243, 245, 247, 249, 250, 251, 253, 254, 255, 256, 257, 258, 259, 260, 262, 263, 264, 265, 266, 267, 268, 269, 270, 271, 272, 273, 274, 275, und 276.

Beispiele für Blaupigmente sind C. I. Pigment Blue 1, 1:2, 9, 14, 15, 15:1, 15:2, 15:3, 15:4, 15:6, 16, 17, 19, 25, 27, 28, 29, 33, 35, 36, 56, 56:1, 60, 61, 61:1, 62, 63, 66, 67, 68, 71, 72, 73, 74, 75, 76, 78,und 79.

Beispiele für Grünpigmente sind C. I. Pigment Green 1, 2, 4, 7, 8, 10, 13, 14, 15, 17, 18, 19, 26, 36, 45, 48, 50, 51, 54, 55, 58 oder 59.

Beispiele für Gelbpigmente sind C. I. Pigment Yellow 1, 1:1, 2, 3, 4, 5, 6, 9, 10, 12, 13, 14, 16, 17, 24, 31, 32, 34, 35, 35:1, 36, 36:1, 37, 37:1, 40, 41, 42, 43, 48, 53, 55, 61, 62, 62:1, 63, 65, 73, 74, 75, 81, 83, 87, 93, 94, 95, 97, 100, 101, 104, 105, 108, 109, 110, 111, 116, 117, 119, 120, 126, 127, 127:1, 128, 129, 133, 134, 136, 138, 139, 142, 147, 148, 150, 151, 153, 154, 155, 157, 158, 159, 160, 161, 162, 163, 164, 165, 166, 167, 168, 169, 170, 172, 173, 174, 175, 176, 180, 181, 182, 183, 184, 185, 188, 189, 190, 191, 191:1, 192, 193, 194, 195, 196, 197, 198, 199, 200, 202, 203, 204, 205, 206, 207, und 208.

Beispiele für Violettpigmente sind C. I. Pigment Violet 1, 1:1, 2, 2:2, 3, 3:1, 3:3, 5, 5:1, 14, 15, 16, 19, 23, 25, 27, 29, 31, 32, 37, 39, 42, 44, 47, 49, und 50.

Beispiele für Orangepigmente sind C. I. Pigment Orange 1, 2, 5, 13, 16, 17, 19, 20, 21, 22, 23, 24, 34, 36, 38, 39, 43, 46, 48, 49, 61, 62, 64, 65, 67, 68, 69, 70, 71, 72, 73, 74, 75, 77, 78, und 79.

Beispiele für Schwarzpigmente sind C. I. Pigment Black 7, 11, 30, 33.
Enthalten die jeweiligen Produkte, insbesondere die Beschichtungszusammensetzungen, **Füllstoffe**, so handelt es sich zum Beispiel um die dem Fachmann bekannten Füllstoffe. Beispiele für pulver- oder faserförmige Füllstoffe sind zum Beispiel solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff. Die eingesetzten Fasern können organischer und/oder anorganischer Natur sein und ebenso als Verstärkungsstoffe eingesetzt werden. Weitere Beispiele für Pigmente oder Füllstoffe finden sich beispielsweise in der US-A-4,795,796. Auch Flammschutzmittel, sofern die erfindungsgemäßen Verbindungen nicht bereits in üblichen Additivmengen für diesen Zweck eingesetzt werden, wie Aluminium- oder Magnesiumhydroxid und Mattierungsmittel, wie Kieselsäuren, lassen sich ebenfalls besonders gut durch die erfindungsgemäßen urethan- und harnstoffgruppenhaltigen Reaktionsprodukte oder die darin enthaltenen Spezies der allgemeinen Formel (I) dispergieren und stabilisieren.

Die erfindungsgemäßen urethan- und harnstoffgruppenhaltigen Reaktionsprodukte oder die darin enthaltenen Spezies der allgemeinen Formel (I) eignen sich insbesondere auch zur Herstellung von **Feststoffkonzentraten, wie Pigmentkonzentraten.** Dazu werden die erfindungsgemäßen urethan- und harnstoffgruppenhaltigen Reaktionsprodukte oder die darin enthaltenen Spezies der allgemeinen Formel (I) in einem Trägermedium wie organischen Lösemitteln, Weichmachern und/oder Wasser vorgelegt und die zu dispergierenden Feststoffe werden unter Rühren zugegeben. Zusätzlich können diese Konzentrate Bindemittel und/oder andere Hilfsstoffe enthalten. Mit den erfindungsgemäßen urethan- und harnstoffgruppenhaltigen Reaktionsprodukten oder den darin enthaltenen Spezies der allgemeinen Formel (I) ist es aber insbesondere möglich, stabile bindemittelfreie Pigmentkonzentrate herzustellen. Ebenso ist es möglich, mit den erfindungsgemäßen urethan- und harnstoffgruppenhaltigen Reaktionsprodukten oder den darin enthaltenen Spezies der allgemeinen Formel (I) fließfähige Feststoffkonzentrate aus Pigmentpresskuchen herzustellen. Hierbei wird dem Presskuchen, der noch organische Lösemittel, Weichmacher und/oder Wasser enthalten kann, die erfindungsgemäßen urethan- und harnstoffgruppenhaltigen Reaktionsprodukte oder die darin enthaltenen Spezies der allgemeinen Formel (I) zugemischt und die so erhaltene Mischung dispergiert. Die auf verschiedenen Wegen hergestellten Feststoffkonzentrate können dann in unterschiedliche Substrate wie z.B. Alkydharze, Polyesterharze, Acrylatharze, Polyurethanharze oder Epoxidharze eingearbeitet werden. Pigmente können aber auch lösemittelfrei direkt in den erfindungsgemäßen urethan- und harnstoffgruppenhaltigen Reaktionsprodukte oder den darin enthaltenen Spezies der allgemeinen Formel (I) dispergiert werden und eignen sich dann besonders zur Pigmentierung von thermoplastischen und duroplastischen Kunststoffformulierungen.

Ebenso ist es möglich, mit den erfindungsgemäßen urethan- und harnstoffgruppenhaltigen Reaktionsprodukten beziehungsweise der darin enthaltenen Spezies der allgemeinen Formel (I) Produkte bereitzustellen, die die Haftung von Beschichtungen auf Substraten erhöhen. Hierzu werden beispielsweise den entsprechenden Refinish-Coatings oder Überstrichfarben (beispielsweise auf Basis von lufttrocknenden 2K-PU Formulierungen oder Alkyd-Systemen) die erfindungsgemäßen urethan- und harnstoffgruppenhaltigen Reaktionsprodukte oder die darin enthaltenen Spezies der allgemeinen Formel (I) zugemischt. Die Beschichtung eines Substrats, wie beispielswiese eines Altlackes oder eines Metall- oder Kunststoffwerkstücks, erfolgt dann unter den üblichen Bedingungen, wobei durch den Einsatz des Haftvermittlers eine deutlich verbesserte Haftung auf dem Substrat erzielt werden kann. Die Haftung kann im Allgemeinen mittels Kratztest nach DIN 53230 oder Gitterschnitt DIN EN ISO 2409, Abzugmethode nach DIN EN 24624, Kugelschlagtest, Erichsen-Test, Dornbiegeprüfung oder Dampfstrahlprüfung ermittelt werden. Unter Verwendung der erfindungsgemäßen urethan- und harnstoffgruppenhaltigen Reaktionsprodukten bzw. der darin enthaltenen Spezies der allgemeinen Formel (I), muss weder die Formulierung, noch die Aushärteprozedur wesentlichen Änderungen unterworfen. Auch werden die wichtigsten Eigenschaften der fertigen Lackschicht, wie Vernetzungsgrad, Lösemittelresistenz, Glanz, Verlauf nicht durch die Verwendung der erfindungsgemäßen urethan- und harnstoffgruppenhaltigen Reaktionsprodukten bzw. der darin enthaltenen Spezies der allgemeinen Formel (I) beeinträchtigt.

**Einsatzmengen**

Je nach Einsatzgebiet werden die erfindungsgemäßen urethan- und harnstoffgruppenhaltigen Reaktionsprodukte oder die darin enthaltenen Spezies der allgemeinen Formel (I) in solchen Mengen eingesetzt, dass in dem letztlich für die weitere Anwendung interessanten Produkt vorzugsweise ein Anteil des erfindungsgemäßen Netz- und Dispergiermittels oder des erfindungsgemäßen Haftvermittlers, der erfindungsgemäßen urethan- und harnstoffgruppenhaltigen Reaktionsprodukte oder der darin enthaltenen Spezies der allgemeinen Formel (I) von 0,01 bis 10 Gew.-%, bezogen auf die Gesamtmenge des jeweiligen Produkts, besteht. Möglich sind aber auch höhere Anteile.

Bezogen auf den zu dispergierenden Feststoff, beispielsweise das Pigment, werden die erfindungsgemäßen urethan- und harnstoffgruppenhaltigen Reaktionsprodukte oder die darin enthaltenen Spezies der allgemeinen Formel (I) in einer Menge von bevorzugt 0,5 bis 100 Gew.-% eingesetzt. Werden schwer zu dispergierende Feststoffe verwendet, kann die Menge an eingesetztem erfindungsgemäßen Netz- und Dispergiermittel, den erfindungsgemäßen urethan- und harnstoffgruppenhaltigen Reaktionsprodukten oder den darin enthaltenen Spezies der allgemeinen Formel (I) durchaus höher sein. Die Menge ist im Allgemeinen abhängig von der zu belegenden Oberfläche des zu dispergierenden Stoffes. Von Bedeutung kann also beispielsweise sein, um welches Pigment es sich handelt. Allgemein lässt sich sagen, dass zur Dispergierung anorganischer Pigmente meist weniger Dispergiermittel notwendig ist als für organische Pigmente, da letztere meist über eine höhere spezifische Oberfläche verfügen und von daher eine größere Menge an Dispergiermittel nötig ist. Typische Dosierungen des Netz- und Dispergiermittels bzw. der erfindungsgemäßen urethan- und harnstoffgruppenhaltigen Reaktionsprodukte oder der darin enthaltenen Spezies der allgemeinen Formel (I) sind für anorganische Pigmente beispielsweise 1 bis 20 Gew.-% und für organische Pigmente 10 bis 50 Gew.-%, jeweils bezogen auf den zu dispergierenden Feststoff, insbesondere das Pigment. Bei sehr feinteiligen Pigmenten (beispielsweise einigen Rußen) können auch Zugabemengen von 30 bis 90% oder sinnvoll sein. Als Kriterien für eine ausreichende Pigmentstabilisierung können beispielsweise Glanz und Transparenz der Beschichtungszusammensetzungen oder der Grad des Ausschwimmens herangezogen werden. Die Dispergierung der Feststoffe kann als **Einzelanreibung** erfolgen oder auch als **Gemischanreibung** mit mehreren Pigmenten gleichzeitig, wobei die besten Ergebnisse in der Regel bei Einzelanreibungen zu erreichen sind. Bei der Verwendung von Mischungen verschiedener Feststoffe kann es durch gegensätzliche Ladungen auf den Feststoffoberflächen verstärkt zu Agglomerationen in der flüssigen Phase kommen. In diesen Fällen lässt sich bei Einsatz der erfindungsgemäßen urethanund harnstoffgruppenhaltigen Reaktionsprodukte oder der darin enthaltenen Spezies der allgemeinen Formel (I) häufig eine gleichnamige, in der Regel positive, Ladung aller Teilchen erreichen und damit Instabilitäten durch Ladungsunterschiede vermeiden. Ihre optimale Wirkung erzielen die Dispergiermittel bzw. die erfindungsgemäßen urethan- und harnstoffgruppenhaltigen Reaktionsprodukte oder die darin enthaltenen Spezies der allgemeinen Formel (I) bei Zugabe zum Mahlgut, insbesondere, wenn zunächst der zu dispergierende Feststoff nur mit dem Additiv und gegebenenfalls Lösemitteln gemischt wird ("Premix"), da dann das Additiv bevorzugt auf die Feststoffoberfläche adsorbieren kann, ohne in Wettbewerb mit den Bindemittel-Polymeren treten zu müssen. In der Praxis ist diese Vorgehensweise aber nur in Ausnahmefällen nötig. Bei Bedarf können die erfindungsgemäßen urethan- und harnstoffgruppenhaltigen Reaktionsprodukte oder die darin enthaltenen Spezies der allgemeinen Formel (I) auch nachträglich eingesetzt werden (als sogenannte "Post-Additive"), zum Beispiel, um in einem

fertig aufgelackten Ansatz Ausschwimm- oder Flokkulationsprobleme zu lösen. In der Regel sind in diesem Fall aber erhöhte Additiv-Dosierungen erforderlich.

Die Produkte, insbesondere die Beschichtungszusammensetzungen beziehungsweise Lacke, in denen die erfindungsgemäßen urethan- und harnstoffgruppenhaltigen Reaktionsprodukte oder die darin enthaltenen Spezies der allgemeinen Formel (I) letztlich ihre Wirkungen entfalten sollen, können zudem ein organisches Polymer als weitere **Bindemittel** enthalten. Solche Bindemittel sind dem Fachmann bekannt. Dieses mindestens eine weitere Bindemittel kann beispielsweise über ein Auflacksystem eingeführt werden, welches beispielsweise mit einem Pigmentkonzentrat, enthaltend die erfindungsgemäßen urethan- und harnstoffgruppenhaltigen Reaktionsprodukte oder die darin enthaltenen Spezies der allgemeinen Formel (I), gemischt wird, so dass es sich bei dem betrachteten Produkt um einen pigmentierten Lack handelt. Möglich sind aber auch andere pigmentierte und/oder füllstoffhaltige Produkte, beispielsweise Kunststoffe, Dichtstoffe und weitere dem Fachmann bekannte Produkte auf Basis einer organischen polymeren Matrix. Als Produkt ist ein System anzusehen, welches ein polymeres Harz beziehungsweise organisches Polymer als Bindemittel enthält und dadurch in der Lage ist, unter geeigneten Härtungsbedingungen eine feste organische, polymere Matrix zu bilden (beispielsweise eine Beschichtungszusammensetzung). Ebenfalls als Produkt wird ein System bezeichnet, dass durch einfache Vermischung mit einer Komponente, welche ein Bindemittel enthält, zur Bildung einer solchen organischen, polymeren Matrix fähig ist (beispielsweise ein Pigmentkonzentrat). Zum Einsatz kommen beispielsweise, aber nicht ausschließlich die dem Fachmann bekannten Alkydharze, Polyesterharze, Acrylatharze, Polyurethanharze, Cellulosenitrate, Celluloseacetobutyrate, Melamine, Chlorkautschuken und/oder Epoxidharze. Beispiele für Beschichtungen auf Wasserbasis sind kathodische oder anodische Elektrotauchlackierungen z.B. für Automobilkarossen. Weitere Beispiele sind Putze, Silikatfarben, Dispersionsfarben, Wasserlacke auf Basis von wasserverdünnbaren Alkyden, Alkydemulsionen, Hybridsystemen, 2-Komponenten-Systemen, Polyurethan- und Acrylat-Dispersionen. Möglich sind sowohl 1-Komponentensysteme als auch 2-Komponentensysteme, wobei im letzteren Fall in der Regel noch Polyisocyanate, Melaminharze und/oder Polyamidharze als die typischen, dem Fachmann geläufigen Vernetzungsmittel in einer zweiten Komponente vorhanden sind. Bevorzugt sind Produktsysteme, insbesondere Beschichtungszusammensetzungen, die eine Acrylatharz als Bindemittel enthalten. In einer weiteren Variante handelt es sich um eine 2-Komponenten (2K) Beschichtungszusammensetzung bzw. einen 2K-Lack, der ein Epoxidharz in der Bindemittelkomponente und ein Polyamidharz in der Vernetzerkomponente enthält.

Die als Produkte bevorzugten Beschichtungszusammensetzungen können **wasserbasierend oder lösemittelbasierend** sein. Unter wasserbasierend ist zu verstehen, dass die Beschichtungszusammensetzung als Lösemittel hauptsächlich Wasser enthält. Insbesondere sind bei einer wasserbasierenden Beschichtungszusammensetzung vorzugsweise nicht mehr als 10 Gew.-% organische Lösemittel, bezogen auf die Gesamtmenge an Lösemitteln, in der Beschichtungszusammensetzung enthalten. Als lösemittelbasierend gilt eine Beschichtungszusammensetzung, die nicht mehr als 5 Gew.-%, bevorzugt nicht mehr als 2 Gew.-% Wasser, bezogen auf die Gesamtmenge an Lösemitteln enthält.

Als **weitere Produktkomponenten** kommen beispielsweise in Frage Photoinitiatoren, Entschäumer, Netzmittel, filmbildende Hilfsmittel, wie Cellulose-Derivate (beispielsweise Cellulosenitrate, Celluloseacetate, Celluloseacetobutyrat), Reaktivverdünner, Verlaufmittel, Dispergiermittel, und/oder rheologiesteuernde Additive.

Die **Herstellung der als Produkte bevorzugten Pigmentkonzentrate** und Beschichtungszusammensetzung erfolgt über die dem Fachmann geläufigen Verfahren. Es kommen die bekannten Methoden zum Einsatz, wie beispielsweise die schrittweise Zugabe unter Rühren und Vermischung der Bestandteile der Beschichtungszusammensetzung in üblichen Mischaggregaten, wie Rührkesseln oder Dissolvern.

Unter Verwendung der bevorzugten Pigmentkonzentrate und Beschichtungszusammensetzungen können Beschichtungen bzw. Lackschichten hergestellt werden. Die Herstellung der Beschichtung erfolgt über die dem Fachmann geläufigen Applikationstechniken auf ein Substrat und anschließende Härtungsverfahren.

Die **Applikation** erfolgt beispielsweise durch die bekannten Spritz-, Sprüh-, Streich-, Roll-, Giess-, Tränk- und/oder Tauchverfahren. Nach der Applikation der Beschichtungszusammensetzung auf ein Substrat erfolgt die Härtung beziehungsweise Trocknung nach gängigen Methoden. Z.B. kann die applizierte Beschichtungszusammensetzung physikalisch trocknend, thermisch und/oder unter Anwendung aktinischer Strahlung (strahlenhärtend), vorzugsweise UV-Strahlung sowie Elektronenstrahlung härtbar sein. Die thermische Härtung kann beispielsweise im Bereich von etwa 10°C bis etwa 400 °C, je nach Art der Beschichtungszusammensetzung und/oder des Substrats, erfolgen. Auch die Dauer der Härtung ist individuell beispielsweise von der Art des Härtungsverfahrens (thermisch oder aktinisch), der Art der eingesetzten Beschichtungszusammensetzung und/oder den Substraten abhängig. Dabei kann das Substrat bewegt werden oder auch ruhen.

Neben der vorstehend beschriebenen Anwendung als Dispergiermittel und/oder Beschichtungsmittel für pulver- und faserförmige Feststoffe können die erfindungsgemäßen urethan- und harnstoffgruppenhaltigen Reaktionsprodukte oder die darin enthaltenen Spezies der allgemeinen Formel (I) auch als **Haftvermittler** eingesetzt werden.

Neben den vorstehend beschriebenen Anwendungen als Dispergiermittel und/oder Haftvermittler und/oder Beschichtungsmittel für pulver- und faserförmige Feststoffe können die erfindungsgemäßen urethan- und harnstoffgruppenhaltigen Reaktionsprodukte oder die darin enthaltenen Spezies der allgemeinen Formel (I) auch als **Viskositätsreduzierer** und **Kompatibilisatoren in Kunstharzen** eingesetzt werden. Beispiele für solche Kunstharze sind die sogenannten "sheet molding compounds" (SMC) und "bulk molding compounds" (BMC), die aus stark füllstoff- und faserhaltigen ungesättigten Polyesterharzen bestehen. Ihre Herstellung und Verarbeitung ist beispielhaft in der US-A-4,777,195 beschrieben. Ein Problem bei SMC- und BMC-Kunstharzmischungen besteht darin, dass oftmals Polystyrol (PS) der Formulierung zugesetzt wird, um die Schrumpfung während des Verarbeitungsprozesses zu reduzieren. PS ist nicht mit den verwendeten ungesättigten Polyesterharzen verträglich und es kommt zur Separation der Komponenten. Bei Verwendung von PSgefüllten SMC- oder BMC-Mischungen können die erfindungsgemäßen urethan- und harnstoffgruppenhaltigen Reaktionsprodukte oder die darin enthaltenen Spezies der allgemeinen Formel (I) aufgrund ihrer guten Dispergierqualitäten eine Kompatibilisierung zwischen PS und ungesättigtem Polyesterharz herbeiführen, wodurch sich die Lagerstabilität und Verarbeitungssicherheit solcher Mischungen erhöht.

Mittels der erfindungsgemäßen urethan- und harnstoffgruppenhaltigen Reaktionsprodukte oder die darin enthaltenen Spezies der allgemeinen Formel (I) können z.B. in unverträglichen Polyol-Mischungen, Polyol-Isocyanat-Mischungen oder Polyol-Treibmittelmischungen (werden z.B. bei der Polyurethan-Herstellung eingesetzt) **Phasenvermittlungseffekte** erzielt werden.

Im Folgenden wird die vorliegende Erfindung durch nachstehende Beispiele zusätzlich erläutert.

## BEISPIELE

Bei molekular uneinheitlichen Substanzen stellen die angegebenen Molekulargewichte Durchschnittswerte des Zahlenmittels dar. Die Molekulargewichte beziehungsweise zahlenmittleren Molekulargewichte $M_n$ werden bei Vorhandensein titrierbarer Hydroxy- oder Amino-Gruppen durch Endgruppenbestimmung über die Ermittlung der OH-Zahl beziehungsweise der Amin-Zahl bestimmt. Bei Verbindungen auf die eine Endgruppenbestimmung nicht anwendbar ist, wird das zahlenmittlere Molekulargewicht mittels Gelpermeationschromatographie gegen einen Polystyrolstandard bestimmt.

Sofern nicht anders ausgeführt, handelt es sich bei Angaben in Teilen um Gewichtsteile und bei Angaben in Prozenten um Gewichtsprozente.

### Festkörper

Die Probe (2,0 ± 0,1 g Prüfsubstanz) wird in eine vorher getrocknete Aluminiumschale eingewogen und 10 Minuten bei 150 °C im Trockenschrank getrocknet, im Exsickator abgekühlt, und dann zurückgewogen. Der Rückstand entspricht dem Festkörperanteil.

### NCO-Zahl

Der freie NCO-Gehalt der zum Einsatz kommenden Polyisocyanate sowie der Reaktionsverlauf der NCO-Additionen wird nach EN ISO 9369 durch Abreaktion mit Butylamin und anschließende Titration des Aminüberschusses bestimmt. Diese Methoden sind auch beschrieben bei Saul Patai "The Chemistry of Cyanates and their Thioderivates", Part 1, Chapter 5, 1977.

### OH-Zahl

Die Bestimmung der OH-Zahl erfolgt nach DIN ISO 4629 durch Acetylierung mit einem Überschuss Essigsäureanhydrid. Anschließend wird das überschüssige Essigsäureanhydrid durch Wasserzugabe zu Essigsäure aufgespalten und mit ethanolischer KOH-Lösung zurücktitriert. Die OH-Zahl gibt die Menge KOH in mg an, die der bei der Acetylierung von 1g Substanz gebundenen Menge Essigsäure äquivalent ist.

### Aminzahl

Unter der Aminzahl (AZ) wird die Menge KOH in mg verstanden, die dem Aminanteil von 1g Substanz entspricht. Die Aminzahl wird nach DIN 16945 durch potentiometrische Titration mit 0,1 n Perchlorsäure in Essigsäure bestimmt.

### Ausgangsstoffe

Desmodur HL BA Isocyanurate auf Basis HDI und TDI, 60%ig in Butylacetat, % NCO = 10,6; Hersteller: Bayer

| | |
|---|---|
| | Material Science |
| Desmodur N 100A | Biuret auf Basis HDI, 100%ig, % NCO = 22,0; Hersteller: Bayer Material Science |
| Desmodur N 3400 | Uretdion auf Basis HDI, 100%ig, % NCO = 21,8; Hersteller: Bayer Material Science |
| Desmodur IL BA | Isocyanurate auf Basis TDI, 51%ig in Butylacetat, % NCO = 8,0; Hersteller: Bayer Material Science |
| TDI | Tolyl-2,4-diisocyanat, % NCO = 48,3; Hersteller: Bayer Material Science |
| HDI | Hexamethylen-1,6-diisocyanat, % NCO = 49,9; Hersteller: Bayer Material Science |
| MPA | Methoxypropylacetat (Lösemittel), Hersteller: Dow Chemical Comp. |
| DMSO | Dimethylsulfoxid (Lösemittel), Lieferant: Sigma-Aldrich |
| NFM | N-Formylmorpholin (Lösemittel), Hersteller: BASF |
| DBTL | Dibutylzinndilaurat, Hersteller: Merck |
| DMAPA | N,N-Dimethylaminopropylamin, Hersteller: Huntsman Corp. |
| TEA | Triethanolamin, Hersteller: BASF |
| DEEA | N,N-Diethylethanolamin, Hersteller: Dow Chemical Comp. |
| MEA | N-Methylethanolamin, Hersteller: BASF |
| DEA | N,N-Diethanolamin, Hersteller: BASF |
| IPA | 3-Imidazolyl-1-propylamin, Hersteller: BASF |
| 4MDETA | N,N,N',N'-Tetramethyldiethylentriamin = Jeffcat Z 130, Hersteller: Huntsman Corp. |
| DMAE | N,N-Dimethylaminoethanol, Hersteller: BASF |
| DEEA | N,N-Diethylethanolamin, Hersteller: BASF |
| DMEA | N,N-Dimethylethanolamin, Hersteller: BASF |
| GLY | Glycerin, Hersteller: Merck |
| Jeffcat DPA | N-(3-dimethylaminopropyl)-N,N-diisopropanol-1-ylamin, Hersteller: Huntsman Corp. |
| BGA | Benzoguanamin, (2,4-diamino-6-phenyl-1,3,5-triazine), Hersteller: Nippon Shokubai |
| AGA | Acetoguanamin, (2,4-diamino-6-methyl-1,3,5-triazine), Lieferant: Sigma-Aldrich |
| 2,6-DAP | 2,6-Diaminopyridin, Lieferant: Sigma-Aldrich |
| Melamin | 2,4,6-triamino-1,3,5-triazin, Lieferant: Helm AG |
| Guanin | 2-Amino-6-oxo-purin, Lieferant: Sigma-Aldrich |
| Grilonit RV 1814 | $C_{13}/C_{15}$-Alkylglycidylether, Hersteller: EMS-Chemie |

Allgemeine Herstellvorschrift zur Herstellung der Urethane der allgemeinen Formel (V) (Tabelle 1):

In einem mit Rührer, Thermometer, Tropftrichter, Rückflusskühler und Stickstoffeinleitungsrohr versehenen Vierhalskolben werden 430 g eins Diisocyanats $R(NCO)_2$ Desmodur T 100 (ca. 100% 2,4-Toluylendiisocyanat, NCO-Gehalt = 48,8) und 7g Benzoylchlorid vorgelegt und gut durchmischt. X g des Alkohols $Y\text{-}(OH)_q$, die wasserfrei und bei Polyethern alkalifrei ist, werden langsam zudosiert, so dass die Temperatur 55 °C nicht übersteigt. Das Gemisch wird nach der Zudosierung weitere 3 Stunden bei 55°C gerührt. Das überschüssige TDI wird mittels Dünnschichtverdampfer bei 150 °C aus dem Reaktionsgemisch entfernt. Der Rest-TDI-Gehalt beträgt < 1 %. Die Urethane der allgemeinen Formel (V) werden in der nachstehenden Tabelle fortlaufend mit **M** bezeichnet.

Tabelle 1: Übersicht der Urethane der allgemeinen Formel (V) **M1** bis **M49**

| Urethan der Formel (III) | Alkohol $Y\text{-}(OH)_q$ | Menge X in [g] |
|---|---|---|
| **M1** | **Y1** Butanolgestarteter PO-Polyether; Mn 800, OH-Zahl: 70 mg KOH/g | 800 |
| **M2** | **Y2** MPEG 350, OH-Zahl: 162 mg KOH/g | 350 |
| **M3** | **Y3** Butanolgestarteter EO/PO-Polyether (EO:PO 1:1); Mn 2240, OH-Zahl: 25 mg KOH/g | 2240 |
| **M4** | **Y4** Polyester, OH-Zahl: 72 mg KOH/g (Herstellung: siehe unten) | 780 |
| **M5** | **Y5** Hexadecanolgestarteter Monohydroxyfunktioneller epsilon-Caprolactonpolyester; Mn 600 | 600 |
| **M6** | **Y6** Hexadecanolgestarteter Monohydroxyfunktioneller epsilon-Caprolactonpolyeste;, Mn 1200 | 1200 |
| **M7** | **Y7** MPEG 500 = Methoxypolyethylenglykol, Mn 500 | 500 |
| **M8** | **Y8** Butanolgestarteter EO/PO-Polyether (EO:PO 1:1); Mn 1100 | 1100 |

(fortgesetzt)

| Urethan der Formel (III) | Alkohol Y-$(OH)_q$ | Menge X in [g] |
|---|---|---|
| **M9** | **Y9** Butanolgestarteter EO/PO-Polyether (EO:PO 1:1); Mn 1700 | 1700 |
| **M10** | **Y10** Butanolgestarteter EO/PO-Polyether (EO:PO 1:1); Mn 2000 | 2000 |
| **M11** | **Y11** Butanolgestarteter EO/PO-Polyether (EO:PO 1:1); Mn 3100 | 3100 |
| **M12** | **Y12** Butanolgestarteter EO/PO-Polyether (EO:PO 1:1); Mn 4800 | 4800 |
| **M13** | **Y13** Hydroxyethylacrylatgestarteter epsilon-Caprolactonpolyester; Mn 1200 | 1200 |
| **M14** | **Y14** Monohydroxyfunktionelles Hydroxypropyl-polydimethylsiloxan mit Butylendgruppe; Mn 1200 | 1200 |
| **M15** | **Y15** Methanolgestarteter EO/PO-Polyether (EO:PO 3:1); Mn 1400 | 1400 |
| **M16** | **Y16** MPEG 500-gestarteter epsilon-Caprolactonpolyester; Mn 900 | 900 |
| **M17** | **Y17** iso-Decanolgestarteter epsilon-Caprolactonpolyester; Mn 700 | 700 |
| **M18** | **Y18** iso-Decanolgestarteter epsilon-Caprolactonpolyester; Mn 1000 | 1000 |
| **M19** | **Y19** Monophenylglykolgestarteter epsilon-Caprolactonpolyester; Mn 1200 | 1200 |
| **M20** | **Y20** n-Butanolgestarteter epsilon-Caprolactonpolyester; Mn 600 | 600 |
| **M21** | **Y21** n-Butanolgestarteter epsilon-Caprolactonpolyester; Mn 1200 | 1200 |
| **M22** | **Y22** Butanolgestarteter PO-Polyether; Mn 1100 | 1100 |
| **M23** | **Y23** iso-Decanolgestarteter Polyester aus epsilon-Caprolacton und delta-Valerolacton im molaren Verhältnis 3:1; Mn = 2000 | 2000 |
| **M24** | **Y24** B11/50-gestarteter epsilon -Caprolactonpolyester; Mn = 2000 | 2000 |
| **M25** | **Y25** MPEG 350-gestarteter epsilon -Caprolactonpolyester; Mn 900 | 900 |
| **M26** | **Y26** MPEG 350-gestarteter Polyester aus epsilon -Caprolacton und delta-Valerolacton im molaren Verhältnis 3:1; Mn 950 | 950 |
| **M27** | **Y27** MPEG 500-gestarteter Polyester aus epsilon -Caprolacton und delta-Valerolacton im molaren Verhältnis 3:1; Mn 1100 | 1100 |
| **M28** | **Y28** MPEG 750-gestarteter Polyester aus epsilon -Caprolacton und delta-Valerolacton im molaren Verhältnis 3:1; Mn = 1400 | 1400 |
| **M29** | **Y29** MPEG 750 | 750 |
| **M30** | **Y30** epsilon -Caprolactonpolyester Mn 1600, gestartet mit einem methanolgestarteten EO/PO-Polyether (EO:PO 3:1); Mn 1400 | 1600 |
| **M31** | **Y31** Butanolgestarteter EO/PO-Polyether (EO:PO 1:1); Mn 3170 | 3170 |
| **M32** | **Y32** Butanolgestarteter EO/PO-Polyether (EO:PO 1:1); Mn 2540 | 2540 |
| **M33** | **Y33** Butanolgestarteter PO-Polyether; Mn 2240 | 2240 |
| **M34** | **Y34** Butanolgestarteter Butylenoxid-Polyether; Mn 960 | 960 |
| **M35** | **Y35** Alpha,omega-Dihydroxyfunktionelles Hydroxypropyl-polydimethylsiloxa;, Mn 1800 | 1800 |
| **M36** | **Y36**, Dihydroxyfunktioneller epsilon-Caprolactonpolyester Mn 2800, gestartet mit einem alpha,omega-dihydroxyfunktionellen Hydroxypropyl-polydimethylsiloxan; Mn 900 | 2800 |
| **M37** | **Y37** Oleylalkohol | 268 |
| **M38** | **Y38** Monophenylglykol | 138 |
| **M39** | **Y39** Isotridecylalohol | 200 |

(fortgesetzt)

| Urethan der Formel (III) | Alkohol Y-$(OH)_q$ | Menge X in [g] |
|---|---|---|
| **M40** | **Y40** n-Decanol | 158 |
| **M41** | **Y41** Isodecanol | 158 |
| **M42** | **Y42** Benzylalkohol | 108 |
| **M43** | **Y43** Cyclohexanol | 100 |
| **M44** | **Y44** Isobutanol | 74 |
| **M45** | **Y45** Polyethylenglykol (dihydroxyfunktionell); Mn 600 | 300 |
| **M46** | **Y46** Polyethylenglykol (dihydroxyfunktionell); Mn 1000 | 500 |
| **M47** | **Y47** Dipropylenglykolmonomethylether | 148 |
| **M48** | **Y48** Butyltriglykol | 206 |
| **M49** | **Y49** iso-Decanolgestarteter Polyester aus epsilon-Caprolacton und delta-Valerolacton im molaren Verhältnis 3:1; Mn 1400 | 1400 |

Herstellung des Polyether-Polyesters **Y4**; Mn 780

350 g MPEG 350 (Methoxypolyethylenglykol, Mn 350), 434 g epsilon-Caprolacton und 1 g DBTL (Dibutylzinndilaurat) werden bei 160 °C zur Reaktion gebracht bis ein Festkörper von > 95 % erreicht ist.
Die OH-Zahl des Reaktionsproduktes beträgt 72 mg KOH/g.

Herstellung eines siloxanhaltigen epsilon-Caprolacton-Polvesters **Y36,** Mn 2800

35 g eines alpha,omega-dihydroxyalkylfunktionellen Dimethylpolysiloxans mit $M_n$ von ca. 900 g/mol werden mit 75 g epsilon-Caprolacton zur Reaktion gebracht. Hierzu lässt man das Gemisch unter Zusatz von 0,035 g DBTL bei 160°C in einer $N_2$-Atmosphäre ca. 8 Stunden reagieren. Die Reaktion ist beendet, wenn ein Festkörpergehalt von > 98 % ist. Das alpha,omega-hydroxyalkylfunktionelle Dimethylpolysiloxan als Startalkohol gewinnt man in bekannter Weise, durch Addition von geeigneten ungesättigten Alkoholen (wie z. B. der, in diesem Beispiel verwendete Allylalkohol) an Dimethylpolysiloxane, die endständige Silaneinheiten tragen.

Allgemeine Vorschrift zur Umsetzung der Urethane **M** der allgemeinen Formel (V) mit Spezies der allgemeinen Formel (IIa) zu urethan- und harnstoffgruppenhaltigen Reaktionsprodukten **MA** enthaltend mindestens eine Spezies der allgemeinen Formel (I) (Tabelle 2):

In einem mit Rührer, Thermometer, Tropftrichter, Rückflusskühler und Stickstoffeinleitungsrohr versehenen Vierhalskolben werden x g Urethan **M** der allgemeinen Formel (V) vorgelegt und unter Rühren und Stickstoffüberleitung auf 80°C erwärmt. Anschließend werden $y^1$ g einer Komponente der allgemeinen Formel (IIa) oder der Mischung von $y^1$ g einer Komponente der allgemeinen Formel (IIa) und $y^2$ g einer Komponente der allgemeinen Formel (III) zugegeben und die Reaktionstemperatur wird auf 120°C angehoben. Es kann zu Trübungen kommen, die sich im Laufe der Umsetzung auflösen. Der Fortschritt der Reaktion wird mittels titrimetischer Bestimmung der NCO-Zahl nach EN ISO 9369 verfolgt. Die Zugabe einer geringen Menge $y^2$ (in g) einer optionalen Komponente der allgemeinen Formel (III) kann auch nach der Hauptreaktion erfolgen, um restliche Mengen an Isocyanat vollständig umzusetzen und besonders lagerstabile Produkte zu erhalten. Gegebenenfalls kann während oder nach der Reaktion mit MPA verdünnt werden.
Die urethan- und harnstoffgruppenhaltigen Reaktionsprodukte enthaltend mindestens eine Spezies der allgemeinen Formel (I) werden nachfolgend fortlaufend mit **MA** bezeichnet.

Tabelle 2: Übersicht der Produkte **MA1** bis **MA60**

| Beispiel | Menge x an Urethan der allgemeinen Formel (V) | Menge $y^1$ einer Komponente der allgemeinen Formel (IIa) | Menge $y^2$ einer optionalen Komponente der allgemeinen Formel (III) | MPA in g | NCO-Zahl | Festkörper in % |
|---|---|---|---|---|---|---|
| **MA1** | 90,1 g **M1** | 10,50 g BGA | 0,2 g TEA | | 0,01 | 99,2% |
| **MA2** | 90,0 g **M8** | 7,65g BGA | 0,2 g TEA | | 0,01 | 99,8% |
| **MA3** | 90,2 g **M9** | 4,96g BGA | 0,2 g TEA | | 0,01 | 99,8% |
| **MA4** | 90,2 g **M4** | 10,48g BGA | 0,2 g TEA | 64,2 g | 0,01 | 60% |
| **MA5** | 90,1 g **M6** | 7,04 g BGA | 0,2 g TEA | 63,8 g | < 0,01 | 61% |
| **MA6** | 90,0 g **M27** | 7,63g BGA | 0,2 g TEA | 64,0 g | 0,01 | 60% |
| **MA7** | 90,3 g **M33** | 3,75g BGA | 0,2 g TEA | | < 0,01 | 99,1% |
| **MA8** | 89,5 g **M19** | 7,03 g BGA | 0,2 g TEA | 64,7 g | < 0,01 | 60% |
| **MA9** | 91,2 g **M1** | 6,10 g 2,6-DAP | 0,2 g DEA | | 0,01 | 99,3% |
| **MA10** | 90,0 g **M8** | 4,44 g 2,6-DAP | 0,2 g DEA | | < 0,01 | 98,1% |
| **MA11** | 90,5 g **M9** | 2,85 g 2,6-DAP | 0,2 g DEA | | 0,01 | 99,2% |
| **MA12** | 90,1 g **M4** | 6,11 g 2,6-DAP | 0,2 g DEA | | 0,01 | 99,8% |
| **MA13** | 90,2 g **M6** | 4,08 g 2,6-DAP, | 0,2 g DEA | | 0,01 | 99,8% |
| **MA14** | 89,7 g **M27** | 4,43 g 2,6-DAP | 0,2 g DEA | | 0,01 | 99,3% |
| **MA15** | 90,1 g **M33** | 2,18 g 2,6-DAP | 0,2 g DEA | | < 0,01 | 98,1% |
| **MA16** | 90,3 g **M19** | 4,08 g 2,6-DAP | 0,2 g DEA | | 0,01 | 99,2% |
| **MA17** | 89,8 g **M1** | 20,91 g BGA | 0,1 g MEA | | 0,01 | 99,8% |
| **MA18** | 90,3 g **M8** | 14,72g BGA | 0,1 g MEA | | 0,01 | 99,8% |
| **MA19** | 90,0 g **M9** | 9,88g BGA | 0,1 g TEA | | 0,01 | 99,3% |
| **MA20** | 90,1 g **M4** | 20,94g BGA | 0,1 g DEEA | | < 0,01 | 98,1% |
| **MA21** | 90,2 g **M6** | 14,01 g BGA | 0,1 g TEA | | 0,01 | 99,2% |
| **MA22** | 89,6 g **M12** | 3,48g BGA | 0,1 g TEA | | 0,01 | 99,8% |
| **MA23** | 90,1 g **M33** | 7,35g BGA | 0,2 g 4MDETA | | 0,01 | 99,8% |
| **MA24** | 90,0 g **M19** | 14,06 g BGA | 0,1 g DMAPA | | 0,01 | 99,3% |
| **MA25** | 90,1 g **M1** | 6,10 g 2,6-DAP | 0,2 g DEA | | < 0,01 | 98,1% |
| **MA26** | 90,1 g **M8** | 4,44 g 2,6-DAP | 0,2 g DEEA | | 0,01 | 99,2% |
| **MA27** | 90,2 g **M9** | 2,85 g 2,6-DAP | 0,2 g DEA | | 0,01 | 99,8% |
| **MA28** | 89,7 g **M4** | 6,11 g 2,6-DAP | 0,2 g TEA | | 0,01 | 99,8% |
| **MA29** | 89,9 g **M6** | 4,08 g 2,6-DAP, | 0,2 g MEA | | 0,01 | 99,3% |
| **MA30** | 90,3 g **M27** | 4,43 g 2,6-DAP | 0,2 g DEA | | < 0,01 | 98,1% |
| **MA31** | 90,1 g **M33** | 2,18 g 2,6-DAP | 0,2 g DEA | | 0,01 | 99,2% |
| **MA32** | 89,6 g **M19** | 4,08 g 2,6-DAP | 0,2 g 4MDETA | | 0,01 | 99,8% |
| **MA33** | 90,0 g **M1** | 12,09 g 2,6-DAP | 0,1 g BzA | | 0,01 | 99,8% |
| **MA34** | 90,2 g **M8** | 8,81 g 2,6-DAP | 0,1 g IPA | | 0,01 | 99,3% |
| **MA35** | 90,1 g **M9** | 5,62 g 2,6-DAP | 0,1 g TEA | | < 0,01 | 98,1% |

(fortgesetzt)

| Beispiel | Menge x an Urethan der allgemeinen Formel (V) | Menge $y^1$ einer Komponente der allgemeinen Formel (IIa) | Menge $y^2$ einer optionalen Komponente der allgemeinen Formel (III) | MPA in g | NCO-Zahl | Festkörper in % |
|---|---|---|---|---|---|---|
| **MA36** | 90,1 g **M4** | 12,05 g 2,6-DAP | 0,1 g TEA | | 0,01 | 99,2% |
| **MA37** | 90,2 g **M6** | 8,04 g 2,6-DAP, | 0,1 g DMAPA | | 0,01 | 99,8% |
| **MA38** | 90,2 g **M27** | 8,80 g 2,6-DAP | 0,1 g DEA | | 0,01 | 99,8% |
| **MA39** | 90,0 g **M33** | 4,35 g 2,6-DAP | 0,1 g MEA | | 0,01 | 99,3% |
| **MA40** | 89,9 g **M19** | 8,12 g 2,6-DAP | 0,1 g DEA | | < 0,01 | 98,1% |
| **MA41** | 90,3 g **M8** | 5,10g AGA | 0,2 g DEA | 95,6g DMSO | 0,01 | 50,2% |
| **MA42** | 90,0 g **M9** | 3,30g AGA | 0,2 g DEA | 91,6g DMSO | 0,01 | 50,8% |
| **MA43** | 90,1 g **M4** | 7,02g AGA | 0,2 g DEA | 95,1g DMSO | 0,01 | 49,8% |
| **MA44** | 90,2 g **M6** | 4,68 g AGA | 0,2 g DEA | 93,6g DMSO | 0,01 | 50,3% |
| **MA45** | 90,0 g **M27** | 5,09g AGA | 0,2 g DEEA | 94,5g DMSO | < 0,01 | 48,1% |
| **MA46** | 89,8 g **M8** | 10,15g AGA | 0,1 g DEA | 98,6g DMSO | 0,01 | 50,2% |
| **MA47** | 90,1 g **M9** | 6,55g AGA | 0,1 g DEA | 96,6g DMSO | 0,01 | 49,8% |
| **MA48** | 90,0 g **M4** | 13,90g AGA | 0,1 g DEA | 113,2g DMSO | <0,01 | 50,1% |
| **MA49** | 90,3 g **M6** | 9,30 g AGA | 0,1 g DEA | 99,0g DMSO | <0,01 | 50,3% |
| **MA50** | 90,0 g **M27** | 10,04g AGA | 0,1 g DEA | 100,6g DMSO | < 0,01 | 49,1% |
| **MA51** | 90,1 g **M4** | 16,97g Guanin | 0,1 g DEEA | | <0,01 | 99,2% |
| **MA52** | 90,0 g **M6** | 11,31 g Guanin | 0,1 g DEA | | 0,01 | 99,8% |
| **MA53** | 90,4 g **M27** | 12,34g Guanin | 0,1 g DEA | | 0,01 | 99,8% |
| **MA54*** | 90,1 g **M9** | 5,35g DMAPA | 0,1 g TEA | | <0,01 | 99,0% |
| **MA55*** | 90,2 g **M9** | 6,55g IPA | 0,1 g TEA | | <0,01 | 99,3% |
| **MA56*** | 90,0 g **M9** | 4,70g DMAE | 0,1 g TEA | | <0,01 | 99,0% |
| **MA57*** | 90,1 g **M9** | 8,40g 4MDETA | | | <0,01 | 99,4% |
| **MA58*** | 90,1 g **M9** | 7,92 g TEA | | | <0,01 | 99,6% |
| **MA59** | 90,1 g **M9** | 6,65g Melamin | | 9,6g NFM | 0,01 | 90,1% |
| **MA60** | 90,3 g **M9** | 6,60g Melamin | 0,1 g GLY | 9,5g NFM | 0,01 | 91,1% |
| * nicht erfindungsgemäß | | | | | | |

Allgemeine Vorschrift zur der Herstellung eines urethan- und harnstofforuppenhaltigen Reaktionsprodukts enthaltend mindestens eine Spezies der allgemeinen Formel (I) aus $R(NCO)_x$ und $Y\text{-}(OH)_q$ (Tabelle 3):

In einem mit Rührer, Thermometer, Rückflusskühler und Stickstoffeinleitungsrohr versehenen Reaktionsgefäß werden x g eines Polyisocyanats $R(NCO)_x$ mit $y^3$ g eines Alkohols $Y\text{-}(OH)_q$ vorgelegt und unter Rühren und Stickstoffüberleitung auf 50°C erwärmt. Nach der Zugabe von 0,008 wt% DBTL bezogen auf die Menge des Polyisocyanats $R(NCO)_x$ wird die Reaktionstemperatur auf 70 °C erhöht. Anschließend werden $y^1$ g einer Spezies der allgemeinen Formel (IIa) zugegeben und die Reaktionstemperatur wird auf 95°C angehoben. Der Fortschritt der Reaktion wird weiterhin mittels titrimetischer Bestimmung der NCO-Zahl nach EN ISO 9369 verfolgt. Zur Vervollständigung der Umsetzung des Polyisocyanats $R(NCO)_x$ oder ggf. zur Einführung weiterer aminischer Haftgruppen werden der Mischung - im Falle des Vorhandenseins von restlichen NCO-Gruppen nach der Umsetzung mit der Spezies der allgemeinen Formel (IIa)- $y^2$ g einer Komponente der allgemeinen Formel (III) zugegeben. Die Reaktion ist beendet, wenn nach titrimetischer Bestimmung der NCO-Zahl nach EN ISO 9369 ein NCO-Wert von <0,01 ermittelt wird. Gegebenenfalls kann während oder nach der Reaktion mit MPA verdünnt werden.

Tabelle 3: Übersicht der Produkte **MA61** bis **MA85**

| Beispiel | Menge x an R $(NCO)_x$ | Menge $y^3$ an $Y\text{-}(OH)_q$ | Menge $y^1$ einer Komponente der allgemeinen Formel (IIa) | Menge $y^2$ einer optionalen Komponente der allgemeinen Formel (III) | MPA in g | NCO-Zahl | Festkörper in % |
|---|---|---|---|---|---|---|---|
| **MA61** | 10,50 g Desmodur HL BA | 13,8g **Y1** | 1,75 g **BGA** | | 17,8 | <0,01 | 50 |
| **MA62** | 10,52 g Desmodur HL BA | 13,9g **Y1** | 1,15 g **AGA** | | 17,7 | <0,01 | 50 |
| **MA64** | 10,51 g Desmodur HL BA | 13,8g **Y1** | 1,00 g **2,6-DAP** | | 17,9 | <0,01 | 50 |
| **MA65** | 17,45 g TDI | 61,1 g **Y18** | 6,15 g **BGA** | 1,06 g TEA | 85,0 | <0,01 | 50 |
| **MA66** | 17,44 g TDI | 57,3 g **Y18** | 4,85 g **2,6-DAP** | | 84,8 | <0,01 | 50 |
| **MA67** | 17,41 g TDI | 60,85 g **Y18** | 4,12 g **AGA** | 1,08 g TEA | 85,7 | <0,01 | 50 |
| **MA68** | 20,1 g Desmodur N 100A | 378,8g **Y12** | 3,75 g **BGA** | 1,0 g DEEA | 403,0g | <0,01 | 50 |
| **MA69** | 20,0g Desmodur N 100A | 377,5g **Y12** | 2,51 g **AGA** | 1,0 g DEEA | 401,7g | <0,01 | 50 |
| **MA70** | 20,1 g Desmodur N 100A | 379,0g **Y12** | 3,02 g **Guanin** | 1,0 g DEEA | 402,9g | <0,01 | 50 |
| **MA71** | 20,2g Desmodur N 100A | 378,0g **Y12** | 2,52 g **Melamin** | | 402,1g | <0,01 | 50 |
| **MA72** | 20,5g Desmodur N 3400 | 81,9g **Y18** | 3,74 g **BGA** | 1,0 g DEEA | 101,6g | <0,01 | 50 |

(fortgesetzt)

| Beispiel | Menge x an R $(NCO)_x$ | Menge $y^3$ an $Y\text{-}(OH)_q$ | Menge $y^1$ einer Komponente der allgemeinen Formel (IIa) | Menge $y^2$ einer optionalen Komponente der allgemeinen Formel (III) | MPA in g | NCO-Zahl | Festkörper in % |
|---|---|---|---|---|---|---|---|
| **MA73** | 20,6g Desmodur N 3400 | 82,1g **Y18** (0,08mol) | 2,18 g **2,6-DAP** | 1,0 g DEEA | 102,2g | <0,01 | 50 |
| **MA74** | 20,5g Desmodur N 3400 | 82,0g **Y18** | 2,51 g **Melamin** | 1,0 g DEEA | 101,8g | <0,01 | 50 |
| **MA75** | 20,4g Desmodur N 3400 | 82,4g **Y18** | 3,01 g **Guanin** | 1,0 g DEEA | 102,0g | <0,01 | 50 |
| **MA76** | 24,15 g Desmodur IL BA | 30,37 g **Y18** | 3,75 g **BGA** | | 34,1 | <0,01 | 50 |
| **MA77** | 24,20 g Desmodur IL BA | 30,40 g **Y18** | 2,50 g **AGA** | | 33,6 | <0,01 | 50 |
| **MA78** | 24,15 g Desmodur IL BA | 30,41 g **Y18** | 2,16 g **2,6-DAP** | | 33,8 | <0,01 | 50 |
| **MA79** | 24,17 g Desmodur IL BA | 30,39 g **Y18** | 2,50 g **Melamin** | | 33,5 | <0,01 | 50 |
| **MA80** | 24,16 g Desmodur IL BA | 41,71 g **Y18** | 1,86 g **BGA** | | 38,3 | <0,01 | 50 |
| **MA81** | 24,15 g Desmodur IL BA | 46,30 g **Y18** | 0,92 g **BGA** | | 48,0 | <0,01 | 50 |
| **MA82** | 24,21 g Desmodur IL BA | 19,31 g **Y18** 7,02 g **Y2** | 3,72 g **BGA** | | 34,1 | <0,01 | 50 |
| **MA83** | 24,12 g Desmodur IL BA | 19,29 g **Y18** 1,52 g **Y45** | 3,75 g **BGA** | | 25,0 | <0,01 | 50 |
| **MA84** | 24,17 g Desmodur IL BA | 19,33 g **Y18** 2,89 g **Y37** | 3,74 g **BGA** | | 26,3 | <0,01 | 50 |
| **MA85*** | 17,71 g TDI | 61,23g **Y49** | 20,05 g Jeffcat DPA | | 99,3 | 0,01 | 50 |
| * nicht erfindungsgemäß | | | | | | | |

Allgemeine Vorschrift zur Quaternisierung (Tabelle 4):

In einem mit Rührer, Thermometer, Tropftrichter, Rückflusskühler und Stickstoffeinleitungsrohr versehenen Vierhalskolben wird die Ausgangsverbindung in 40 g MPA (Methoxypropylacetat) und 40 g Butylglykol sowie $z^1$ g Alkylierungsreagenz 4 h bei 120 °C zur Reaktion gebracht. Der Festkörper wird mit einer 1:1-Mischung von MPA und Butylglykol auf 40% eingestellt.

Tabelle 4: Quaternisierung

| Beispiel | Ausgangsverbindung | $z^1$ g Alkylierungsreagenz |
|---|---|---|
| **MAQ1** | 798,2 g **MA68** | 0,9 g Benzylchlorid |
| **MAQ2** | 205,5 g **MA73** | 1,8 g Grilonit 1814<br>0,8 g Benzoesäure |
| **MAQ3** | 93,8 g **MA32** | 0,3 g Benzylchlorid |
| **MAQ4** | 45,4 g **MA19** | 0,4 g Grilonit 1814<br>0,2 g Benzoesäure |
| **MAQ5*** | 185,0 g **MA85*** | 9,4g Benzylchlorid |

Allgemeine Vorschrift zur Salzbildung (Tabelle 5):

In einem mit Rührer, Thermometer, Tropftrichter, Rückflusskühler und Stickstoffeinleitungsrohr versehenen Vierhalskolben wird die Ausgangsverbindung in 40 g MPA und 35 g Butylglycol mit $z^2$ g Versalzungsreagenz 1 h bei 60 °C gerührt.

**Tabelle 5: Salzbildung**

| Beispiel | Ausgangsverbindung | $z^2$ g Versalzungsreagenz |
|---|---|---|
| **MAS1** | 89,1g **MA3** | 2,6 g Tallölfettsäure |
| **MAS2** | 91,0g **MA3** | 1,0 g Benzoesäure |
| **MAS3** | 87,2g **MA3** | 11,5 g MPEG500-Mono-Phosphorsäureester |
| **MAS4** | 89,8g **MA3** | 10,4 g MPEG500-Mono-Bernsteinsäureester |
| **MAS5** | 85,1g **MA3** | 0,5 g Milchsäure |
| **MAS6** | 95,1g **MA78** | 5,6 g Tallölfettsäure |
| **MAS7** | 94,8 g **MA78** | 2,3 g Benzoesäure |
| **MAS8** | 95,2 g **MA78** | 11,2 g MPEG500-Mono-Phosphorsäureester |
| **MAS9** | 95,0 g **MA78** | 12,3 g MPEG500-Mono-Bernsteinsäureester |
| **MAS10** | 95,6 g **MA78** | 1,6 g Milchsäure |

**Anwendungstechnische Abprüfung**

Verwendung der erfindungsgemäßen urethan- und harnstoffgruppenhaltigen Reaktionsprodukte enthaltend mindestens eine Spezies der allgemeinen Formel (I) als Netz- und Dispergieradditive zur Herstellung von Pigmentkonzentraten und deren Einsatz in Lacksystemen

**Ausgangsstoffe**

| | |
|---|---|
| Paraloid B-66 | *thermoplastisches Acrylatharz,* Hersteller *DOW Chemicals* |
| Vinnol E 15/45 | *Copolymer-Harz auf Basis Vinylchlorid und Vinylacetat,* Hersteller Wacker Chemie |
| NC E 510 | Nitrocellulose, Hersteller Dow Wolff Cellulosics GmbH |

| | |
|---|---|
| Vialkyd AC 433 75% | Alkyd-Harz, Hersteller Allnex |
| Epikote 1001 75% | Epoxyid-Harz auf Bisphenol A-Basis, Hersteller Hexion |
| Aradur 115 X 70 | Polyamidoamin, Hersteller Huntsman |
| Joncryl 500 | Hydroxyfunktionelles Acryl-Harz, Hersteller BASF |
| Laropal A 81 | Aldehyd-Harz, Hersteller BASF |
| Dynapol LH 830 (60%ig) | Polyester-Harz in Solvent Naphtha und Butylglykol, Hersteller Evonik |
| Dynapol 1203 (50%ig) | Nicht-ionisch geschützter Sulfonsäurekatalysator, 50%ig in Xylol, Hersteller Evonik |
| Cymel 303 | Amino-Crosslinker, Hersteller Allnex |
| Nacure 2500 | p-Toluolsulfonsäure, Hersteller King Industries |
| DIDP | Diisodecylphthalat |
| MAK | Methylamylketon, Hersteller Eastman |
| Dowanol PMA | Propylenglykolmethyletheracetat, Hersteller Dow Chemicals |
| Dowanol PM | Propylenglykolmethylether, Hersteller Dow Chemicals |
| Starsol (DBE) | DibasicEster, Hersteller DuPont |
| Butyldiglykolacetat | Butyldiglykolacetat, Hersteller BASF |
| Solvesso 150ND | Aromatische Kohlenwasserstoffe, Fraktion 180 - 193°C, Hersteller: ExxonMobil |
| Aerosil R972 | Hydrophobierte, pyrogene Kieselsäure, Hersteller Evonik |
| Raven 5000 Ultra III | Rußpigment für hohe Jetness, Hersteller Birla Carbon |
| Paliogen Red L3880 HD | Perylen-Rot Pigment, Hersteller BASF |
| Hostaperm RL NF | Violett-Pigment, Hersteller Clariant |
| InkJet Margenta E02 | Pigment für InkJet-Tinten, Hersteller Clariant |
| Novoperm Yellow P-M3R | Isoindolin-Pigment, Hersteller Clariant |
| Nipex 160 IQ | Gasruß mit 20nm Primärpartikelgröße, Hersteller Degussa |
| Bayferrox Rot 130M | Eisenoxid-Rot (P.R. 101), Hersteller Lanxess |
| Heliogen Blue L7101F | Phthalocyanin-Blau (P.B. 15:4), Hersteller BASF |
| Hostaperm Rosa E | Chinacridon-Rot (P.R. 122), Hersteller Clariant |
| Heliogen Grün L8735 | Phthalocyanin-Kupfer, halogeniert (P.G. 7), Hersteller BASF |
| Colour Black FW 200 | Rußpigment (P. Bk. 7), Hersteller Orion |
| Spezialschwarz 100 | Oxidierter Furnance Ruß, Hersteller: Orion Engineered Carbons |
| Tiona 696 | $TiO_2$-Pigment, Hersteller: Cristal |
| BYK 325 | Substratnetzmittel, Hersteller BYK-Chemie |
| BYK 310 | Substratnetzmittel, Hersteller BYK-Chemie |
| BYK 306 | Substratnetzmittel, Hersteller BYK-Chemie |
| BYK-358N | Verlaufmittel, Hersteller BYK-Chemie |
| BYK-057 | Entschäumer-Additiv, Hersteller BYK-Chemie |
| DISPERBYK 170 | Dispergiermittel, Hersteller BYK-Chemie |

## Arbeitsverfahren

### Herstellung der TPA-Pigmentanreibung

Das Anreibeharz Paraloid B-66, Lösemittel, Dispergieradditiv und Pigment wurden in 100mL Glasflaschen so eingewogen, dass 50g Mahlgut erhalten wurden. Anschließend wurden 50g Glasperlen (1 mm) eingewogen.

Zusammensetzung der TPA-Pigmentkonzentrate (Angaben in g)

| | TPA 1 (schwarz) | TPA 2 (rot) | TPA 3 (violett) |
|---|---|---|---|
| Paraloid B-66 (50% in Xylol) | 24,0 | 24,0 | 24,0 |
| Raven Ultra 5000 III | 6,0 | | |
| Paliogen Red L 3880 HD | | 8,0 | |
| Hostaperm RL-NF | | | 5,0 |
| Dispergiermittel (100%/50%) | 4,2 / 8,4 | 2,0 / 4,0 | 2,0 / 4,0 |
| n-Butanol | 5,0 | 5,0 | 5,0 |
| PMA nach Festkörper d. Dispergieradditivs (100%/50%) | | 11,0 / 9,0 | 14,0 / 12,0 |

(fortgesetzt)

| | TPA 1 (schwarz) | TPA 2 (rot) | TPA 3 (violett) |
|---|---|---|---|
| Butylacetat nach Festkörper d. Dispergieradditivs (100%/50%) | 10,8 / 6,6 | | |
| Gesamtpigmentgehalt (%) | 12 | 16 | 10 |
| Dispergiermittel (% s.o.p.) | 70 | 25 | 40 |

Mahlbedingungen:

Gerät: Lau Disperser DAS 200
Dispergierzeit: 300 min, Kühlleistung Stufe 3
Verhältnis Mahlgut zu Glasperlen (1 mm Durchmesser): 1 : 1 (Gewichtsteile)

Bewertung der Mahlgutviskosität der TPA-Anreibungen

Die Mahlgutviskosität der TPA-Anreibungen wurde ermittelt mit einem Rheological Stresstech Rheometer (Platte/Kegel, 25mm, 1 °) bei 23°C.

Mahlgutviskositäten

| | **TPA 1 (schwarz)** | | | **TPA 2 (rot)** | | | **TPA 3 (violett)** | | |
|---|---|---|---|---|---|---|---|---|---|
| | Viskosität in mPa * s | | | | | | | | |
| | 1/s | 10/s | 100/s | 1/s | 10/s | 100/s | 1/s | 10/s | 100/s |
| **MA56*** | 45,890 | 7,727 | 1,828 | 15,370 | 2,876 | 0,814 | 42,110 | 4,786 | 1,085 |
| **MA57*** | 48,380 | 7,022 | 1,663 | 15,440 | 2,879 | 0,864 | 38,460 | 4,680 | 1,005 |
| **MA58*** | 51,610 | 7,534 | 1,774 | 22,470 | 3,808 | 1,011 | 57,960 | 7,762 | 1,432 |
| **MA22** | 3,326 | 2,455 | 1,080 | 4,786 | 1,497 | 0,644 | 41,590 | 5,476 | 1,129 |
| **MA59** | 15,180 | 2,409 | 0,834 | 3,727 | 0,942 | 0,431 | 24,370 | 3,621 | 0,732 |
| **MA19** | 1,778 | 0,759 | 0,487 | 7,213 | 1,536 | 0,575 | 26,730 | 2,820 | 0,705 |
| * nicht erfindungsgemäß | | | | | | | | | |

Die erfindungsgemäßen Dispergieradditive **MA19, MA22** und MA**59** wirken stark viskositätsreduzierend im Vergleich zum Stand der Technik **MA56*** bis **MA58*** bei TPA-Anreibungen von 3 verschieden Pigmenten, was sich schon bei niedrigen Scherraten bemerkbar macht.

**Herstellung des TPA-basierten Auflacksystems**

Paraloid B-66, Lösemittel und Verlaufadditiv wurden in einem 2,5L PE-Eimer eingewogen und mit einem Dispermat CV (Zahnscheibe 65mm) bei 2000rpm 5min homogenisiert.

Zusammensetzung des TPA-Auflacksystems (Angaben in g)

| TPA-Klarlack | Einwaage in g |
|---|---|
| Paraloid B-66 (50% in Xylol) | 700 |
| DIDP | 20 |
| Xylol | 218 |
| PMA | 60 |
| BYK 306 | 2 |

**Herstellung der pigmentierten TPA-Auflacksysteme**

In einem PE-Becher wurden das TPA-Auflacksystem und die TPA-basierte Pigmentanreibung eingewogen und per Spatel vermischt. Anschließend wurden alle finalen TPA-Auflacksysteme für 10min in einem ANDALOK-Shaker homogenisiert.

Zusammensetzung der pigmentierten TPA-Auflacksysteme (Angaben in g)

| TPA-B1 | TPA-B1 | TPA-B2 |
|---|---|---|
| TPA-Auflacksystem | 27,0 | 26,0 |
| TPA 1 (rot) | 3,0 | |
| TPA 2 (violett) | | 4,0 |
| Pigmentgehalt (%) | 1,6 | 1,3 |

**Applikation und Auswertung der pigmentierten TPA-Auflacksysteme**

Die pigmentierten TPA-Auflacksysteme wurden auf PE-Folie aufgerakelt (50 μm bzw. 100 μm) und 24h bei 22°C getrocknet. Anschließend wurden der Glanzschleier und der Glanz mit einem *BYKmicro haze plus* Instrument im Winkel von 20° gemessen. Dabei sind jeweils niedrige Werte für den Glanzschleier und hohe Werte für den Glanz als positive Ergebnisse zu bewerten. Außerdem wurde die optische Farbstärke und Transparenz der Aufzüge auf PE-Folie in der Durchsicht mit den Noten 1 (hervorragend) bis 5 (nicht akzeptabel) bewertet.

| **TPA-B1 (rot)** | | | |
|---|---|---|---|
| **Dispergieradditiv im Mahlgut** | **Vollton** 100μm PE-Folie **Glanzschleier** | **Vollton** 100μm PE-Folie **Glanz 20°** | **Vollton** 100μm PE-Folie **Transparenz/Farbstärke** |
| **MAQ5*** | 87 | 60 | 5 |
| **MA55*** | 47 | 67 | 4 |
| **MA58*** | 20 | 73 | 4 |
| **MA22** | 11 | 78 | 2 |
| **MA59** | 18 | 77 | 1-2 |
| **MA47** | 12 | 78 | 2 |
| **TPA-B2 (violett)** | | | |
| **Dispergieradditiv** | **Vollton** | **Vollton** | **Vollton** |
| **im Mahlgut** | 100μm PE-Folie | 100μm PE-Folie | 50μm PE-Folie |
| | **Glanzschleier** | **Glanz 20°** | **Transparenz/Farbstärke** |
| **MAQ5*** | 131 | 52 | 5 |
| **MA55*** | 50 | 71 | 4 |
| **MA22** | 38 | 74 | 3 |
| **MA59** | 36 | 75 | 1-2 |
| **MA47** | 45 | 72 | 3 |
| * nicht erfindungsgemäß | | | |

Die erfindungsgemäßen Dispergieradditive **MA22, MA59** und **MA47** zeigen einen geringeren Glanzschleier, bessere Glanzwerte und eine höhere Transparenz und Farbstärke im Vergleich zum Stand der Technik **MAQ5*, MA55*** und **MA58*** für TPA-basierte Lacksysteme.

**Herstellung der Laropal A81-Pigmentanreibung**

Das Anreibeharz Laropal A81 (60 Teile) wurde mit PMA (40 Teile) in einem 2,5L PE-Eimer eingewogen und mittels eines Dispermaten CV (65mm Zahnscheibe) bei 2000 rpm für 30min homogenisiert. Anschließend wurden die Lösung des Anreibeharzes Lösemittel, Dispergieradditiv und Pigment in 100mL Glasflaschen so eingewogen, dass 50g Mahlgut erhalten wurden. Anschließend wurden 50g Glasperlen (1 mm) eingewogen.

Zusammensetzung der Laropal-A81-Pigmentkonzentrate (Angaben in g)

| | **LA 1 (schwarz)** | **LA 2 (rosa)** | **LA 3 (blau)** | **LA 4 (rot)** |
|---|---|---|---|---|
| Laropal A 81 (60%ig in PMA) | 8,7 | 20,4 | 21,9 | 9,7 |
| Colour Black FW 200 | 4,0 | | | |
| Hostaperm Rosa E | | 7,0 | | |
| Heliogen Blau 7101 F | | | 7,5 | |
| Bayferrox Rot 130M | | | | 25,0 |
| Dispergieradditiv (100%/50%) | 2,8/5,6 | 1,8/3,6 | 1,9/3,8 | 2,5/5,0 |
| PMA | 34,6 | 20,9 | 18,8 | 12,8 |
| Gesamtpigmentgehalt (%) | 8 | 14 | 15 | 50 |
| Dispergieradditiv (% s.o.p.) | 70 | 25 | 25 | 5 |

Mahlbedingungen:

Gerät: Lau Disperser DAS 200
Mahlzeit: 300 min, Kühlleistung Stufe 3
Verhältnis Mahlgut zu Glasperlen (1 mm Durchmesser): 1 : 1 (Gewichtsteile)

Bewertung der Mahlgutviskosität und Trübung der Laropal-A81-Anreibungen

Die Mahlgutviskosität der Laropal A81-Anreibungen wurde ermittelt mit einem Rheological Stresstech Rheometer (Platte/Kegel, 25mm, 1 °) bei 23 °C.

Mahlgutviskositäten

| | **LA 1 (schwarz)** | | | **LA 2 (rosa)** | | | **LA 3 (blau)** | | |
|---|---|---|---|---|---|---|---|---|---|
| | Viskosität in mPa * s | | | Viskosität in mPa * s | | | Viskosität in mPa * s | | |
| | 1/s | 10/s | 100/s | 1/s | 10/s | 100/s | 1/s | 10/s | 100/s |
| **MA54*** | 44 | 13 | 10 | 34870 | 3934 | 794 | 9457 | 1017 | 214 |
| **MA57*** | 185 | 86 | 34 | 28460 | 3656 | 939 | 10450 | 1474 | 228 |
| **MA58*** | 232 | 25 | 9 | 33660 | 3399 | 995 | 10720 | 815 | 247 |
| **MA22** | 27 | 19 | 15 | 20530 | 2716 | 491 | 5370 | 745 | 181 |
| **MA59** | 60 | 10 | 7 | 6238 | 962 | 230 | 3413 | 537 | 142 |
| **MA35** | 47 | 13 | 9 | 23100 | 2782 | 619 | 1345 | 379 | 96 |
| * nicht erfindungsgemäß | | | | | | | | | |

Die erfindungsgemäßen Dispergieradditive **MA22, MA35** und **MA59** wirken stark viskositätsreduzierend im Vergleich zum Stand der Technik **MA54*, MA57*** und **MA58*** bei Laropal A81-Anreibungen von 3 verschieden Pigmenten, was sich schon bei niedrigen Scherraten bemerkbar macht.

**Herstellung des Nitrocellulose-basierten Klarlacks NC1**

Bindemittel, Lösemittel und Substratnetzmittel wurden in einem 2,5L PE-Eimer eingewogen und mit einem Dispermat CV (Zahnscheibe 65mm) bei 2000rpm 5min homogenisiert.

Zusammensetzung des Nitrocellulose-basierten Klarlacks **NC1** (Angaben in g)

| **Nitrocellulose-basierter Klarlack NC1** | **Einwaage in g** |
|---|---|
| Vialkyd AC 433 75% | 167,0 |
| NC - Chips E 510 | 122,0 |
| DIBP | 8,0 |
| Ethylacetat | 154,0 |
| Toluol | 154,0 |
| Isopropanol | 86,0 |
| Butylacetat | 267,0 |
| Xylol | 40,0 |
| BYK-306 | 2,0 |

**Herstellung des Einbrennlacks JC1**

Bindemittel, Lösemittel und Substratnetzmittel wurden in einem 2,5L PE-Eimer eingewogen und mit einem Dispermat CV (Zahnscheibe 65mm) bei 2000rpm 5min homogenisiert.

Zusammensetzung des Einbrennlacks **JC1** (Angaben in g)

| **Einbrennlack JC1** | **Einwaage in g** |
|---|---|
| Joncryl 500 | 576,0 |
| Cymel 303 | 198,0 |
| Butanol | 80,0 |
| MAK | 130,0 |
| BYK-310 | 3,0 |
| Nacure 2500 | 13,0 |

**Herstellung des 2K Epoxid-Lacks 2KE1**

Die Epoxidkomponente und die Aminkomponente des 2K-Lacks werden getrennt voneinander in einem 2,5L PE-Eimer bzw. einem 800mL PE-Becher eingewogen und mit einem Dispermat CV (Zahnscheibe 65mm) bei 2000rpm 5min homogenisiert.

Zusammensetzung des 2K Epoxid-Lacks **2KE1** (Angaben in g)

| **2K Epoxid-Lack 2KE1** | **Einwaage in g** |
|---|---|
| Epoxid-Komponente | |
| Epikote 1001 75% | 600,0 |
| Xylol | 170,0 |
| Dowanol PM | 128,0 |
| Butanol | 100,0 |

(fortgesetzt)

| **2K Epoxid-Lack 2KE1** | **Einwaage in g** |
|---|---|
| Epoxid-Komponente | |
| BYK-325 | 2,0 |
| Amin-Komponente | |
| Aradur 115 X 70 | 355,0 |
| Xylol | 60,0 |
| Dowanol PM | 40,0 |
| Butanol | 45,0 |

**Herstellung verschiedener Lacke auf Basis der Laropal A81-Pigmentanreibungen**

In einem PE-Becher wurden die Laropal A81-basierten Pigmentanreibungen und die jeweiligen Klarlacke eingewogen und per Hand mit einem Spatel vermischt. Im Falle des 2K Epoxid-Lacks wurde die Pigmentanreibung vor der Amin-Komponente in die Epoxid-Komponente eingearbeitet. Anschließend wurden alle pigmentierten Lacke für 10min in einem ANDALOK-Shaker homogenisiert.

Zusammensetzung des pigmentierten **NC1-B3** (blau)-Auflacksystems (Angaben in g)

| | **NC1-B3** (blau) |
|---|---|
| **NC1** | 16,0 |
| **LA 3** (blau) | 4,0 |
| Pigmentgehalt (%) | 3,0 |

Zusammensetzung der pigmentierten **JC1-** Auflacksysteme (Angaben in g)

| | **JC1-B1** (schwarz) | **JC1-B2** (rosa) | **JC1-B3** (blau) |
|---|---|---|---|
| **JC1** | 18,0 | 17,9 | 16,0 |
| **LA 1** (schwarz) | 2,0 | | |
| **LA 2** (rosa) | | 2,1 | |
| **LA 3** (blau) | | | 4,0 |
| Pigmentgehalt (%) | 0,8 | 1,5 | 3,0 |

Zusammensetzung der pigmentierten 2KE1- Auflacksvsteme (Angaben in g)

| | **2KE1-B1** (schwarz) | **2KE1-B4** (rot) |
|---|---|---|
| **2KE1 Epoxid-Komponente** | 12,0 | 12,5 |
| **LA 1** (schwarz) | 2,0 | |
| **LA 4** (rot) | | 1,2 |
| **2KE1 Amin-Komponente** | 6,0 | 6,3 |
| Pigmentgehalt (%) | 0,8 | 3,0 |

**Applikation und Auswertung des pigmentierten Nitrocelluloselacks NC1-B3** (blau)

Der pigmentierte Nitrocelluloselack **NC1-B3** (blau) wurde auf PE-Folie aufgerakelt (50 μm) und 24h bei 22°C

getrocknet. Anschließend wurde die optische Transparenz und die Farbstärke der Aufzüge auf PE-Folie in der Durchsicht mit den Noten 1 (hervorragend) bis 5 (nicht akzeptabel) bewertet. Die farbmetrische Auswertung der Aufzüge wurde mit einem *BYK-Gardner color guide D65/10°* im CIELab Farbraum (L, a, b) durchgeführt.

| | | |
|---|---|---|
| L 100 = weiß | - a = grünlich | - b = bläulich |
| L 0 = schwarz | + a = rötlich | + b = gelblich |

Vergleich der NC-basierten blauen Aufzüge **NC1-B3** (blau)

| Synthese-Name | Transparenz / Farbstärke | L | a | b |
|---|---|---|---|---|
| **MAQ5*** | 5 | 41,0 | -33,5 | -42,7 |
| **MA54*** | 2,5 | 37,4 | -30,0 | -42,3 |
| **MA56*** | 2,5 | 36,8 | -29,6 | -42,1 |
| **MA57*** | 3 | 36,8 | -29,6 | -42,0 |
| **MA58*** | 3 | 36,7 | -29,5 | -42,0 |
| **MA22** | 1,5 | 37,3 | -28,3 | -42,8 |
| **MA59** | 1 | 37,6 | -28,4 | -43,1 |
| **MA47** | 1,5 | 36,3 | -28,4 | -42,8 |

Besonders hervorzuheben ist hierbei, dass betragsmäßig kleinere a-Werte auf eine bessere Dispergierung des blauen Pigments hindeuten und betragsmäßig größere, negative b-Werte auf einen tieferen Blau-Eindruck verweisen. Diesen Trend zeigen die erfindungsgemäßen Beispiele **MA22**, **MA59** und **MA47** im Vergleich zum Stand der Technik.

**Applikation und Auswertung der pigmentierten Einbrennlacke JC1-B1 bis JC1-B3**

Die pigmentierten Einbrennlacke **JC1-B1** bis **JC1-B3** wurden auf PE-Folie aufgerakelt (50 µm), 15min bei 22°C abgelüftet und 20min bei 150°C eingebrannt. Anschließend wurden Glanzschleier und Glanz mit einem *BYK micro haze plus* Instrument im Winkel von 20° gemessen. Dabei sind jeweils niedrige Werte für den Glanzschleier und hohe Werte für den Glanz als positive Ergebnisse zu bewerten. Außerdem wurde die optische Transparenz und die Farbstärke der Aufzüge auf PE-Folie in der Durchsicht mit den Noten 1 (hervorragend) bis 5 (nicht akzeptabel) bewertet.

Vergleich der schwarzen Einbrennlacke **JC1-B1** (schwarz)

| Synthese-Name | Glanz 20° | Glanzschleier | Transparenz / Farbstärke |
|---|---|---|---|
| **MAQ5*** | 105 | 14 | 3 |
| **MA54*** | 106 | 11 | 4 |
| **MA55*** | 106 | 12 | 2 |
| **MA56*** | 105 | 10 | 5 |
| **MA57*** | 103 | 24 | 3,5 |
| **MA22** | 106 | 10 | 1 |
| **MA59** | 105 | 14 | 1 |
| **MA19** | 106 | 10 | 1 |
| **MA47** | 106 | 10 | 1 |
| **MA35** | 106 | 10 | 1 |

Vergleich der rosa-farbenen Einbrennlacke **JC1-B2** (rosa)

| Synthese-Name | Glanz 20° | Transparenz / Farbstärke |
|---|---|---|
| **MAQ5*** | 111 | 5 |
| **MA55*** | 113 | 4 |
| **MA57*** | 113 | 4 |
| **MA58*** | 113 | 4 |
| **MA22** | 114 | 3 |
| **MA59** | 117 | 1,5 |
| **MA35** | 114 | 3 |

Vergleich der blauen Einbrennlacke **JC1-B3** (blau)

| Synthese-Name | Glanz 20° | Glanzschleier | Transparenz / Farbstärke |
|---|---|---|---|
| **MAQ5*** | 107 | 31 | 3,5 |
| **MA54*** | 115 | 21 | 4 |
| **MA56*** | 115 | 21 | 4 |
| **MA57*** | 112 | 38 | 3 |
| **MA58*** | 114 | 27 | 3,5 |
| **MA22** | 119 | 16 | 2 |
| **MA59** | 118 | 18 | 1 |
| **MA47** | 117 | 18 | 2 |

**Applikation und Auswertung der pigmentierten 2K Epoxid-Lacke 2KE1-B1 (schwarz) und 2KE1-B4 (rot)**

Der pigmentierte 2K Epoxid-Lack **2KE1-B1** wurde auf PE-Folie aufgerakelt (50 μm) und 24h bei 22°C getrocknet. Die Formulierung **2KE1-B4** wurde auf eine PE-Folie aufgegossen und anschließend ebenfalls 24h bei 22°C getrocknet. Anschließend wurden Glanzschleier und Glanz mit einem *BYK micro haze plus* Instrument im Winkel von 20° gemessen. Dabei sind jeweils niedrige Werte für den Glanzschleier und hohe Werte für den Glanz als positive Ergebnisse zu bewerten. Außerdem wurde die optische Transparenz und die Farbstärke der Aufzüge auf PE-Folie in der Durchsicht mit den Noten 1 (hervorragend) bis 5 (nicht akzeptabel) bewertet.

Vergleich der schwarzen 2K Epoxid-Lacke **2KE1-B1** (schwarz)

| Synthese-Name | Glanz 20° | Glanzschleier | Transparenz / Farbstärke |
|---|---|---|---|
| **MA54*** | 101 | 13,8 | 4 |
| **MA55*** | 102 | 10 | 3,5 |
| **MA56*** | 101 | 10,9 | 3 |
| **MA57*** | 100 | 12,6 | 3 |
| **MA58*** | 100 | 13 | 3 |
| **MA22** | 104 | 12,6 | 2 |
| **MA59** | 106 | 10 | 2 |
| **MA19** | 102 | 10 | 2 |

Vergleich der roten 2K Epoxid-Lacke **2KE1-B4** (rot)

| Synthese-Name | Glanz 20° | Glanzschleier | Transparenz / Farbstärke |
|---|---|---|---|
| **MAQ5*** | 101 | 15,2 | 3 |
| **MA54*** | 101 | 16,4 | 3,5 |
| **MA55*** | 101 | 11,9 | 4 |
| **MA57*** | 100 | 19,6 | 3 |
| **MA22** | 102 | 10 | 2,5 |
| **MA59** | 101 | 13,8 | 2,5 |
| **MA19** | 101 | 15,2 | 2 |
| **MA35** | 102 | 10 | 3 |

**Anwendungsbeispiel zu den erfindungsgemäßen Dispergieradditiven in Polyester-Einbrenn-Lacken mit organischen und anorganischen Pigmenten**

**Herstellung der roten Pigmentkonzentrate PKR1 bis PKR5**

Die Komponenten der Pigmentkonzentrate **PKR1** bis **PKR5** auf Basis des anorganischen Rotpigments BAYFERROX rot 130M wurden jeweils in einen PE-Becher eingewogen und mittels eines Dispermaten CV mit Zahnscheibe bei 18 m/s Umdrehungsgeschwindigkeit für 30min bei 40°C dispergiert.

Zusammensetzung der roten Pigmentkonzentrate

| | PKR1 | PKR2 | PKR3 | PKR4 | PKR5 |
|---|---|---|---|---|---|
| Dynapol LH 830 (60%ig) | 20,0 | 20,0 | 20,0 | 20,0 | 20,0 |
| Methoxypropylacetat | 3,5 | 7,2 | 7,2 | 7,2 | 7,2 |
| DISPERBYK-170* (30%ig) | 15,0 | | | | |
| **MAS6** (40%ig) | | 11,3 | | | |
| **MAS8** (40%ig) | | | 11,3 | | |
| **MAS9** (40%ig) | | | | 11,3 | |
| **MAQ5*** (40%ig) | | | | | 11,3 |
| Starsol (DBE) | 1,0 | 1,0 | 1,0 | 1,0 | 1,0 |
| Aerosil R972 | 0,5 | 0,5 | 0,5 | 0,5 | 0,5 |
| Bayferrox rot 130M | 60,0 | 60,0 | 60,0 | 60,0 | 60,0 |
| | **100,0** | **100,0** | **100,0** | **100,0** | **100,0** |

**Herstellung der grünen Pigmentkonzentrate PKG1 bis PKG5**

Die Komponenten der Pigmentkonzentrate **PKG1** bis **PKG5** auf Basis Heliogen Grün L8735 wurden jeweils in einen PE-Becher eingewogen und mittels eines Dispermaten CV mit Zahnscheibe bei 23 m/s Umdrehungsgeschwindigkeit für 40min bei 40°C dispergiert.

Zusammensetzung der grünen Pigmentkonzentrate

| | PKG1 | PKG2 | PKG3 | PKG4 | PKG5 |
|---|---|---|---|---|---|
| Dynapol LH 830 (60%ig) | 56,0 | 56,0 | 56,0 | 56,0 | 56,0 |
| Methoxypropylacetat | 5,0 | 7,6 | 7,6 | 7,6 | 7,6 |
| DISPERBYK-170* (30%ig) | 10,4 | | | | |

(fortgesetzt)

| | PKG1 | PKG2 | PKG3 | PKG4 | PKG5 |
|---|---|---|---|---|---|
| **MAS6** (40%ig) | | 7,8 | | | |
| **MAS8** (40%ig) | | | 7,8 | | |
| **MAS9** (40%ig) | | | | 7,8 | |
| **MAQ5*** (40%ig) | | | | | 7,8 |
| Starsol (DBE) | 13,0 | 13,0 | 13,0 | 13,0 | 13,0 |
| Heliogen Grün L8735 | 15,6 | 15,6 | 15,6 | 15,6 | 15,6 |
| | **100,0** | **100,0** | **100,0** | **100,0** | **100,0** |

**Herstellung der schwarzen Pigmentkonzentrate PKS1 bis PKS5**

Die Komponenten der Pigmentkonzentrate **PKS1** bis **PKS5** auf Basis Spezialschwarz 100 wurden jeweils in einen PE-Becher eingewogen und mittels eines Dispermaten CV mit Zahnscheibe bei 23 m/s Umdrehungsgeschwindigkeit für 60min bei 40°C dispergiert. Anschließend wurden die schwarzen Pigmentanreibungen mit 11,7g Dynapol LH 830 (60%ig) und 5,0g Butyldiglykolacetat zu den fertigen Pigmentkonzentraten homogenisiert.

Zusammensetzung der schwarzen Pigmentkonzentrate

| | PKS1 | PKS2 | PKS3 | PKS4 | PKS5 |
|---|---|---|---|---|---|
| Dynapol LH 830 (60%ig) | 44,1 | 44,1 | 44,1 | 44,1 | 44,1 |
| Methoxypropylacetat | 5,0 | 8,0 | 8,0 | 8,0 | 8,0 |
| **DISPERBYK-170*** (30%ig) | 12,0 | | | | |
| **MAS6** (40%ig) | | 9,0 | | | |
| **MAS8** (40%ig) | | | 9,0 | | |
| **MAS9** (40%ig) | | | | 9,0 | |
| **MAQ5*** (40%ig) | | | | | 9,0 |
| Starsol (DBE) | 10,2 | 10,2 | 10,2 | 10,2 | 10,2 |
| Spezialschwarz 100 | 12,0 | 12,0 | 12,0 | 12,0 | 12,0 |
| *Dispergierung: Dispermat CV, 23 m/s, 60 Minuten, 40 °C* | | | | | |
| Dynapol LH 830 (60%ig) | 11,7 | 11,7 | 11,7 | 11,7 | 11,7 |
| Butyldiglykolacetat | 5,0 | 5,0 | 5,0 | 5,0 | 5,0 |
| | **100,0** | **100,0** | **100,0** | **100,0** | **100,0** |

**Viskositätsmessung an den Pigmentkonzentraten**

Die Pigmentkonzentrate werden mittels Rotationsviskosimeter (*Stress Tech Instrument*, Kegel-Platte-Geometrie, Kegeldurchmesser 2,5cm, Kegelwinkel 1°, Temperatur 21 °C) bei verschiedenen Scherraten ($1s^{-1}$, $10s^{-1}$, $100s^{-1}$) vermessen.

Viskositätsmessung Pigmentkonzentrate **PKR1** bis **PKR5** auf Basis Bayferrox rot 130M

| | Viskosität [Pa·s] bei $1s^{-1}$ | Viskosität [Pa·s] bei $10s^{-1}$ | Viskosität [Pa·s] bei $100s^{-1}$ |
|---|---|---|---|
| PKR1 (**DISPERBYK-170***) | 21,02 | 4,98 | 3,86 |
| PKR2 (**MAS6**) | 15,77 | 4,21 | 3,22 |
| PKR3 (**MAS8**) | 10,70 | 3,11 | 1,68 |

(fortgesetzt)

| | Viskosität [Pa·s] bei $1s^{-1}$ | Viskosität [Pa·s] bei $10s^{-1}$ | Viskosität [Pa·s] bei $100s^{-1}$ |
|---|---|---|---|
| PKR4 (**MAS9**) | 11,81 | 3,61 | 2,13 |
| **PKR5** (**MAQ5***) | 19,39 | 4,77 | 3,71 |

Viskositätsmessung Pigmentkonzentrate **PKG1** bis **PKG5** auf Basis Heliogen Grün L8735

| | Viskosität [Pa·s] bei $1s^{-1}$ | Viskosität [Pa·s] bei $10s^{-1}$ | Viskosität [Pa·s] bei $100s^{-1}$ |
|---|---|---|---|
| PKG1 (**DISPERBYK-170***) | 14,72 | 3,03 | 1,21 |
| PKG2 **(MAS6)** | 9,23 | 2,47 | 1,11 |
| PKG3 **(MAS8)** | 7,65 | 2,19 | 0,97 |
| PKG4 **(MAS9)** | 11,54 | 2,89 | 1,19 |
| PKG5 (**MAQ5***) | 18,21 | 4,84 | 1,76 |

Viskositätsmessung Pigmentkonzentrate **PKS1** bis **PKS5** auf Basis Spezialschwarz 100

| | Viskosität [Pa·s] bei $1s^{-1}$ | Viskosität [Pa·s] bei $10s^{-1}$ | Viskosität [Pa·s] bei $100s^{-1}$ |
|---|---|---|---|
| PKS1 (**DISPERBYK-170***) | 1,36 | 0,74 | 0,59 |
| PKS2 **(MAS6)** | 1,08 | 0,54 | 0,46 |
| PKS3 (**MAS8**) | 0,71 | 0,51 | 0,42 |
| PKS4 (**MAS9**) | 0,88 | 0,52 | 0,45 |
| PKS5 (**MAQ5***) | 1,29 | 0,73 | 0,60 |

**Herstellung der weißen Auflacksysteme ASW1 bis ASW5**

Für die Auflackung der hergestellten Pigmentkonzentrate PKR1 bis PKR5, PKGG1 bis PKG5 und PKS1 bis PKS5 wurde eine Formulierung auf Basis DYNAPOL LH 830 als Weißbasis pigmentiert mit Tiona 696 gewählt.

Die Komponenten des Auflacksystems Teil 1 wurden jeweils in großen PE-Bechern eingewogen und mittels eines Dispermaten CV mit Zahnscheibe bei 18 m/s Umdrehungsgeschwindigkeit für 20min bei 40°C dispergiert. Anschließend wurden die Weiß-Anreibungen mit den Komponenten Teil 2 zu den fertigen Auflacksystemen homogenisiert.

**Tabelle 1: Auflacksystem (Weißbasis DYNAPOL LH 830 / CYMEL 303)**

| | **ASW1** | **ASW2** | **ASW3** | **ASW4** | **ASW5** |
|---|---|---|---|---|---|
| **Teil 1** | | | | | |
| Dynapol LH 830 (60%ig) | 132,0 | 132,0 | 132,0 | 132,0 | 132,0 |
| Methoxypropylacetat | 18,8 | 20,3 | 20,3 | 20,3 | 20,3 |
| **DISPERBYK-170*** (30%ig) | 6,0 | | | | |
| **MAS6** (40%ig) | | 4,5 | | | |
| **MAS8** (40%ig) | | | 4,5 | | |
| **MAS9** (40%ig) | | | | 4,5 | |
| **MAQ5*** (40%ig) | | | | | 4,5 |
| Aerosil R972 | 1,2 | 1,2 | 1,2 | 1,2 | 1,2 |
| Tiona 696 | 120,0 | 120,0 | 120,0 | 120,0 | 120,0 |

(fortgesetzt)

| *Dispergierung: Dispermat CV, 18 m/s, 20 Minuten, 40 °C* | | | | | |
|---|---|---|---|---|---|
| **Teil 2** | | | | | |
| Dynapol LH 830 (60%ig) | 68,0 | 68,0 | 68,0 | 68,0 | 68,0 |
| Cymel 303 (>98%ig) | 30,0 | 30,0 | 30,0 | 30,0 | 30,0 |
| Dynapol 1203 (50%ig) | 15,2 | 15,2 | 15,2 | 15,2 | 15,2 |
| BYK-358N | 2,0 | 2,0 | 2,0 | 2,0 | 2,0 |
| BYK-057 | 0,8 | 0,8 | 0,8 | 0,8 | 0,8 |
| Solvesso 150ND | 6,0 | 6,0 | 6,0 | 6,0 | 6,0 |
| | **400,0** | **400,0** | **400,0** | **400,0** | **400,0** |

**Herstellung der finalen Testformulierungen auf Basis Dynapol LH 830**

Es wurden jeweils die Pigmentkonzentrate **PKR1, PKG1** und **PKS1** mit der zugehörigen Weißbasis **ASW1** unter Verwendung des gleichen Dispergieradditivs formuliert. Die finalen Testsysteme **TSRW1** (**PKR1** + **ASW1**), **TSGW1** (**PKG1** + **ASW1**) und **TSSW1** (**PKS1** + **ASW1**) enthalten beispielsweise nur DISPERBYK-170 als Dispergieradditiv als Stand der Technik. Analog gilt das für die übrigen erfindungsgemäßen Beispiele gemäß der untenstehenden Tabelle.

Namensgebung der Testformulierungen auf Basis Dynapol LH 830

| Testsystem | basiert auf Weißbasis | und Pigmentkonzentrat |
|---|---|---|
| TSRW1 | ASW1 | PKR1 |
| TSGW1 | ASW1 | PKG1 |
| TSSW1 | ASW1 | PKS1 |
| TSRW2 | ASW2 | PKR2 |
| TSGW2 | ASW2 | PKG2 |
| TSSW2 | ASW2 | PKS2 |
| TSRW3 | ASW3 | PKR3 |
| TSGW3 | ASW3 | PKG3 |
| TSSW3 | ASW3 | PKS3 |
| TSRW4 | ASW4 | PKR4 |
| TSGW4 | ASW4 | PKG4 |
| TSSW4 | ASW4 | PKS4 |
| TSRW5 | ASW5 | PKR5 |
| TSGW5 | ASW5 | PKG5 |
| TSSW5 | ASW5 | PKS5 |

Formulierung der Testsvsteme auf Basis DISPERBYK 170 (analog bei allen anderen Additiven)

| | **TSRW1** | **TSGW1** | **TSSW1** |
|---|---|---|---|
| Weißbasis **ASW1** | 50,0 | 54,2 | 53,0 |
| Pigmentkonzentrat **PKR1** (Basis Bayferrox rot 130M) | 10,0 | | |
| Pigmentkonzentrat **PKG1** (Basis Heliogen Grün L8735) | | 5,8 | |

(fortgesetzt)

| | **TSRW1** | **TSGW1** | **TSSW1** |
|---|---|---|---|
| Pigmentkonzentrat **PKS1** (Basis Spezialschwarz 100) | | | 7,0 |
| | **60,0** | **60,0** | **60,0** |

Die finalen Testsysteme werden formuliert, indem jeweils Weißbasis und Pigmentkonzentrat zusammen in ein verschließbares Gefäß eingewogen werden. Die Mischung wird für zehn Minuten in einem Skandex-Shaker homogenisiert. Anschließend weder die Lacke mittels Spiralrakel in einer 80μm Nassfilmschichtdicke auf Aluminiumblech appliziert. In einem Coil-Ofen werden die Lacke bei 320°C für 33 Sekunden mit 232°C *peak metal temperature* eingebrannt. Es wird eine Trockenschichtdicke von etwa 18μm erreicht.

Außerdem wird ein Rubout-Test durchgeführt, um die Farbtondifferenz (ΔE) zwischen geriebener und ungeriebener Fläche innerhalb des Rub zu ermitteln. Hierzu wird ein Teil der am Skandex-Shaker homogenisierten finalen Testsysteme erneut mittels Spiralrakel in einer 80μm Nassfilmschichtdicke auf Aluminiumblech appliziert. Anschließend wird jeweils ein Teil des applizierten Lackes mit dem Finger in horizontaler Richtung gerieben (geschert). Anschließend werden die Lacke in einem Coil-Ofen bei 320°C für 33 Sekunden mit 232°C *peak metal temperature* eingebrannt. Nach dem Abkühlen wird die Farbtondifferenz (ΔE) zwischen geriebener (gescherter) und ungeriebener Fläche mit einem *BYK spectro-guide sphere* koloristisch vermessen. Eine geringe Farbtondifferenz ΔE weist darauf hin, dass jeweils beide Pigmente (Weiß und der jeweilige Farbton) gleichmäßig stabilisiert sind und kein Ausschwimmen beobachtet wird.

Farbtondifferenz (ΔE) der finalen Testsysteme (Rubout-Test)

| | ΔETSRW1-5 Bayferrox rot 130M | ΔE TSGW1-5 Heliogen Grün L8735 | ΔE TSSW1-5 Spezialschwarz 100 |
|---|---|---|---|
| **DISPERBYK-170*** (30%ig) | 3,6 | 0,9 | 1,4 |
| **MAS6** (40%ig) | 1,8 | 0,5 | 1,1 |
| **MAS8** (40%ig) | 1,5 | 0,7 | 0,9 |
| **MAS9** (40%ig) | 1,4 | 0,7 | 0,8 |
| **MAQ5*** (40%ig) | 4,0 | 0,9 | 2,5 |

**Glanzmessung an den finalen Testsystemen**

Für die auf Aluminiumplatten applizierten und unter Coil-Bedingungen eingebrannten Testsysteme wird der Glanz im Winkel von 20° mit einem *BYK micro haze plus* gemessen.

Glanzmessung der finalen Testsvsteme im 20°-Winkel

| | TSRW1-5 Bayferrox rot 130M | TSGW1-5 Heliogen Grün L8735 | TSSW1-5 Spezialschwarz 100 |
|---|---|---|---|
| **DISPERBYK-170*** (30%ig) | 55 | 79 | 80 |
| **MAS6** (40%ig) | 76 | 84 | 86 |
| **MAS8** (40%ig) | 75 | 92 | 85 |
| **MAS9** (40%ig) | 72 | 88 | 86 |
| **MAQ5*** (40%ig) | 65 | 66 | 80 |

**Patentansprüche**

1. Urethan- und harnstoffgruppenhaltiges Reaktionsprodukt enthaltend mindestens eine Spezies der allgemeinen Formel (I)

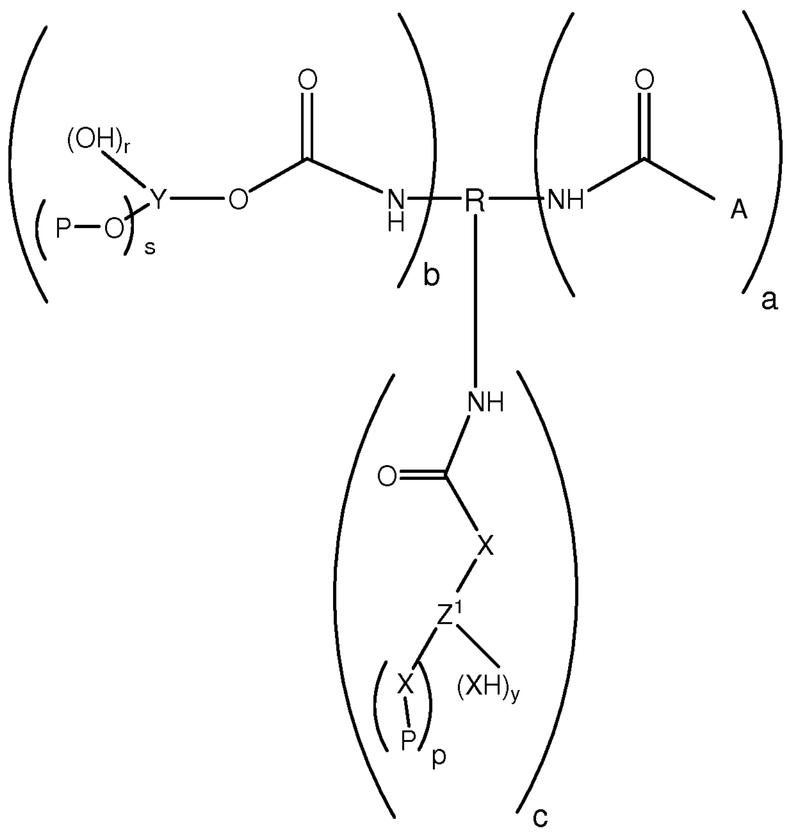

(I)

wobei gilt

$$a + b + c = x,$$

$$r + s = q - 1$$

$$p + y = w - 1$$

x für eine ganze Zahl von 2 bis 10 steht,
a für eine ganze Zahl von 1 bis 9 steht,
b für eine ganze Zahl von 1 bis 9 steht,
c für eine ganze Zahl von 0 bis 8 steht,
q für eine ganze Zahl von 1 bis 5 steht,
r für eine ganze Zahl von 0 bis 4 steht,
s für eine ganze Zahl von 0 bis 4 steht,
w für eine ganze Zahl von 1 bis 10 steht,
p für eine ganze Zahl von 0 bis 9 steht,
y für eine ganze Zahl von 0 bis 9 steht, und

R der organische Rest eines korrespondierenden Polyisocyanats $R(NCO)_x$ ist, R für einen verzweigten oder unverzweigten, gesättigten oder ungesättigten organischen Rest mit 1 bis 150 Kohlenstoffatomen steht und keine freien Isocyanatgruppen enthält,
der Rest oder die Reste Y unabhängig voneinander der/die organische/n Rest/e eines korrespondierenden Alkohols $Y(OH)_q$ ist/sind, wobei q für eine ganze Zahl von 1 bis 5 steht und Y für einen verzweigten oder unverzweigten, gesättigten oder ungesättigten organischen Rest mit 1 bis 1000 Kohlenstoffatomen steht,
die Gruppe oder die Gruppen X unabhängig voneinander für O, NH und/oder $NZ^2$ steht/stehen und die Gruppe oder

die Gruppen XH unabhängig voneinander für eine Hydroxylgruppe OH, eine primäre Aminogruppe $NH_2$ und/oder eine sekundäre Aminogruppe $NHZ^2$ steht/stehen, wobei
der Rest oder die Reste $Z^2$ unabhängig voneinander für einen verzweigten oder unverzweigten, gesättigten oder ungesättigten organischen Rest $G(XH)_j(XP)_i$ steht/stehen, wobei gilt i + j = k,
k für eine ganze Zahl von 0 bis 9 steht,
j für eine ganze Zahl von 0 bis 9 steht,
i für eine ganze Zahl von 0 bis 9 steht, und
der Rest G für einen verzweigten oder unverzweigten, gesättigten oder ungesättigten organischen Rest steht, und der Rest oder die Reste A unabhängig voneinander für einen Rest der allgemeinen Formel (II)

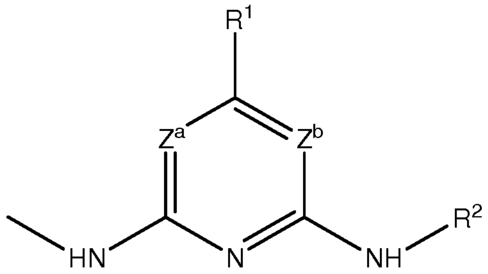

(II)

steht/stehen, wobei

der Rest $R^1$ für H oder $NH_2$ oder einen verzweigten oder unverzweigten, gesättigten oder ungesättigten organischen Rest mit 1 bis 25 Kohlenstoffatomen steht oder für den Fall, dass $Z^b$ gleich C und $R^2$ gleich -CH=N- ist, wobei das Stickstoffatom des Rests $R^2$ direkt an $Z^b$ unter Ausbildung eines 5-Ringes gebunden ist, steht $R^1$ für OH,
die Gruppe $Z^a$ für CH oder N oder $CR^3$ steht, wobei der Rest $R^3$ für einen verzweigten oder unverzweigten, gesättigten oder ungesättigten organischen Rest mit 1 bis 18 Kohlenstoffatomen steht,
die Gruppe $Z^b$ für CH oder N steht oder für den Fall, dass $R^1$ gleich OH ist, steht $Z^b$ für C,
der Rest $R^2$ für H steht oder für den Fall, dass $R^1$ gleich OH ist, steht $R^2$ für -CH=N-, und
der Rest oder die Reste $Z^1$ unabhängig voneinander der organische Rest einer korrespondierenden Spezies der allgemein Formel (III)

$$(HX)_y - Z^1 - (XH)_{p+1} \qquad \text{(III)}$$

ist/sind, wobei
$Z^1$ für einen 1 bis 150 Kohlenstoffatome enthaltenden verzweigten oder unverzweigten, gesättigten oder ungesättigten organischen Rest steht,
der Rest oder die Reste P unabhängig voneinander für einen Rest der allgemeinen Formel (IVa)

$$-(CO) - NH - R - (Q)_{x-1} \qquad \text{(IVa)}$$

steht/stehen, wobei
der Rest oder die Reste Q unabhängig voneinander für einen Rest

$$-NH-(CO)-A$$

oder

$$-NH-(CO)-X-Z^1(XH)_y(X-U)_p$$

oder

$$-NH-(CO)-O-Y(OH)_r(O-U)_s$$

steht/stehen, wobei
der Rest oder die Reste U unabhängig voneinander für einen Rest der allgemeinen Formel (IVb)

$$-(CO) - NH - R - (V)_{x-1} \qquad (IVb)$$

steht/stehen, wobei der Rest oder die Reste V unabhängig voneinander für einen Rest

$$-NH-(CO)-A$$

oder

$$-NH-(CO)-X-Z^1(XH)_y$$

oder

$$-NH-(CO)-O-Y(OH)_r$$

steht/stehen.

**2.** Urethan- und harnstoffgruppenhaltiges Reaktionsprodukt nach Anspruch 1 enthaltend mindestens 40 Gew.-%, bevorzugt mindestens 60 Gew.-%, besonders bevorzugt mindestens 90 Gew.-% einer oder mehrerer Spezies der allgemeinen Formel (I).

**3.** Urethan- und harnstoffgruppenhaltiges Reaktionsprodukt nach Anspruch 1 oder 2, wobei x für eine ganze Zahl von 2 bis 7 steht, a für eine ganze Zahl von 1 bis 6 steht und b für eine ganze Zahl von 1 bis 6 steht.

**4.** Urethan- und harnstoffgruppenhaltiges Reaktionsprodukt nach Anspruch 3, wobei x gleich 2 ist, a gleich 1 ist und b gleich 1 ist.

**5.** Urethan- und harnstoffgruppenhaltiges Reaktionsprodukt nach einem der Ansprüche 1 bis 4, wobei der für den Rest oder die Reste A der allgemeinen Formel (II) gilt, dass
der Rest $R^1$ für H oder einen oder einen verzweigten oder unverzweigten, gesättigten oder ungesättigten organischen Rest mit 1 bis 25 Kohlenstoffatomen steht, bevorzugt für H oder einen verzweigten oder unverzweigten, gesättigten oder ungesättigten organischen Rest mit 1 bis 18 Kohlenstoffatomen,
die Gruppe $Z^a$ für CH oder N, bevorzugt N, steht,
die Gruppe $Z^b$ für CH oder N, bevorzugt N, steht, und
der Rest $R^2$ für H steht.

**6.** Urethan- und harnstoffgruppenhaltiges Reaktionsprodukt nach einem der Ansprüche 1 bis 5, wobei p für eine ganze Zahl 0 bis 3, bevorzugt für 0 oder 1, steht und s für eine ganze Zahl von 0 bis 2, bevorzugt für 0 oder 1, steht.

**7.** Urethan- und harnstoffgruppenhaltiges Reaktionsprodukt nach einem der Ansprüche 1 bis 6, wobei Y mindestens einen Polyetherrest, Polyesterrest, Kohlenwasserstoffrest und/oder Polysiloxanrest enthält.

**8.** Verfahren zur Herstellung eines urethan- und harnstoffgruppenhaltigen Reaktionsprodukts nach einem der Ansprüche 1 bis 7, wobei

i) b Alkohole $Y\text{-}(OH)_q$ mit mindestens einem Polyisocyanat $R(NCO)_x$ unter Ausbildung mindestens eines Urethans der allgemeinen Formel (V)

$$((HO)_{q-1} - Y - O - CO - NH)_b - R - (NCO)_{x-b} \qquad (V)$$

umgesetzt werden, wobei

das Urethan der allgemeinen Formel (V) mindestens eine freie Isocyanatgruppe enthält, wobei q, b, x, Y und R wie in Ansprüchen 1 bis 7 definiert sind, und

ii) mindestens ein Urethan der allgemeinen Formel (V) mit a Spezies der allgemeinen Formel (IIa)

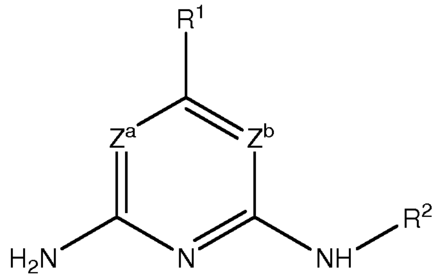

(IIa)

umgesetzt wird, wobei
$R^1$, $Z^a$, $Z^b$ und $R^2$ wie in den Ansprüchen 1 bis 7 definiert sind, und
iii) optional mit c Komponenten der allgemeinen Formel (III)

$$(HX)_y - Z^1 - (XH)_{p+1} \qquad (III),$$

wobei X, $Z^1$, y und p wie in den Ansprüchen 1 bis 7 definiert sind,
zu einem urethan- und harnstoffgruppenhaltigen Reaktionsprodukt enthaltend mindestens eine Spezies der allgemeinen Formel (I)

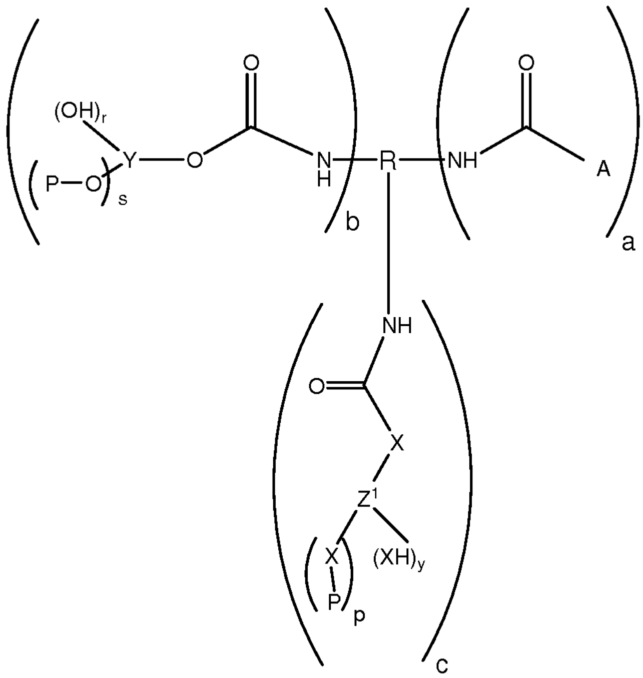

(I)

umgesetzt wird, wobei alle Variablen der allgemeinen Formel (I) wie in den Ansprüchen 1 bis 7 definiert sind.

**9.** Netz- und Dispergiermittel enthaltend ein urethan- und harnstoffgruppenhaltiges Reaktionsprodukt gemäß einem der Ansprüche 1 bis 7 oder hergestellt nach dem Verfahren gemäß Anspruch 8.

**10.** Haftvermittler enthaltend ein urethan- und harnstoffgruppenhaltiges Reaktionsprodukt gemäß einem der Ansprüche 1 bis 7 oder hergestellt nach dem Verfahren gemäß Anspruch 8.

**11.** Zusammensetzung enthaltend ein urethan- und harnstoffgruppenhaltiges Reaktionsprodukt gemäß einem der Ansprüche 1 bis 7 oder hergestellt nach dem Verfahren gemäß Anspruch 8.

**12.** Verwendung eines urethan- und harnstoffgruppenhaltigen Reaktionsprodukts gemäß einem der Ansprüche 1 bis 7 oder hergestellt nach dem Verfahren gemäß Anspruch 8 als Additiv, bevorzugt als Netzmittel oder Dispergiermittel

oder Dispersionsstabilisator oder Haftvermittler oder Viskositätsreduzierer oder Kompatibilisator in Beschichtungen, insbesondere Lacken, Kunststoffen, Pigmentpasten, Dichtstoffen, Kosmetika, Keramik, Klebstoffen, Vergussmassen, Spachtelmassen, Druckfarben und Tinten.

**13.** Urethan- und harnstoffgruppenhaltiges Reaktionsprodukt gemäß Anspruch 1, wobei dieses eine Spezies der allgemeinen Formel (I) gemäß Anspruch 1 ist.

**14.** Urethan- und harnstoffgruppenhaltiges Reaktionsprodukt enthaltend ein oder mehrere Salze und/oder ein oder mehrere Quaternisierungsprodukte der Spezies der allgemeinen Formel (I) gemäß Anspruch 1.

**15.** Urethan- und harnstoffgruppenhaltiges Reaktionsprodukt enthaltend ein oder mehrere Modifikationsprodukte der Spezies allgemeinen Formel (I) gemäß Anspruch 1, wobei eine oder mehrere tertiäre Aminogruppen im Strukturelement der allgemeinen Formel (I) mit Sauerstoff und/oder Peroxoverbindungen in Aminoxide überführt wurden und/oder noch vorhandene XH-Gruppen im Strukturelement der allgemeinen Formel (I) mit Carbonsäureanhydriden umgesetzt wurden.

**Claims**

**1.** Reaction product containing urethane and urea groups, comprising at least one species of the general formula (I)

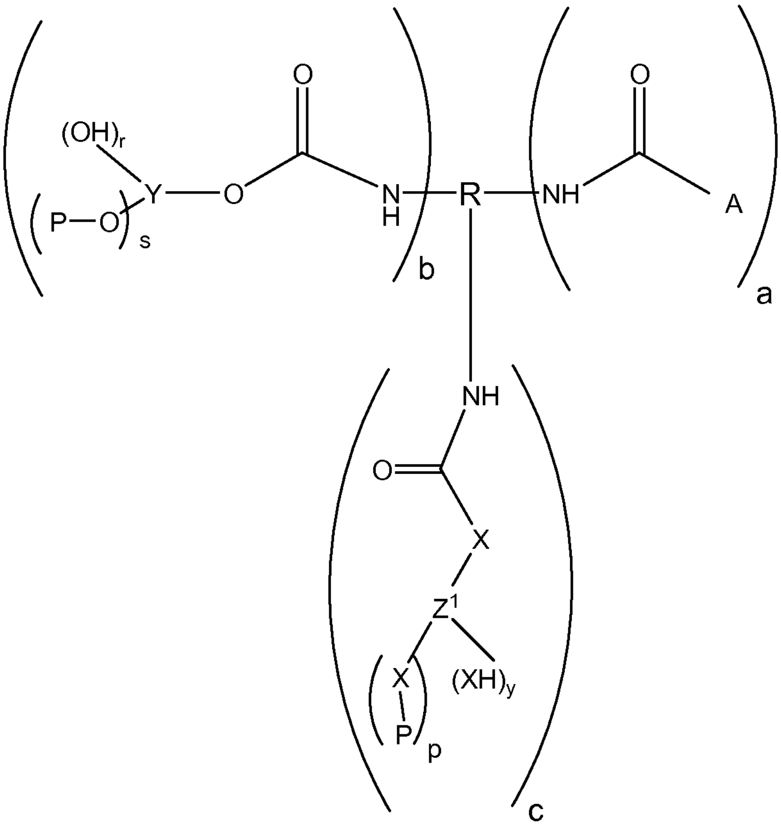

(I)

where

$$a + b + c = x,$$

$$r + s = q - 1$$

$$p + y = w - 1$$

x is an integer from 2 to 10,
a is an integer from 1 to 9,
b is an integer from 1 to 9,
c is an integer from 0 to 8,
q is an integer from 1 to 5,
r is an integer from 0 to 4,
s is an integer from 0 to 4,
w is an integer from 1 to 10,
p is an integer from 0 to 9,
y is an integer from 0 to 9, and

R is the organic radical of a corresponding polyisocyanate $R(NCO)_x$, R is a branched or unbranched, saturated or unsaturated organic radical having 1 to 150 carbon atoms and does not contain any free isocyanate groups,
the Y radical(s) is/are independently the organic radical(s) of a corresponding alcohol $Y(OH)_q$ where q is an integer from 1 to 5 and Y is a branched or unbranched,
saturated or unsaturated organic radical having 1 to 1000 carbon atoms,
the X group(s) is/are independently O, NH and/or $NZ^2$ and the XH group(s) is/are independently a hydroxyl group OH, a primary amino group $NH_2$ and/or a secondary amino group $NHZ^2$ where
the $Z^2$ radical(s) is/are independently a branched or unbranched, saturated or unsaturated organic radical $G(XH)_j(XP)_i$ where i + j = k,
k is an integer from 0 to 9,
j is an integer from 0 to 9,
i is an integer from 0 to 9, and
the G radical is a branched or unbranched, saturated or unsaturated organic radical, and
the A radical(s) is/are independently a radical of the general formula (II)

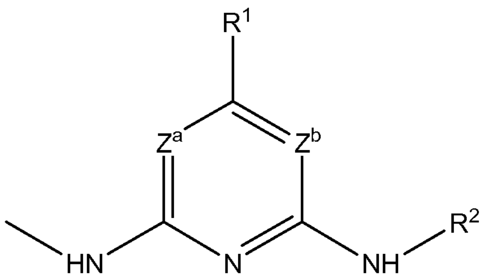
(II)

where

the $R^1$ radical is H or $NH_2$ or a branched or unbranched, saturated or unsaturated organic radical having 1 to 25 carbon atoms or, if $Z^b$ is C and $R^2$ is -CH=N-, where the nitrogen atom of the $R^2$ radical is bonded directly to $Z^b$ to form a 5-membered ring, $R^1$ is OH,
the $Z^a$ group is CH or N or $CR^3$ where the $R^3$ radical is a branched or unbranched, saturated or unsaturated organic radical having 1 to 18 carbon atoms,
the $Z^b$ group is CH or N or, if $R^1$ is OH, $Z^b$ is C,
the $R^2$ radical is H or, if $R^1$ is OH, $R^2$ is -CH=N-, and
the $Z^1$ radical(s) is/are independently the organic radical of a corresponding species of the general formula (III)

$$(HX)_y - Z^1 - (XH)_{p+1} \qquad (III)$$

where
$Z^1$ is a branched or unbranched, saturated or unsaturated organic radical containing 1 to 150 carbon atoms,
the P radical (s) is/are independently a radical of the general formula (IVa)

$$-(CO) - NH - R - (Q)_{x-1} \qquad (IVa)$$

where the Q radical(s) is/are independently a radical

$$-NH-(CO)-A$$

or

$$-NH-(CO)-X-Z^1(XH)_y(X-U)_p$$

or

$$-NH-(CO)-O-Y(OH)_r(O-U)_s$$

where
the U radical(s) is/are independently a radical of the general formula (IVb)

$$-(CO)-NH-R-(V)_{x-1} \quad \text{(IVb)}$$

where
the V radical(s) is/are independently a radical

$$-NH-(CO)-A$$

or

$$-NH-(CO)-X-Z^1(XH)_y$$

or

$$-NH-(CO)-O-Y(OH)_r$$

2. Reaction product containing urethane and urea groups according to Claim 1, containing at least 40% by weight, preferably at least 60% by weight and more preferably at least 90% by weight of one or more species of the general formula (I).

3. Reaction product containing urethane and urea groups according to Claim 1 or 2, wherein x is an integer from 2 to 7, a is an integer from 1 to 6 and b is an integer from 1 to 6.

4. Reaction product containing urethane and urea groups according to Claim 3, wherein x is 2, a is 1 and b is 1.

5. Reaction product containing urethane and urea groups according to any of Claims 1 to 4, wherein the following conditions are applicable to the A radical(s) of the general formula (II):

the $R^1$ radical is H or a branched or unbranched, saturated or unsaturated organic radical having 1 to 25 carbon atoms, preferably H or a branched or unbranched, saturated or unsaturated organic radical having 1 to 18 carbon atoms,
the $Z^a$ group is CH or N, preferably N,
the $Z^b$ group is CH or N, preferably N, and
the $R^2$ radical is H.

6. Reaction product containing urethane and urea groups according to any of Claims 1 to 5, wherein p is an integer from 0 to 3, preferably 0 or 1, and s is an integer from 0 to 2, preferably 0 or 1.

7. Reaction product containing urethane and urea groups according to any of Claims 1 to 6, wherein Y contains at least one polyether radical, polyester radical, hydrocarbyl radical and/or polysiloxane radical.

8. Process for preparing a reaction product containing urethane and urea groups according to any of Claims 1 to 7,

wherein

i) b alcohols Y -$(OH)_q$ are reacted with at least one polyisocyanate $R(NCO)_x$ to form at least one urethane of the general formula (V)

$$((HO)_{q-1} - Y - O - CO - NH)_b - R - (NCO)_{x-b} \qquad (V)$$

where

the urethane of the general formula (V) contains at least one free isocyanate group, where q, b, x, Y and R are as defined in Claims 1 to 7, and

ii) at least one urethane of the general formula (V) is reacted with a species of the general formula (IIa)

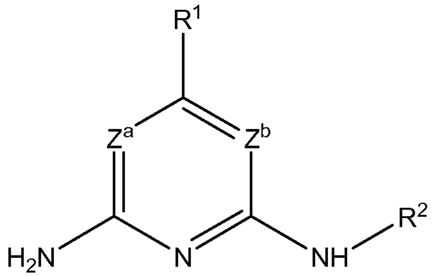

(IIa)

where
$R^1$, $Z^a$, $Z^b$ and $R^2$ are as defined in Claims 1 to 7, and
iii) optionally with c components of the general formula (III)

$$(HX)_y - Z^1 - (XH)_{p+1} \qquad (III),$$

where X, $Z^1$, y and p are as defined in Claims 1 to 7
to give a reaction product containing urethane and urea groups, comprising at least one species of the general formula (I)

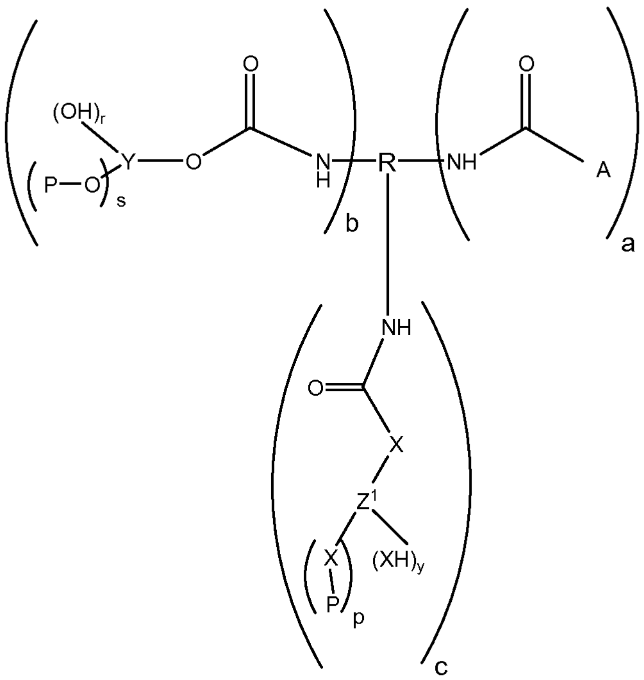

(I)

where all variables of the general formula (I) are as defined in Claims 1 to 7.

**9.** Wetting agent and dispersant comprising a reaction product containing urethane and urea groups according to any of Claims 1 to 7 or prepared by the process according to Claim 8.

**10.** Adhesion promoter comprising a reaction product containing urethane and urea groups according to any of Claims 1 to 7 or prepared by the process according to Claim 8.

**11.** Composition comprising a reaction product containing urethane and urea groups according to any of Claims 1 to 7 or prepared by the process according to Claim 8.

**12.** Use of a reaction product containing urethane and urea groups according to any of Claims 1 to 7 or prepared by the process according to Claim 8 as an additive, preferably as a wetting agent or dispersant or dispersion stabilizer or adhesion promoter or viscosity reducer or compatibilizer in coatings, especially varnishes, plastics, pigment pastes, sealants, cosmetics, ceramics, adhesives, potting compounds, spackling compounds, printing inks and other inks.

**13.** Reaction product containing urethane and urea groups according to Claim 1 which is a species of the general formula (I) according to Claim 1.

**14.** Reaction product containing urethane and urea groups, comprising one or more salt(s) and/or one or more quaternization product(s) of the species of the general formula (I) according to Claim 1.

**15.** Reaction product containing urethane and urea groups, comprising one or more modification products of the species of the general formula (I) according to Claim 1, wherein one or more tertiary amino groups in the structural element of the general formula (I) have been converted to amine oxides with oxygen and/or peroxo compounds and/or XH groups still present in the structural element of the general formula (I) have been reacted with carboxylic anhydrides.

## Revendications

**1.** Produit de réaction contenant des groupes uréthane et urée, contenant au moins une espèce de la formule générale (I) :

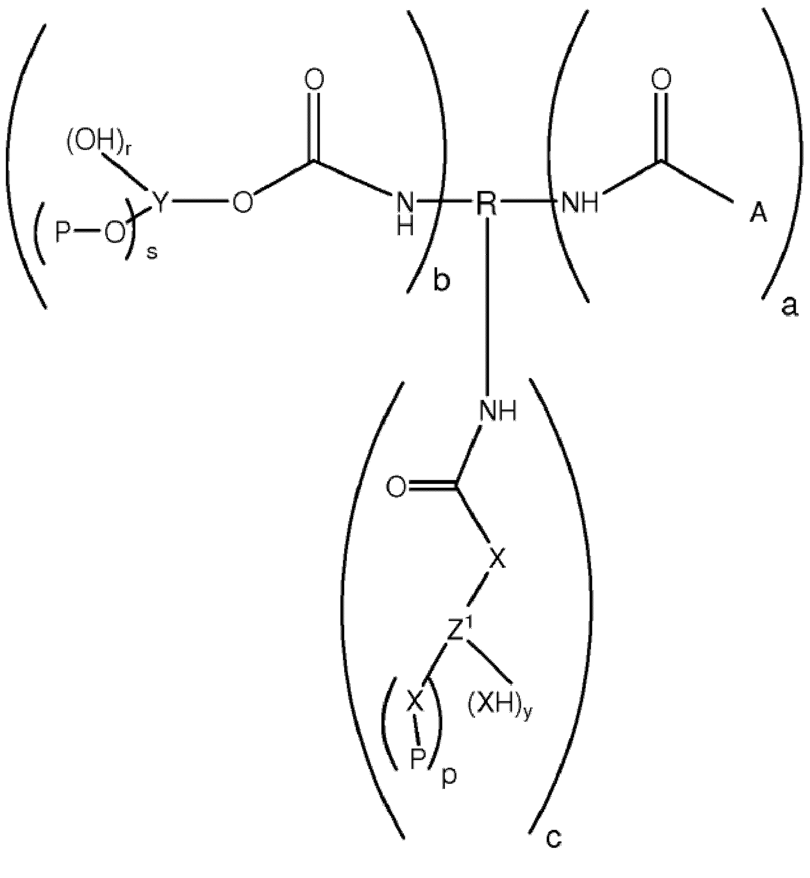

(I)

dans laquelle

$$a + b + c = x,$$

$$r + s = q - 1,$$

$$p + y = w - 1,$$

x représente un nombre entier de 2 à 10,
a représente un nombre entier de 1 à 9,
b représente un nombre entier de 1 à 9,
c représente un nombre entier de 0 à 8,
q représente un nombre entier de 1 à 5,
r représente un nombre entier de 0 à 4,
s représente un nombre entier de 0 à 4,
w représente un nombre entier de 1 à 10,
p représente un nombre entier de 0 à 9,
y représente un nombre entier de 0 à 9, et

R est le radical organique d'un polyisocyanate $R(NCO)_x$ correspondant, R représente un radical organique ramifié ou non ramifié, saturé ou insaturé, de 1 à 150 atomes de carbone, et ne contient pas de groupes isocyanate libres, le radical ou les radicaux Y sont indépendamment les uns des autres le ou les radicaux organiques d'un alcool $Y(OH)_q$ correspondant, q représentant un nombre entier de 1 à 5, et Y représentant un radical organique ramifié ou non ramifié, saturé ou insaturé, de 1 à 1 000 atomes de carbone,
le groupe ou les groupes X représentent indépendamment les uns des autres O, NH et/ou $NZ^2$, et le groupe ou les groupes XH représentent indépendamment les uns des autres un groupe hydroxyle OH, un groupe amino primaire

$NH_2$ et/ou un groupe amino secondaire $NHZ^2$,
le radical ou les radicaux $Z^2$ représentant indépendamment les uns des autres un radical organique ramifié ou non ramifié, saturé ou insaturé $G(XH)_j(XP)_i$,
avec $i + j = k$,
k représente un nombre entier de 0 à 9,
j représente un nombre entier de 0 à 9,
i représente un nombre entier de 0 à 9, et
le radical G représente un radical organique ramifié ou non ramifié, saturé ou insaturé, et
le radical A ou les radicaux A représentent indépendamment les uns des autres un radical de la formule générale (II) :

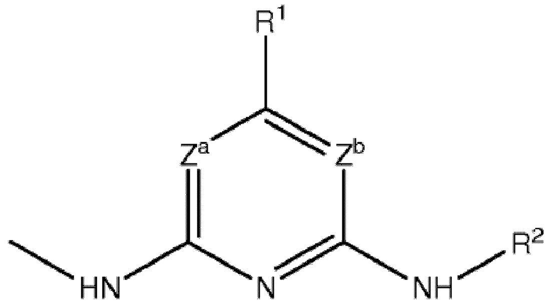

(II)

dans laquelle

le radical $R^1$ représente H ou $NH_2$ ou un radical organique ramifié ou non ramifié, saturé ou insaturé, de 1 à 25 atomes de carbone, ou, lorsque $Z^b$ représente C et $R^2$ représente -CH=N-, l'atome d'azote du radical $R^2$ étant relié directement à $Z^b$ avec formation d'un cycle à 5 chaînons, $R^1$ représente OH,
le groupe $Z^a$ représente CH ou N ou $CR^3$, le radical $R^3$ représentant un radical organique ramifié ou non ramifié, saturé ou insaturé, de 1 à 18 atomes de carbone,
le groupe $Z^b$ représente CH ou N ou, lorsque $R^1$ représente OH, $Z^b$ représente C,
le radical $R^2$ représente H ou, lorsque $R^1$ représente OH, $R^2$ représente -CH=N-, et
le radical ou les radicaux $Z^1$ représentent indépendamment les uns des autres le radical organique d'une espèce correspondante de la formule générale (III) :

$$(HX)_y\text{-}Z^1\text{-}(XH)_{p+1} \qquad \text{(III)}$$

dans laquelle
$Z^1$ représente un radical organique ramifié ou non ramifié, saturé ou insaturé, contenant 1 à 150 atomes de carbone,
le radical ou les radicaux P représentent indépendamment les uns des autres le radical de la formule générale (IVa) :

$$\text{-(CO) - NH - R - (Q)}_{x-1} \qquad \text{(IVa)}$$

dans laquelle
le radical ou les radicaux Q représentent indépendamment les uns des autres un radical

-NH-(CO)-A

ou

$-NH-(CO)-X-Z^1(XH)_y(X-U)_p$

ou

$-NH-(CO)-O-Y(OH)_r(O-U)_s$

dans lesquels

le radical ou les radicaux U représentent indépendamment les uns des autres un radical de la formule générale (IVb) :

$$-(CO) - NH - R - (V)_{x-1} \qquad (IVb)$$

dans laquelle
le radical ou les radicaux V représentent indépendamment les uns des autres un radical

$$-NH-(CO)-A$$

ou

$$-NH-(CO)-X-Z^1(XH)_y$$

ou

$$-NH-(CO)-O-Y(OH)_r.$$

**2.** Produit de réaction contenant des groupes uréthane et urée selon la revendication 1, contenant au moins 40 % en poids, de préférence au moins 60 % en poids, de manière particulièrement préférée au moins 90 % en poids, d'une ou de plusieurs espèces de la formule générale (I).

**3.** Produit de réaction contenant des groupes uréthane et urée selon la revendication 1 ou 2, dans lequel x représente un nombre entier de 2 à 7, a représente un nombre entier de 1 à 6, et b représente un nombre entier de 1 à 6.

**4.** Produit de réaction contenant des groupes uréthane et urée selon la revendication 3, dans lequel x représente 2, a représente 1 et b représente 1.

**5.** Produit de réaction contenant des groupes uréthane et urée selon l'une quelconque des revendications 1 à 4, dans lequel le radical ou les radicaux A sont de la formule générale (II), dans laquelle
le radical $R^1$ représente H ou un radical organique ramifié ou non ramifié, saturé ou insaturé, de 1 à 25 atomes de carbone, de préférence H ou un radical organique ramifié ou non ramifié, saturé ou insaturé, de 1 à 18 atomes de carbone,
le groupe $Z^a$ représente CH ou N, de préférence N,
le groupe $Z^b$ représente CH ou N, de préférence N, et
le radical $R^2$ représente H.

**6.** Produit de réaction contenant des groupes uréthane et urée selon l'une quelconque des revendications 1 à 5, dans lequel p représente un nombre entier de 0 à 3, de préférence 0 ou 1, et s représente un nombre entier de 0 à 2, de préférence 0 ou 1.

**7.** Produit de réaction contenant des groupes uréthane et urée selon l'une quelconque des revendications 1 à 6, dans lequel Y contient au moins un radical polyéther, un radical polyester, un radical hydrocarboné et/ou un radical polysiloxane.

**8.** Procédé de fabrication d'un produit de réaction contenant des groupes uréthane et urée selon l'une quelconque des revendications 1 à 7, selon lequel

i) b alcools $Y-(OH)_q$ sont mis en réaction avec au moins un polyisocyanate $R(NCO)_x$ avec formation d'au moins un uréthane de la formule générale (V) :

$$((HO)_{q-1} - Y - O - CO - NH)_b - R - (NCO)_{x-b} \qquad (V)$$

l'uréthane de la formule générale (V) contenant au moins un groupe isocyanate libre,
q, b, x, Y et R étant tels que définis dans les revendications 1 à 7, et

ii) au moins un uréthane de la formule générale (V) est mis en réaction avec a espèces de la formule générale (IIa) :

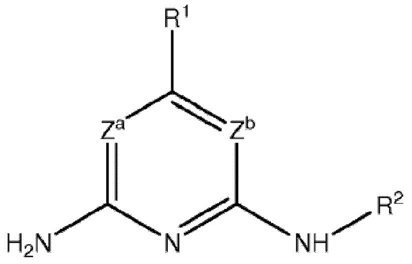

(IIa)

dans laquelle
$R^1$, $Z^a$, $Z^b$ et $R^2$ sont tels que définis dans les revendications 1 à 7, et
iii) éventuellement mis en réaction avec c composants de la formule générale (III) :

$$(HX)_y\text{-}Z^1\text{-}(XH)_{p+1} \quad \text{(III)},$$

dans laquelle X, $Z^1$, y et p sont tels que définis dans les revendications 1 à 7,
pour former un produit de réaction contenant des groupes uréthane et urée contenant au moins une espèce de la formule générale (I) :

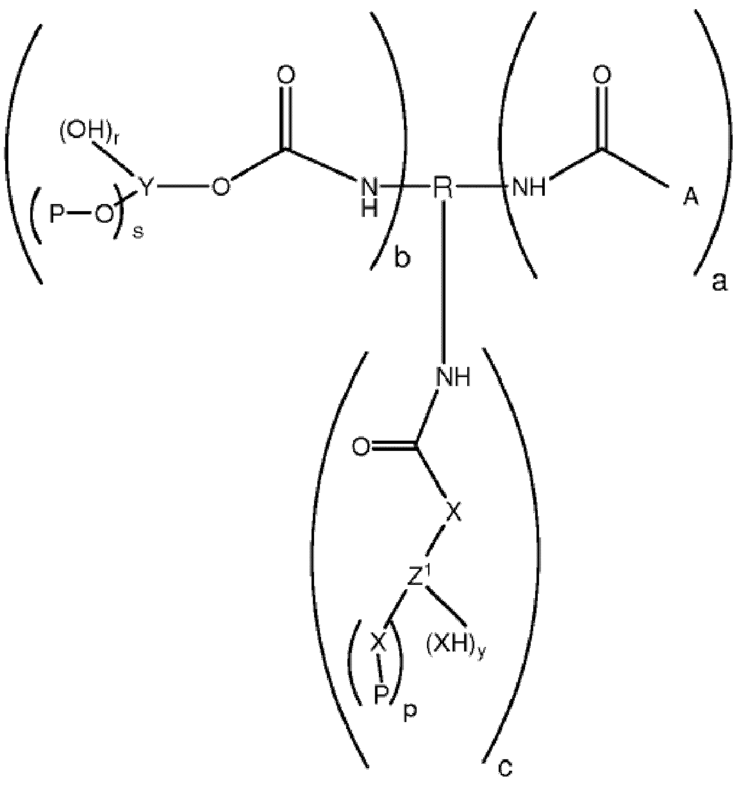

(I)

toutes les variables de la formule générale (I) étant telles que définies dans les revendications 1 à 7.

**9.** Agent mouillant et dispersant contenant un produit de réaction contenant des groupes uréthane et urée selon l'une quelconque des revendications 1 à 7, ou fabriqué par le procédé selon la revendication 8.

**10.** Promoteur d'adhésion contenant un produit de réaction contenant des groupes uréthane et urée selon l'une quelconque des revendications 1 à 7, ou fabriqué par le procédé selon la revendication 8.

**11.** Composition contenant un produit de réaction contenant des groupes uréthane et urée selon l'une quelconque des revendications 1 à 7, ou fabriqué par le procédé selon la revendication 8.

**12.** Utilisation d'un produit de réaction contenant des groupes uréthane et urée selon l'une quelconque des revendications 1 à 7, ou fabriqué par le procédé selon la revendication 8 en tant qu'additif, de préférence en tant qu'agent mouillant ou agent dispersant ou stabilisateur de dispersion ou promoteur d'adhésion ou réducteur de viscosité ou agent de compatibilisation dans des revêtements, notamment des vernis, des matières plastiques, des pâtes de pigments, des agents d'étanchéité, des cosmétiques, des céramiques, des adhésifs, des masses de scellement, des enduits, des encres d'impression et des encres.

**13.** Produit de réaction contenant des groupes uréthane et urée selon la revendication 1, celui-ci étant une espèce de la formule générale (I) selon la revendication 1.

**14.** Produit de réaction contenant des groupes uréthane et urée, contenant un ou plusieurs sels et/ou un ou plusieurs produits de quaternisation des espèces de la formule générale (I) selon la revendication 1.

**15.** Produit de réaction contenant des groupes uréthane et urée, contenant un ou plusieurs produits de modification des espèces de la formule générale (I) selon la revendication 1, un ou plusieurs groupes amino tertiaires dans l'élément structural de la formule générale (I) ayant été transformés avec de l'oxygène et/ou des composés peroxo en aminoxydes et/ou des groupes XH encore présents dans l'élément structural de la formule générale (I) ayant été mis en réaction avec des anhydrides d'acides carboxyliques.

**Fig. 1**

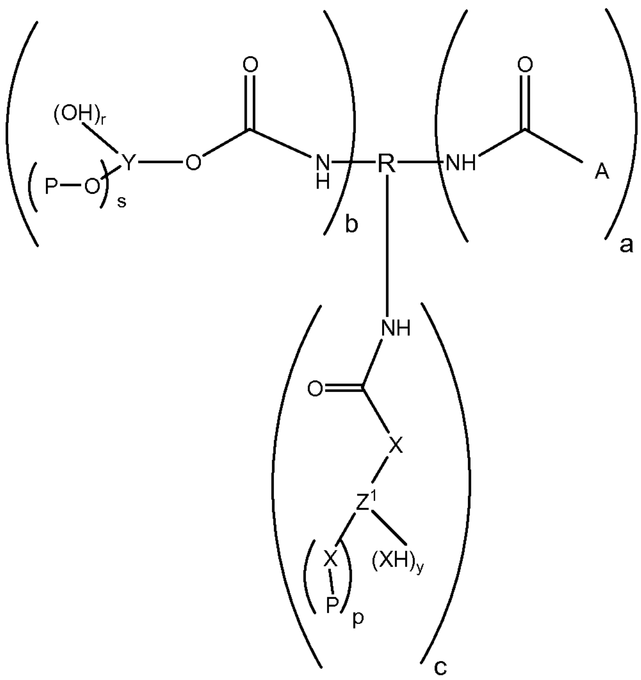

(I)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2012175159 A
- EP 0154678 A1
- US 6875897 B
- US 4647647 A
- US 4101529 A
- US 4032698 A
- EP 318999 A
- US 4795796 A
- US 4777195 A


### In der Beschreibung aufgeführte Nicht-Patentliteratur


- **A. GROß ; G. MAIER ; O. NUYKEN.** *Macromol. Chem. Phys.,* 1996, vol. 197, 2811-2826
- **SAUL PATAI.** The Chemistry of Cyanates and their Thioderivates. 1977